(19) **Europäisches Patentamt / European Patent Office / Office européen des brevets**

(11) **EP 4 727 221 A1**

(12) **EUROPEAN PATENT APPLICATION**
published in accordance with Art. 153(4) EPC

(43) Date of publication:
**15.04.2026 Bulletin 2026/16**

(21) Application number: **24843498.7**

(22) Date of filing: **17.07.2024**

(51) International Patent Classification (IPC):
**H04W 52/02** (2009.01)   **H04W 56/00** (2009.01)
**H04B 1/40** (2015.01)   **H04B 1/16** (2006.01)
**H04B 7/0413** (2017.01)

(52) Cooperative Patent Classification (CPC):
Y02D 30/70

(86) International application number:
**PCT/KR2024/010261**

(87) International publication number:
**WO 2025/018783 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.07.2023 KR 20230092664**

(71) Applicant: Samsung Electronics Co., Ltd.
**Suwon-si, Gyeonggi-do 16677 (KR)**

(72) Inventors:
• YI, Junyung
  **Suwon-si, Gyeonggi-do 16677 (KR)**
• KIM, Youngbum
  **Suwon-si, Gyeonggi-do 16677 (KR)**
• RYU, Hyunsuk
  **Suwon-si, Gyeonggi-do 16677 (KR)**
• YANG, Hyewon
  **Suwon-si, Gyeonggi-do 16677 (KR)**

(74) Representative: **Nederlandsch Octrooibureau P.O. Box 29720 2502 LS The Hague (NL)**

(54) **METHOD AND DEVICE FOR ENERGY-SAVING IN COMMUNICATION SYSTEM**

(57) The present disclosure relates to a 5G or 6G communication system for supporting higher data transmission rates. A method performed by a base station in a communication system according to an embodiment of the present disclosure may comprise the steps of: transmitting information related to one or more second cells via a first cell; receiving at least one uplink (UL) wake-up signal (WUS) via the one or more second cells; determining the activation of at least one second cell among the one or more second cells; and performing communication via the at least one activated second cell.

FIG. 19

EP 4 727 221 A1

## Description

### [Technical Field]

The disclosure relates generally to a wireless communication system and, more particularly, to a method and apparatus for energy saving in a wireless communication system.

### [Background Art]

Fifth generation (5G) mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its position.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

With the recent development of 5G/6G communication systems that take the environment into consideration, the need for methods to reduce energy consumption or methods for energy saving of communication systems (e.g., terminals, base stations, networks) is emerging.

**[Disclosure of Invention]**

**[Technical Problem]**

The disclosure relates to a communication technique and system that integrates 5G or 6G communication systems, which support higher data rates after 4G systems, with IoT technology. The disclosure can be applied to intelligent services (e.g., smart homes, smart buildings, smart cities, smart or connected cars, healthcare, digital education, retail, security, and safety-related services) based on 5G communication technology and IoT-related technologies. The disclosure discloses a method for saving energy of a base station.

Various embodiments of the disclosure provide a definition of new cells for reducing energy consumption of the base station in a wireless communication system.

Various embodiments of the disclosure provide a structure of the base station having a wake-up receiver (WUR) for receiving a wake-up signal (WUS) transmitted by a terminal for on-demand cell activation.

Various embodiments of the disclosure provide circuit configurations and functions of a base station including a WUR.

The technical objectives to be achieved in the disclosure are not limited to those mentioned above, and other technical objectives not mentioned can be clearly understood by a person having ordinary skill in the art to which the disclosure pertains from the description below.

**[Solution to Problem]**

According to an embodiment of the disclosure, a method performed by a base station in a communication system may be provided.

According to an embodiment of the disclosure, the method may include: activating a cell (e.g., access/sync cell) for access and/or synchronization and deactivating an on-demand cell (e.g., data cell) for traffic (and/or packet) processing; configuring WUS (wake-up signal) configuration information for activating an on-demand cell through higher layer signaling and/or L1 (layer-1) signaling as to terminals that have performed initial access (or RACH procedure) via the access/sync cell; and activating an on-demand cell based on the above configuration information from a terminal.

According to an embodiment of the disclosure, a method performed by a terminal in a communication system may be provided.

According to an embodiment of the disclosure, the method may include: performing initial access (or RACH (random access channel) procedure/random access) to an access/sync cell; receiving configuration information for on-demand cells for processing traffic (and/or packets) from a base station via higher layer signaling and/or L1 signaling; determining the transmission power of a WUS to activate an on-demand cell based on the received configuration information; and transmitting a WUS with the determined WUS transmission power.

A method performed by a base station in a communication system according to an embodiment of the disclosure may include: transmitting, through a first cell, information associated with one or more second cells; receiving, through the one or more second cells, one or more uplink (UL) wake-up signals (WUS); determining activation of at least one second cell among the one or more second cells; and performing communication through the at least one activated second cell.

According to an embodiment of the disclosure, activation of at least one second cell may be performed by a distributed unit (DU) of the base station based on information shared between a radio unit (RU) of the base station and the DU of the base station.

According to an embodiment of the disclosure, the shared information may include information on measurement resuls for the one or more UL WUSs transferred from the RU of the base station to the DU of the base station.

According to an embodiment of the disclosure, the shared information may include information on a threshold associated with the measurement result for the one or more UL WUSs.

According to an embodiment of the disclosure, transfer of the information on the measurement result for the one or more UL WUSs from the RU of the base station to the DU of the base station may be based on information on the threshold associated with the measurement result for the one or more UL WUSs.

According to an embodiment of the disclosure, the information on the measurement result for the one or more UL WUSs may be information on reference signal received power (RSRP), signal to interference noise ratio (SINR), or reference signal received quality (RSRQ) of the one or more UL WUSs measured by the RU of the base station.

According to an embodiment of the disclosure, the shared information may further include at least one of one or more WUS identifiers (WUS IDs) corresponding to the one or more UL WUSs or synchronization information between the RU of the base station and the DU of the base station.

According to an embodiment of the disclosure, initial access may be performed through the first cell, and the one or more second cells may be configured for data communication.

According to an embodiment of the disclosure, the one or more UL WUSs may be received using a wake-up receiver (WUR) included in the RU of the base station,

According to an embodiment of the disclosure, the WUR may share some of plural components included in a main radio (MR) of the base station.

According to an embodiment of the disclosure, the components shared between the MR and the WUR may include a low noise amplifier (LNA), and the LNA may be connected to a switch for switching between the MR and the WUR.

A base station in a communication system according to an embodiment of the disclosure may include: a transceiver; and a processor coupled with the transceiver, wherein the processor may be configured to: transmit, through a first cell, information about one or more second cells; receive, through the one or more second cells, one or more uplink (UL) wake-up signals (WUS); determine activation of at least one second cell among the one or more second cells; and perform communication through the at least one activated second cell.

According to an embodiment of the disclosure, activation of at least one second cell may be performed by a distributed unit (DU) of the base station based on information shared between a radio unit (RU) of the base station and the DU of the base station.

According to an embodiment of the disclosure, the shared information may include information on measurement result for the one or more UL WUSs transferred from the RU of the base station to the DU of the base station.

According to an embodiment of the disclosure, the shared information may include information on a threshold associated with the measurement result for the one or more UL WUSs.

According to an embodiment of the disclosure, transfer of the information on the measurement result for the one or more UL WUSs from the RU of the base station to the DU of the base station may be based on information on the threshold associated with the measurement result for the one or more UL WUSs.

According to an embodiment of the disclosure, the information on the measurement result for the one or more UL WUSs may be information on reference signal received power (RSRP), signal to interference noise ratio (SINR), or reference signal received quality (RSRQ) of the one or more UL WUSs measured by the RU of the base station.

According to an embodiment of the disclosure, the shared information may further include at least one of one or more WUS identifiers (WUS IDs) corresponding to the one or more UL WUSs or synchronization information between the RU of the base station and the DU of the base station.

According to an embodiment of the disclosure, initial access may be performed through the first cell, and the one or more second cells may be configured for data communication.

According to an embodiment of the disclosure, the one or more UL WUSs may be received using a wake-up receiver (WUR) included in the RU of the base station.

According to an embodiment of the disclosure, the WUR may share some of plural components included in a main radio (MR) of the base station.

According to an embodiment of the disclosure, the components shared between the MR and the WUR may include a low noise amplifier (LNA), and the LNA may be connected to a switch for switching between the MR and the WUR.

A method performed by a terminal in a communication system according to an embodiment of the disclosure may include: receiving, from a base station through a first cell, information associated with one or more second cells; transmitting, to the base station through the one or more second cells, one or more uplink (UL) wake-up signals (WUS); and performing communication with the base station through at least one activated second cell among the one or more second cells.

According to an embodiment of the disclosure, the at least one activated second cell may be based on information shared between a radio unit (RU) of the base station and a distributed unit (DU) of the base station.

According to an embodiment of the disclosure, the shared information may include information on measurement result for the one or more UL WUSs transferred from the RU of the base station to the DU of the base station.

According to an embodiment of the disclosure, initial access may be performed through the first cell, and the one or more second cells may be configured for data communication.

A terminal in a communication system according to an embodiment of the disclosure may include: a transceiver; and a processor coupled with the transceiver, wherein the processor may be configured to: receive, from a base station through a first cell, information associated with one or more second cells; transmit, to the base station through the one or more second cells, one or more uplink (UL) wake-up signals (WUS); and perform communication with the base station through at least one activated second cell among the one or more second cells.

According to an embodiment of the disclosure, the at least one activated second cell may be based on information shared between a radio unit (RU) of the base station and a distributed unit (DU) of the base station.

According to an embodiment of the disclosure, the shared information may include information on measurement result for the one or more UL WUSs transferred from the RU of the base station to the DU of the base station.

The various embodiments of the disclosure described above are only some of preferred embodiments of the disclosure, and various embodiments reflecting the technical features of the various embodiments of the disclosure can be derived and understood by a person having ordinary skill in the art based on the detailed descriptions below.

[Advantageous Effects of Invention]

According to an embodiment of the disclosure, it is possible to reduce energy consumption of the base station.
According to an embodiment of the disclosure, it is possible to provide a definition of cells having different functions for energy saving of the base station in a mobile communication system, and a structure of the base station capable of receiving a WUS for activating an on-demand cell.
According to an embodiment of the disclosure, the structure of a base station having a WUR can share some of the components of the receiver of an existing NR main radio (MR). Hence, the base station can be designed more efficiently in size and its cost can be reduced.
According to an embodiment of the disclosure, it is possible to reduce the overhead required for the base station to periodically activate cells for common channel and/or signal transmission. Hence, the energy of the base station can be managed more efficiently, and the energy of the base station can be saved.
According to an embodiment of the disclosure, the base station can efficiently control the number of on-demand cells to be activated. Hence, the base station can maintain inactivity for a longer period of time for more components of the cell not on-demand, thereby saving energy.
The effects that can be obtained from the disclosure are not limited to those mentioned above, and other effects that are not mentioned can be clearly understood by a person having ordinary skill in the art to which the disclosure belongs from the description below.

[Brief Description of Drawings]

FIG. 1 is a diagram illustrating the basic structure of a time-frequency domain being a radio resource domain in a wireless communication system, to which an embodiment of the disclosure is applicable.
FIG. 2 is a diagram illustrating slot structures considered in a wireless communication system, to which an embodiment of the disclosure is applicable.
FIG. 3 is a diagram showing an example of a structure of time domain mapping of a synchronization signal and beam sweeping operation in a wireless communication system, to which an embodiment of the disclosure is applicable.
FIG. 4 is a diagram illustrating a synchronization signal block considered in a wireless communication system, to which an embodiment of the disclosure is applicable.
FIG. 5 is a diagram illustrating various cases of transmitting a synchronization signal block in a frequency band below 6 GHz considered in a wireless communication system, to which an embodiment of the disclosure is applicable.
FIG. 6 is a diagram illustrating cases of transmitting a synchronization signal block in a frequency band of 6 GHz or higher considered in a wireless communication system, to which an embodiment of the disclosure is applicable.
FIG. 7 is a diagram illustrating cases of transmitting a synchronization signal block according to a subcarrier spacing within 5 ms in a wireless communication system, to which an embodiment of the disclosure is applicable.
FIG. 8 is a diagram illustrating DMRS patterns (type 1 and type 2) used for communication between a base station and a UE in a wireless communication system, to which an embodiment of the disclosure is applicable.
FIG. 9 is a diagram illustrating channel estimation using DMRS received on one PUSCH in a time band in a wireless communication system, to which an embodiment of the disclosure is applicable.
FIG. 10 is a diagram illustrating a method for reconfiguring SSB transmission through dynamic signaling in a wireless communication system, to which an embodiment of the disclosure is applicable.
FIG. 11 is a diagram illustrating a method for BWP and BW reconfiguration through dynamic signaling in a wireless communication system, to which an embodiment of the disclosure is applicable.
FIG. 12 is a diagram illustrating a method for DRX reconfiguration through dynamic signaling in a wireless communication system, to which an embodiment of the disclosure is applicable.
FIG. 13 is a diagram illustrating a DTx scheme for base station's energy saving, to which an embodiment of the disclosure is applicable.
FIG. 14 is a diagram for describing base station operation in response to a gNB wake-up signal according to an embodiment of the disclosure.
FIG. 15 is a diagram illustrating an antenna adaptation method of a base station for energy saving in a wireless communication system according to an embodiment of the disclosure.
FIG. 16 is a diagram illustrating the concept of cells having different functions for energy saving in a wireless communication system according to an embodiment of the disclosure.

FIG. 17 is a diagram illustrating a method for on-demand cell selection in a wireless communication system according to an embodiment of the disclosure.

FIG. 18A is a diagram illustrating a procedure for on-demand cell selection in a wireless communication system according to an embodiment of the disclosure.

FIG. 18B is a diagram illustrating a procedure for on-demand cell selection in a wireless communication system according to an embodiment of the disclosure.

FIG. 19 is a diagram illustrating a new structure of the wireless communication system according to an embodiment of the disclosure.

FIG. 20 is a diagram illustrating a new structure of the wireless communication system according to an embodiment of the disclosure.

FIG. 21 is a diagram illustrating a new structure of the wireless communication system according to an embodiment of the disclosure.

FIG. 22 is a diagram illustrating a new structure of the digital front end in a wireless communication system according to an embodiment of the disclosure.

FIG. 23 is a diagram illustrating a new structure of the wireless communication system according to an embodiment of the disclosure.

FIG. 24 is a flowchart illustrating UE operation for applying a cell selection/activation method in a wireless communication system according to an embodiment of the disclosure.

FIG. 25 is a flowchart illustrating base station operation for applying a cell selection/activation method in a wireless communication system according to an embodiment of the disclosure.

FIG. 26 is a block diagram of a UE according to an embodiment of the disclosure.

FIG. 27 is a block diagram of a base station according to an embodiment of the disclosure.

## [Mode for the Invention]

Hereinafter, embodiments of the disclosure will be described in detail with reference to the accompanying drawings. In the following description of embodiments, descriptions of technical details well known in the art and not directly related to the disclosure may be omitted. This is to more clearly convey the subject matter of the disclosure without obscurities by omitting unnecessary descriptions.

Likewise, in the drawings, some elements are exaggerated, omitted, or only outlined in brief. Also, the size of each element does not necessarily reflect the actual size. The same or similar reference symbols are used throughout the drawings to refer to the same or like parts.

Advantages and features of the disclosure and methods for achieving them will be apparent from the following detailed description of embodiments taken in conjunction with the accompanying drawings. However, the disclosure is not limited to the embodiments described below but may be implemented in various different ways, the embodiments are provided only to complete the disclosure and to fully inform the scope of the technical idea to those skilled in the art to which the disclosure pertains, and the disclosure is defined only by the scope of the claims. The same reference symbols are used throughout the description to refer to the same parts. In addition, when describing the disclosure, detailed descriptions of related functions or configurations will be omitted if they are deemed to unnecessarily obscure the subject matter of the disclosure. Further, those terms described below are defined based on their functions in the disclosure, and may vary depending on the intention or custom of the user or operator. Hence, their meanings should be determined based on the overall contents of this specification.

In the following description, the "base station (BS)", as a main agent that allocates resources to a terminal, may be at least one of Node B, eNode B, gNode B, radio access unit, base station controller, or node on a network. The "terminal" may include a user equipment (UE), a mobile station (MS), a cellular phone, a smartphone, a computer, or a multimedia system capable of performing a communication function. In the disclosure, downlink (DL) refers to a wireless transmission path through which a base station transmits a signal to a terminal, and uplink (UL) refers to a wireless transmission path through which a terminal transmits a signal to a base station. Additionally, while the LTE or LTE-A system may be described below as an example, the embodiments of the disclosure may also be applied to other communication systems with similar technical backgrounds or channel types. For example, this may include fifth-generation mobile communication technology (5G, new radio, NR) developed after LTE-A, and the term "5G" below may be a concept encompassing existing LTE, LTE-A, and other similar services. In addition, the disclosure may be applied by a person skilled in the art to other communication systems with some modifications without significantly deviating from the scope of the disclosure.

Meanwhile, it is known to those skilled in the art that blocks of a flowchart (or sequence diagram) and a combination of flowcharts may be executed by computer program instructions. These computer program instructions may be loaded on a processor of a general purpose computer, special purpose computer or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In addition, a block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order according to their corresponding functions.

In the disclosure, the word "unit", "module" or the like may refer to a software component or hardware component such as an FPGA (field programmable gate array) or ASIC (application specific integrated circuit) capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more CPUs in a secure multimedia card. Also, in an embodiment, a unit or the like may include one or more processors.

Hereinafter, embodiments of the disclosure will be described in detail with reference to the accompanying drawings. The method and apparatus proposed in the embodiments of this disclosure are not limited to each individual embodiment, and may also be utilized as a combination of one or more embodiments, or as a combination of some or all of the embodiments proposed in this disclosure. Hence, the embodiments of the disclosure may be applied by a person skilled in the art through some modifications without significantly deviating from the scope of the disclosure.

Additionally, when describing the present disclosure, detailed descriptions of related functions or configurations will be omitted if they are deemed to unnecessarily obscure the subject matter of the disclosure. Further, the terms described below are defined based on the functions in the disclosure, and may vary depending on the intention or custom of the user or operator. Therefore, their meanings should be determined based on the contents throughout this specification.

Wireless communication systems are evolving from early systems that provided voice-oriented services only to broadband wireless communication systems that provide high-speed and high-quality packet data services, such as systems based on communication standards including 3GPP high speed packet access (HSPA), long term evolution (LTE) or evolved universal terrestrial radio access (E-UTRA), LTE-advanced (LTE-A), LTE-Pro, 3GPP2 high rate packet data (HRPD), ultra mobile broadband (UMB), and IEEE 802.17e.

As a representative example of the broadband wireless communication system, the LTE system employs orthogonal frequency division multiplexing (OFDM) in the downlink (DL) and single carrier frequency division multiple access (SC-FDMA) in the uplink (UL). The uplink refers to a radio link through which a terminal (user equipment (UE) or mobile station (MS)) sends a data or control signal to a base station (BS or gNode B), and the downlink refers to a radio link through which a base station sends a data or control signal to a terminal. In such a multiple access scheme, time-frequency resources used to carry user data or control information are allocated so as not to overlap each other (i.e., maintain orthogonality) to thereby identify the data or control information of a specific user.

As a communication system after LTE, the 5G communication system should support services satisfying various requirements so as to freely reflect various requirements of users and service providers. Services being considered for the 5G communication system include enhanced mobile broadband (eMBB), massive machine type communication (mMTC), and ultra-reliable and low-latency communication (URLLC).

eMBB aims to provide a data transmission rate that is more improved in comparison to the data transmission rate supported by existing LTE, LTE-A, or LTE-Pro. For example, in the 5G communication system, eMBB must be able to provide a peak data rate of 20 Gbps in the downlink and a peak data rate of 10 Gbps in the uplink from the viewpoint of one base station. At the same time, the 5G communication system has to provide an increased user perceived data rate for the terminal. To meet such requirements in the 5G communication system, it is required to improve the transmission and reception technology including more advanced multi-antenna or multi-input multi-output (MIMO) technology. In addition, it is possible to satisfy the data transmission rate required by the 5G communication system by using a frequency bandwidth wider than 20 MHz in a frequency band of 3 to 6 GHz or 6 GHz or higher instead of a transmission bandwidth of up to 20 MHz in a band of 2 GHz used by LTE.

At the same time, in the 5G communication system, mMTC is considered to support application services such as the Internet of Things (IoT). For efficient support of IoT services, mMTC is required to support access of a massive number of terminals in a cell, extend the coverage for the terminal, lengthen the battery time, and reduce the cost of the terminal. The Internet of Things must be able to support a massive number of terminals (e.g., 1,000,000 terminals/km$^2$) in a cell to provide a communication service to sensors and components attached to various devices. In addition, since a terminal supporting mMTC is highly likely to be located in a shadow area not covered by a cell, such as the basement of a building, due to the nature of the service, it may require wider coverage compared to other services provided by the 5G communication system. A terminal supporting mMTC should be configured as a low-cost terminal, and since it is difficult to frequently replace the battery of a terminal, a very long battery life time such as 10 to 16 years is required.

Finally, URLLC is a cellular-based wireless communication service used for a specific purpose (mission-critical). For example, it may consider services usable for remote control of robots or machinery, industrial automation, unmanned aerial vehicles, remote health care, and emergency alert. Hence, the communication provided by URLLC must provide very low latency and very high reliability. For example, a URLLC service has to support both an air interface latency of less than 0.5ms and a packet error rate of $10^{-5}$ or less as a requirement. Hence, for a service supporting URLLC, the 5G system must provide a transmission time interval (TTI) shorter than that of other services, and at the same time, wide resources in the frequency band should be allocated to ensure the reliability of the communication link.

The three services (i.e., eMBB, URLLC, and mMTC) of the 5G communication system (interchangeable with the 5G system) may be multiplexed and transmitted in one system. To satisfy different requirements of the services, different transmission and reception techniques and parameters may be used between services.

Next, the frame structure of a 5G system will be described in more detail with reference to the drawing. In the following description, the wireless communication system to which the disclosure is applied will be described using the configuration of a 5G system as an example for convenience of explanation, but the embodiments of the disclosure can be applied in the same or similar manner to a 5G or higher system or other communication system to which the disclosure is applicable.

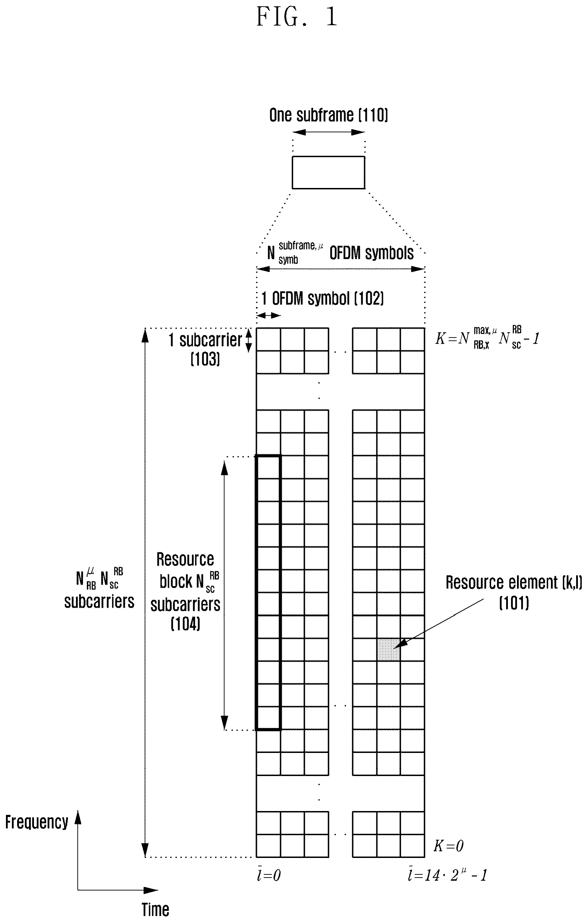

FIG. 1 is a diagram illustrating the basic structure of the time-frequency domain being the radio resource domain in a wireless communication system, to which an embodiment of the disclosure is applicable.

In FIG. 1, the horizontal axis represents the time domain, and the vertical axis represents the frequency domain. In the time-frequency domain, the basic unit of resources is a resource element (RE) 101, which may be defined by one orthogonal frequency division multiplexing (OFDM) symbol (or DFT-s-OFDM (discrete Fourier transform spread OFDM) symbol) 102 in the time domain and one subcarrier 103 in the frequency domain. In the frequency domain, $N_{SC}^{RB}$ (the number of subcarriers per resource block (RB), e.g., 12) consecutive REs may constitute one resource block (RB) 104.

Additionally, $N_{symb}^{subframe,\mu}$ (the number of symbols per subframe according to the configuration value $\mu$ for the subcarrier spacing in the time domain) consecutive OFDM symbols may constitute one subframe 110.

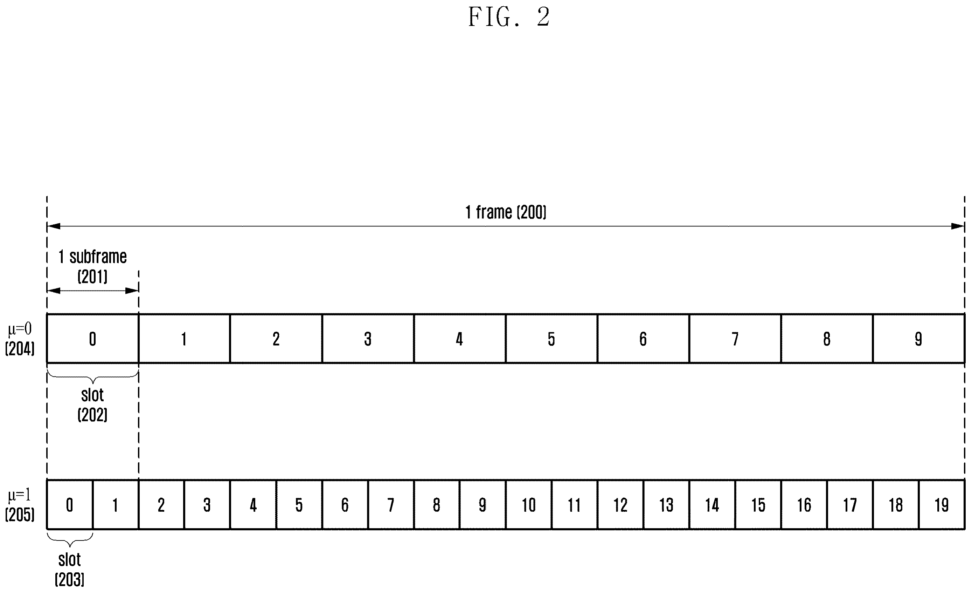

FIG. 2 is a diagram illustrating slot structures considered in a wireless communication system, to which an embodiment of the disclosure is applicable.

FIG. 2 illustrates an example of a slot structure including a frame 200, a subframe 201, and a slot 202 or 203. One frame 200 may be defined as 10 ms. One subframe 201 may be defined as 1 ms, and thus, one frame 200 may be composed of total 10 subframes 201. One slot 202 or 203 may be defined as 14 OFDM symbols (i.e., the number of symbols per slot $(N_{symb}^{slot}) = 14$ ). One subframe 201 may be composed of one or multiple slots 202 or 203, and the number of slots 202 or 203 per one subframe 201 may vary depending on $\mu$ 204 or 205, which is a configuration value for the subcarrier spacing (SCS).

The slot structures for cases where the subcarrier spacing configuration $\mu$ is 0 (204) and $\mu$ is 1 (205) are illustrated. When $\mu$ = 0 (204), one subframe 201 may be composed of one slot 202, and when $\mu$ = 1 (205), one subframe 201 may be composed of two slots (e.g., including slots 203). That is, depending on the subcarrier spacing configuration $\mu$, the number of slots per subframe ($N_{slot}^{subframe,\mu}$) may vary, and thus the number of slots per frame ($N_{slot}^{frame,\mu}$) may vary.

For example, $N_{slot}^{subframe,\mu}$ and $N_{slot}^{frame,\mu}$ according to the subcarrier spacing configuration $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| μ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

In the 5G wireless communication system, for initial access of a UE, a synchronization signal block (SSB, which may be used interchangeably with an SS block or an SS/PBCH block) may be transmitted, and the synchronization signal block may include a primary synchronization signal (PSS), a secondary synchronization signal (SSS), and a physical broadcast channel (PBCH).

During the initial access stage where the UE access the system, the UE first may obtain downlink time and frequency domain synchronization from a synchronization signal through cell search and obtain a cell ID. This synchronization signal may include the PSS and the SSS. Then, the UE may receive the PBCH, which carries a master information block (MIB), from the base station to obtain transmission/reception-related system information such as system bandwidth or related control information, and basic parameter values. Based on this information, the UE may decode the physical downlink control channel (PDCCH) and the physical downlink shared channel (PDSCH) to obtain a system information block (SIB). Thereafter, the UE may exchange identification information with the base station through a random access stage and undergo registration and authentication steps to initially connect to the network. Additionally, the UE may receive system information (system information block (SIB)) transmitted by the base station to obtain cell-common transmission/reception-related control information. This cell-common transmission/reception-related control information may include random access related control information, paging related control information, common control information for various physical channels, or the like.

The synchronization signal serves as a reference for cell search, and the subcarrier spacing may be adjusted for each frequency band to adapt to channel environments such as phase noise. For data channels or control channels, subcarrier spacing may be applied differently depending on the service type to support various services as described above.

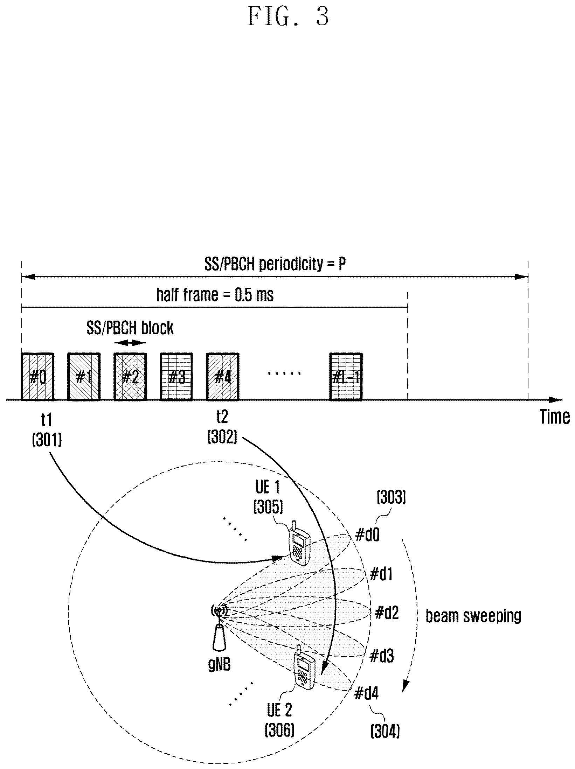

FIG. 3 is a diagram showing an example of a structure of time domain mapping of a synchronization signal and beam sweeping operation, to which an embodiment of the disclosure is applicable.

For the purpose of explanation, the following elements may be defined.

- PSS (primary synchronization signal): this signal serves as the basis for DL time/frequency synchronization and provides some cell ID information.
- SSS (secondary synchronization signal): this signal serves as the reference for DL time/frequency synchronization and provides some remaining cell ID information. Additionally, it may serve as the reference signal for PBCH demodulation.
- PBCH (physical broadcast channel): this provides a master information block (MIB) being essential system information required by the UE for transmission and reception of data and control channels. The essential system information may include search space-related control information indicating radio resource mapping information for the control channel, scheduling control information for a separate data channel carrying system information, and the system frame number (SFN) being a frame-level index that serves as a timing reference.
- SSB (SS/PBCH block, synchronization signal/PBCH block): An SS/PBCH block is composed of N OFDM symbols and is composed of a combination of PSS, SSS, and PBCH. In a system employing beam sweeping technology, the SS/PBCH block is the minimum unit to which beam sweeping is applied. In a 5G system, N may be 4. The base station may transmit up to L SS/PBCH blocks, and these L SS/PBCH blocks are mapped within a half-frame (0.5 ms). These L SS/PBCH blocks are repeated periodically at a preset periodicity P. The periodicity P may be notified by the base station to the UE through signaling. If there is no separate signaling for the periodicity P, the UE applies a pre-agreed default value.

With reference to FIG. 3, FIG. 3 illustrates an example in which beam sweeping is applied in units of SS/PBCH blocks over time. In the example of FIG. 3, UE 1 (305) receives an SS/PBCH block by using a beam radiated in direction #d0 (303) via beamforming applied to SS/PBCH block #0 at time t1 (301). UE 2 (306) then receives an SS/PBCH block using a beam radiated in direction #d4 (304) via beamforming applied to SS/PBCH block #4 at time t2 (302). The UE may obtain an optimal synchronization signal through a beam radiated from the base station in the direction of UE's location. For example, UE 1 (305) may have difficulty obtaining time/frequency synchronization and essential system information from an SS/PBCH block transmitted via a beam radiated in direction #d4, which is away from the location of UE 1.

In addition to the initial access procedure described above, the UE may also receive SS/PBCH blocks to determine whether the radio link quality of the current cell remains above a specific level. Additionally, in a handover procedure in which the connection of the UE is moved from the current cell to a neighbor cell, the UE may receive an SS/PBCH block from the neighbor cell to determine the radio link quality of the neighbor cell and obtain time/frequency synchronization with the neighbor cell.

Next, the initial cell access operation procedure of a 5G wireless communication system will be described in more detail with reference to drawings.

Synchronization signals serve as a reference for cell search and may be transmitted with the subcarrier spacing appropriate for the channel environment (e.g., phase noise) for each frequency band. 5G base stations may transmit multiple synchronization signal blocks depending on the number of analog beams they intend to operate. For example, PSS and SSS may be mapped and transmitted across 12 RBs, and PBCH may be mapped and transmitted across 24 RBs. Below, the structure for transmitting synchronization signals and PBCH in a 5G communication system is described.

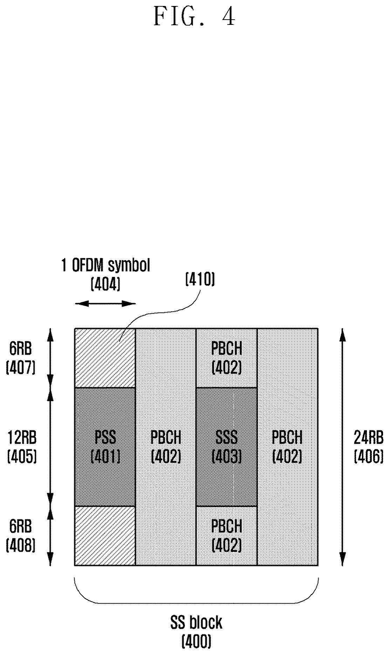

FIG. 4 is a diagram illustrating a synchronization signal block considered in a wireless communication system, to which an embodiment of the disclosure is applicable.

According to FIG. 4, the synchronization signal block (SS block) 400 may include a PSS 401, an SSS 403, and a PBCH (broadcast channel) 402.

The synchronization signal block 400 may be mapped to four OFDM symbols 404 on the time domain. The PSS 401 and SSS 403 may be transmitted over 12 RBs (405) on the frequency domain and at the first OFDM symbol and third OFDM symbol on the time domain, respectively. In the 5G system, for example, a total of 1,008 different cell IDs may be defined. Depending on the cell's physical layer ID (PCI), the PSS 401 may have three different values, and the SSS 403 may have 336 different values. The UE may detect the PSS 401 and SSS 403 to obtain one of 1008 (= 336 x 3) cell IDs based on their combination. This may be expressed as Equation 1 below.

$$[\text{Equation 1}]$$

$$N_{ID}^{cell} = 3N_{ID}^{(1)} + N_{ID}^{(2)}$$

Here, $N_{ID}^{(1)}$ may be estimated from the SSS 403 and may have a value between 0 and 335. $N_{ID}^{(2)}$ may be estimated from the PSS 401 and may have a value between 0 and 2. The UE may estimate the cell ID value $N_{ID}^{(cell)}$ as a combination of $N_{ID}^{(1)}$ and $N_{ID}^{(2)}$.

The PBCH 402 may be transmitted over resources including 24 RBs (406) on the frequency domain and 6 RBs (407 and 408) on both sides, excluding the 12 RBs (405) in the middle, while the SSS 403 is transmitted at the 2nd to 4th OFDM symbols of the SS block on the time domain. The PBCH 402 may include a PBCH payload and a PBCH demodulation reference signal (DMRS), and the PBCH payload may carry various system information called MIB. For example, the MIB may include information as shown in Table 2 below.

[Table 2]

| MIB ::= | SEQUENCE { |
|---|---|
| systemFrameNumber | BIT STRING (SIZE (6)), |
| subCarrierSpacingCommon | ENUMERATED {scs15or60, scs30or120}, |
| ssb-SubcarrierOffset | INTEGER (0..15), |
| dmrs-TypeA-Position | ENUMERATED {pos2, pos3}, |
| pdcch-ConfigSIB1 | PDCCH-ConfigSIB1, |
| cellBarred | ENUMERATED {barred, notBarred}, |
| intraFreqReselection | ENUMERATED {allowed, notAllowed}, |
| spare | BIT STRING (SIZE (1)) |
| } | |

- Synchronization signal block information: the frequency-domain offset of the synchronization signal block may be indicated through 4-bit ssb-SubcarrierOffset in the MIB. The index of the synchronization signal block including the PBCH may be indirectly obtained through decoding of the PBCH DMRS and the PBCH. In an embodiment, in the frequency band below 6 GHz, 3 bits obtained through decoding of the PBCH DMRS may indicate the synchronization signal block index; and in the frequency band above 6 GHz, a total of 6 bits, including 3 bits obtained through decoding of the PBCH DMRS and 3 bits obtained through PBCH decoding as being included in the PBCH payload, may indicate the index of the synchronization signal block including the PBCH.
- PDCCH (physical downlink control channel) configuration information: the subcarrier spacing of the common downlink control channel may be indicated through 1 bit (subCarrierSpacingCommon) in the MIB, and the time-frequency resource configuration information of the CORESET (control resource set) and search space (SS) may be indicated through 8 bits (pdcch-ConfigSIB1).
- SFN (system frame number): 6 bits (systemFrameNumber) in the MIB may be used to indicate a portion of the SFN. The 4 LSBs (least significant bits) of the SFN are included in the PBCH payload, so the UE may indirectly obtain them through PBCH decoding.
- Timing information within a radio frame: through the synchronization signal block index described above and 1 bit (half frame) obtained through PBCH decoding as being included in the PBCH payload, the UE may indirectly determine whether the synchronization signal block is transmitted in the first or second half frame of the radio frame.

Since the transmission bandwidth (12 RBs (405)) of the PSS 401 and SSS 403 and the transmission bandwidth (24 RBs (406)) of the PBCH 402 are different from each other, at $1^{st}$ OFDM symbol where the PSS 401 is transmitted within the transmission bandwidth of the PBCH 402, 6 RBs (407 and 408) are present on both sides except for the 12 RBs in the middle where the PSS 401 is transmitted, and this region may be used to transmit other signals or may remain empty.

Synchronization signal blocks may be transmitted using the same analog beam. For example, the PSS 401, SSS 403, and PBCH 402 may all be transmitted over the same beam. Since the analog beam cannot be applied differently on the frequency domain, the same analog beam may be applied on all frequency domain RBs within a given OFDM symbol to which a specific analog beam is applied. For example, the four OFDM symbols carrying the PSS 401, SSS 403, and PBCH 402 may all be transmitted via the same analog beam.

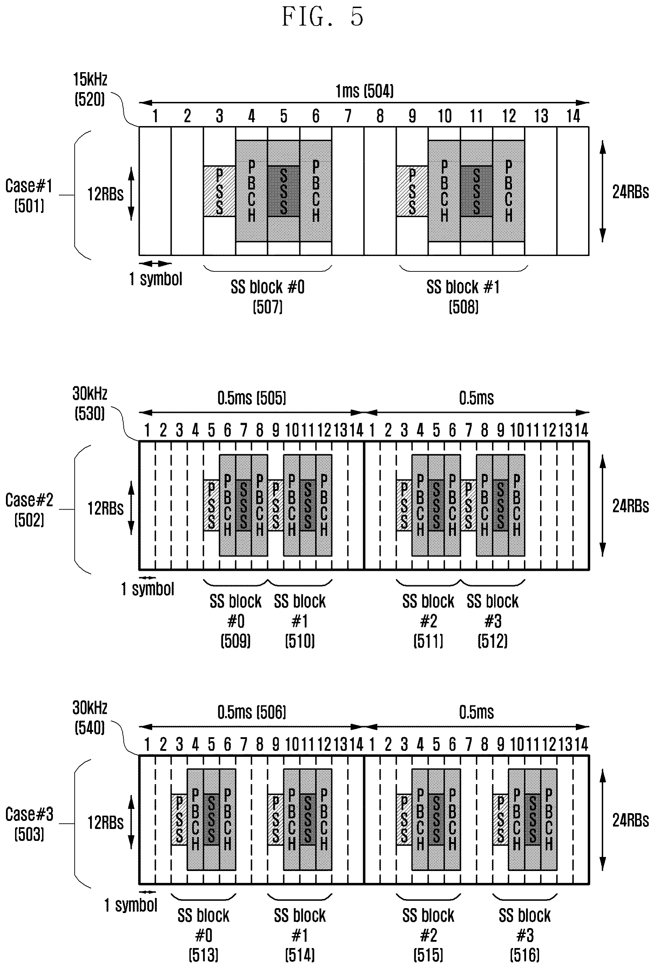

FIG. 5 is a diagram illustrating various cases of transmitting a synchronization signal block in a frequency band below 6 GHz considered in a communication system, to which an embodiment of the disclosure is applicable.

With reference to FIG. 5, in the sub-6 GHz frequency band (or FR1 (frequency range 1), e.g., 410 MHz-7125 MHz) of the 5G communication system, a 15 kHz subcarrier spacing (SCS) 520 and a 30 kHz subcarrier spacing (SCS) 530 or 440 may be used for synchronization signal block transmission. At the 15 kHz subcarrier spacing 520, there may be one transmission case (e.g., case #1 (501)) for the synchronization signal block, and at the 30 kHz subcarrier spacing 530 or 540, there may be two transmission cases (e.g., case #2 (402) and case #3 (503)) for the synchronization signal block.

In case #1 (501) of FIG. 5 corresponding to the subcarrier spacing of 15 kHz (520), up to two synchronization signal blocks may be transmitted within 1 ms (504) (or, one slot length if one slot is composed of 14 OFDM symbols). In the example of FIG. 4, synchronization signal block #0 (507) and synchronization signal block #1 (508) are illustrated. For example, synchronization signal block #0 (507) may be mapped to four consecutive symbols starting from the third OFDM symbol, and synchronization signal block #1 (508) may be mapped to four consecutive symbols starting from the ninth OFDM symbol.

Different analog beams may be applied to the synchronization signal block #0 (507) and synchronization signal block #1 (508). The same beam may be applied to all 3rd to 6th OFDM symbols to which synchronization signal block #0 (507) is mapped, and the same beam may be applied to all 9th to 12th OFDM symbols to which synchronization signal block #1 (508) is mapped. In the 7th, 8th, 13th, and 14th OFDM symbols where no synchronization signal block is mapped, the analog beam to be used can be freely determined at the discretion of the base station.

In case #2 (502) of FIG. 5 corresponding to the subcarrier spacing of 30 kHz (530), up to two synchronization signal blocks may be transmitted within 0.5 ms (505) (or, one slot length if one slot is composed of 14 OFDM symbols), and thus up to four synchronization signal blocks may be transmitted within 1 ms (or equivalent to two slot lengths if one slot is composed of 14 OFDM symbols). The example of FIG. 4 illustrates a case where synchronization signal block #0 (509), synchronization signal block #1 (510), synchronization signal block #2 (511), and synchronization signal block #3 (512) are transmitted within 1 ms (i.e., two slots). Synchronization signal block #0 (509) and synchronization signal block #1 (510) may be mapped to symbols from the 5th OFDM symbol and from the 9th OFDM symbol of the first slot, respectively, and synchronization signal block #2 (511) and synchronization signal block #3 (512) may be mapped to symbols from the 3rd OFDM symbol and the 7th OFDM symbol of the second slot, respectively.

Different analog beams may be applied respectively to synchronization signal block #0 (509), synchronization signal block #1 (510), synchronization signal block #2 (511), and synchronization signal block #3 (512). The same analog beam may be applied respectively to the 5th to 8th OFDM symbols of the first slot where synchronization signal block #0 (509) is transmitted, the 9th to 12th OFDM symbols of the first slot where synchronization signal block #1 (510) is transmitted, the 3rd to 6th symbols of the second slot where synchronization signal block #2 (511) is transmitted, and the 7th to 10th symbols of the second slot where synchronization signal block #3 (512) is transmitted. In OFDM symbols where no synchronization signal block is mapped, the analog beam to be used can be freely determined at the discretion of the base station.

In case #3 (503) of FIG. 5 corresponding to the subcarrier spacing of 30 kHz (540), up to two synchronization signal blocks may be transmitted within 0.5 ms (506) (or, one slot length if one slot is composed of 14 OFDM symbols). Accordingly, up to four synchronization signal blocks may be transmitted within 1 ms (or, two slot lengths if one slot is composed of 14 OFDM symbols). The example of FIG. 4 illustrates a case where synchronization signal block #0 (513), synchronization signal block #1 (514), synchronization signal block #2 (515), and synchronization signal block #3 (516) are transmitted within 1 ms (i.e., two slots). Synchronization signal block #0 (513) and synchronization signal block #1 (514) may be mapped to symbols from the 3rd OFDM symbol and the 9th OFDM symbol of the first slot, respectively; synchronization signal block #2 (515) and synchronization signal block #3 (516) may be mapped symbols from the 3rd OFDM symbol and the 9th OFDM symbol of the second slot, respectively.

Different analog beams may be used respectively for synchronization signal block #0 (513), synchronization signal block #1 (514), synchronization signal block #2 (515), and synchronization signal block #3 (516). As described above, the same analog beam may be used in all four OFDM symbols in which one synchronization signal block is transmitted, and in OFDM symbols where no synchronization signal block is mapped, the base station may freely determine which beam to use.

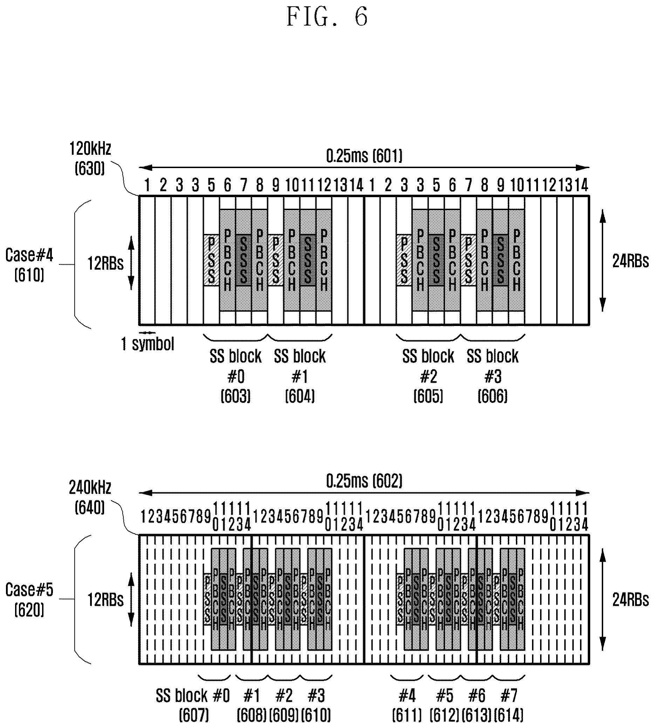

FIG. 6 is a diagram illustrating cases of transmitting a synchronization signal block in a frequency band of 6 GHz or higher considered in a wireless communication system, to which an embodiment of the disclosure is applicable.

In the 5G communication system, in the frequency band above 6 GHz (or, FR2, e.g., 24250 MHz - 52600 MHz), a subcarrier spacing of 120 kHz (630) as in case #4 (610) and a subcarrier spacing of 240 kHz (640) as in case #5 (620) may be used for synchronization signal block transmission.

In case #4 (610) with a subcarrier spacing of 120 kHz (630), up to four synchronization signal blocks may be transmitted within 0.25 ms (601) (or, two slot lengths if one slot is composed of 14 OFDM symbols). An example of FIG. 6 illustrates a case where synchronization signal block #0 (603), synchronization signal block #1 (604), synchronization signal block #2 (605), and synchronization signal block #3 (606) are transmitted within 0.25 ms (i.e., two slots). Synchronization signal block #0 (603) and synchronization signal block #1 (604) may be mapped to four consecutive symbols starting from the 5th OFDM symbol of the first slot, and to four consecutive symbols starting from the 9th OFDM symbol, respectively; synchronization signal block #2 (605) and synchronization signal block #3 (606) may be mapped to four consecutive symbols starting from the 3rd OFDM symbol of the second slot, and to four consecutive symbols starting from the 7th OFDM symbol, respectively.

As described in the above embodiment, different analog beams may be used respectively for synchronization signal block #0 (603), synchronization signal block #1 (604), synchronization signal block #2 (605), and synchronization signal block #3 (606). Also, in the four OFDM symbols where one synchronization signal block is transmitted, the same analog beam can be used, and in OFDM symbols where no synchronization signal block is mapped, the base station may freely determine which beam to use.

In case #5 (620) corresponding to the subcarrier spacing of 240 kHz (640), up to eight synchronization signal blocks may be transmitted within 0.25 ms (602) (or, 4 slot lengths if one slot is composed of 14 OFDM symbols). An example of FIG. 6 illustrates a case where synchronization signal block #0 (607), synchronization signal block #1 (608), synchronization signal block #2 (609), synchronization signal block #3 (610), synchronization signal block #4 (611), synchronization signal block #5 (612), synchronization signal block #6 (613), and synchronization signal block #7 (614) are transmitted within 0.25 ms (i.e., 4 slots).

Synchronization signal block #0 (607) and synchronization signal block #1 (608) may be mapped respectively to 4 consecutive symbols from the 9th OFDM symbol of the first slot, and to 4 consecutive symbols from the 13th OFDM symbol; synchronization signal block #2 (609) and synchronization signal block #3 (610) may be mapped respectively to 4 consecutive symbols from the 3rd OFDM symbol of the second slot, and to 4 consecutive symbols from the 7th OFDM symbol; synchronization signal block #4 (611), synchronization signal block #5 (612), and synchronization signal block #6 (613) may be mapped respectively to four consecutive symbols from the 5th OFDM symbol of the third slot, four consecutive symbols from the 9th OFDM symbol, and four consecutive symbols from the 13th OFDM symbol; synchronization signal block #7 (614) may be mapped to four consecutive symbols from the 3rd OFDM symbol of the fourth slot.

As described in the above embodiment, different analog beams may be used respectively for synchronization signal block #0 (607), synchronization signal block #1 (608), synchronization signal block #2 (609), synchronization signal block #3 (610), synchronization signal block #4 (611), synchronization signal block #5 (612), synchronization signal block #6 (613), and synchronization signal block #7 (614). Also, in the four OFDM symbols where one synchronization signal block is transmitted, the same analog beam can be used, and in OFDM symbols where no synchronization signal block is mapped, the beam to be used can be freely determined at the discretion of the base station.

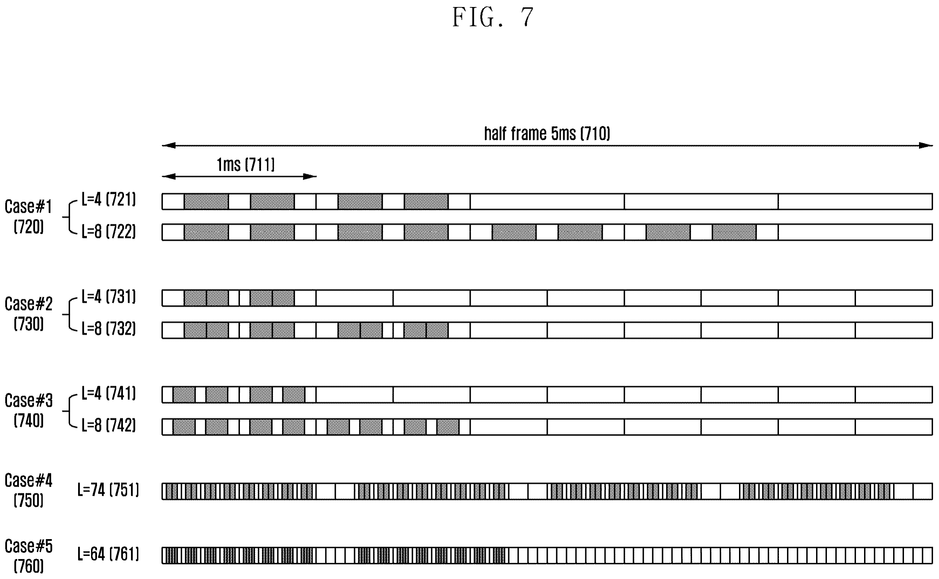

FIG. 7 is a diagram illustrating cases of transmitting a synchronization signal block according to a subcarrier spacing within 5 ms in a wireless communication system, to which an embodiment of the disclosure is applicable.

With reference to FIG. 7, in a 5G communication system, synchronization signal blocks may be periodically transmitted in units of, for example, an interval (710) of 5 ms (corresponding to 5 subframes or a half frame).

In a frequency band below 3 GHz, up to four synchronization signal blocks may be transmitted within a period of 5 ms (710). In a frequency band above 3 GHz and below 6 GHz, up to eight synchronization signal blocks may be transmitted. In a frequency band above 6 GHz, up to 64 synchronization signal blocks may be transmitted. As described above, subcarrier spacings of 15 kHz and 30 kHz may be used at frequencies below 6 GHz.

In the example of FIG. 7, for case #1 (501) of FIG. 5 being composed of one slot with a subcarrier spacing of 15 kHz, in the frequency band below 3 GHz, synchronization signal blocks may be mapped to the first and second slots, and up to four synchronization signal blocks (721) may be transmitted; in the frequency band above 3 GHz and below 6 GHz, synchronization signal blocks may be mapped to the first, second, third, and fourth slots, and up to eight synchronization signal blocks (721) may be transmitted. For case #2 (502) or case #3 (503) of FIG. 5 being composed of two slots with a subcarrier spacing of 30 kHz, in the frequency band below 3 GHz, synchronization signal blocks may be mapped to slots from the first slot, and up to four synchronization signal blocks (731, 741) may be transmitted; in the frequency band above 3 GHz and below 6 GHz, synchronization signal blocks may be mapped to slots from the first slot and from the third slot, and up to eight synchronization signal blocks (732, 742) may be transmitted.

Subcarrier spacings of 120 kHz and 240 kHz may be used in frequencies above 6 GHz. In the example of FIG. 6, for case #4 (610) of FIG. 6 being composed of two slots with a subcarrier spacing of 120 kHz, in the frequency band above 6 GHz, synchronization signal blocks can be mapped to slots starting from slots 1, 3, 5, 7, 11, 13, 15, 17, 21, 22, 25, 27, 31, 33, 35, and 37, and up to 64 synchronization signal blocks (751) may be transmitted. In the example of FIG. 7, for case #5 (620) of FIG. 6 being composed of four slots with a subcarrier spacing of 240 kHz, in the frequency band above 6 GHz, synchronization signal blocks may be mapped to slots from slots 1, 5, 9, 13, 21, 25, 29, and 33, and up to 64 synchronization signal blocks (761) may be transmitted.

The UE may perform decoding of the PDCCH and PDSCH based on the system information included in the received MIB and then obtain the SIB. The SIB may include at least one of uplink cell bandwidth related information, random access parameters, paging parameters, or uplink power control related parameters.

Typically, the UE may establish a radio link with the network through a random access procedure based on network synchronization and system information obtained during the cell search process. Random access may be either contention-based or contention-free. When the UE performs cell selection and reselection during the initial cell access stage, contention-based random access may be used, for example, to transition from the RRC_IDLE state to the RRC_CONNECTED state. Contention-free random access may be used to reestablish uplink synchronization in the case of downlink data arrival, handover, or positioning. Table 3 below illustrates the conditions (events) that trigger a random access procedure in the 5G system.

[Table 3]

| |
|---|
| - Initial access from RRC_IDLE;<br>- RRC Connection Re-establishment procedure;<br>- DL or UL data arrival during RRC_CONNECTED when UL synchronisation status is "non-synchronised"; |

(continued)

| |
|---|
| - UL data arrival during RRC_CONNECTED when there are no PUCCH resources for SR available;<br>- SR failure;<br>- Request by RRC upon synchronous reconfiguration (e.g. handover);<br>- RRC Connection Resume procedure from RRC_INACTIVE;<br>- To establish time alignment for a secondary TAG;<br>- Request for Other SI;<br>- Beam failure recovery;<br>- Consistent UL LBT failure on SpCell. |

Next, a description will be given of a method for configuring a measurement time for radio resource management (RRM) based on a synchronization signal block (SS block or SSB) in a 5G wireless communication system.

The UE is configured with MeasObjectNR of MeasObjectToAddModList as a configuration for SSB-based intra/inter-frequency measurements and CSI-RS based intra/inter-frequency measurements via higher layer signaling. For example, MeasObjectNR may be configured as shown in Table 4 below.

[Table 4]

```
McasObjectNR ::=                    SEQUENCE {
    ssbFrequency                                        ARFCN-ValueNR
OPTIONAL,    -- Cond SSBorAssociatedSSB
    ssbSubcarrierSpacing                               SubcarrierSpacing
OPTIONAL,    -- Cond SSBorAssociatedSSB
    smtc1                                                   SSB-MTC
OPTIONAL,    -- Cond SSBorAssociatedSSB
    smtc2                                                  SSB-MTC2
OPTIONAL,    -- Cond IntraFreqConnected
    refFreqCSI-RS                                       ARFCN-ValueNR
OPTIONAL,    -- Cond CSI-RS
    referenceSignalConfig           ReferenceSignalConfig,
    absThreshSS-BlocksConsolidation                      ThresholdNR
OPTIONAL,    -- Need R
    absThreshCSI-RS-Consolidation                        ThresholdNR
OPTIONAL,    -- Need R
    nrofSS-BlocksToAverage          INTEGER (2..maxNrofSS-BlocksToAverage)
OPTIONAL,    -- Need R
    nrofCSI-RS-ResourcesToAverage           INTEGER    (2..maxNrofCSI-RS-
ResourcesToAverage)            OPTIONAL,    -- Need R
    quantityConfigIndex             INTEGER (1..maxNrofQuantityConfig),
    offsetMO                        Q-OffsetRangeList,
    cellsToRemoveList                                       PCI-List
OPTIONAL,    -- Need N
    cellsToAddModList                               CellsToAddModList
OPTIONAL,    -- Need N
    blackCellsToRemoveList                          PCI-RangeIndexList
OPTIONAL,    -- Need N
    blackCellsToAddModList          SEQUENCE (SIZE (1..maxNrofPCI-Ranges))
OF PCI-RangeElement       OPTIONAL,    -- Need N
    whiteCellsToRemoveList                          PCI-RangeIndexList
```

```
OPTIONAL,      -- Need N
        whiteCellsToAddModList              SEQUENCE (SIZE (1..maxNrofPCI-Ranges))
OF PCI-RangeElement         OPTIONAL,      -- Need N
        ...,
        [[
        freqBandIndicatorNR                                  FreqBandIndicatorNR
OPTIONAL,      -- Need R
        measCycleSCell                  ENUMERATED {sf160, sf256, sf320, sf512,
sf640, sf1024, sf1280}    OPTIONAL      -- Need R
        ]],
        [[
        smtc3list-r16                                  SSB-MTC3List-r16
OPTIONAL,      -- Need R
        rmtc-Config-r16                          SetupRelease  {RMTC-Config-r16}
OPTIONAL,      -- Need M
        t312-r16                                  SetupRelease {  T312-r16  }
OPTIONAL      -- Need M
        ]]
}
```

- ssbFrequency: may set the frequency of the synchronization signal related to MeasObjectNR.
- ssbSubcarrierSpacing: sets the subcarrier spacing of SSB. Only 15 kHz or 30 kHz may be applied in FR1, and 120 kHz or 240 kHz may be applied in FR2.
- smtc1: indicates SS/PBCH block measurement timing configuration, and may set the primary measurement timing configuration and set the timing offset and duration for SSB.
- smtc2: may set the secondary measurement timing configuration for the SSB associated with MeasObjectNR having a PCI listed in pci-List.

In addition to this, SMTC may be configured to the UE through other higher layer signaling, for example, SIB2 for intra-frequency, inter-frequency and inter-RAT cell reselection, or reconfigurationWithSync for NR PSCell change and NR PCell change, and SCellConfig for NR SCell addition.

For SSB measurements, the UE may set a first SS/PBCH block measurement timing configuration (SMTC) according to periodicityAndOffset (providing periodicity and offset) through smtc1 being configured via higher layer signaling. In an embodiment, the first subframe of each SMTC occasion may start at a system frame number (SFN) and a SpCell subframe that satisfy the condition in Table 5 below.

[Table 5]

| |
|---|
| SFN mod *T* = (FLOOR (*Offset*/10)); <br> if the *Periodicity* is larger than *sf5*: <br>    subframe = *Offset* mod 10; <br> else: <br>    subframe = *Offset* or (*Offset* +5); <br> with *T* = CEIL(*Periodicity*/10). |

If smtc2 is configured, the UE may configure additional SMTCs for cells indicated by pci-List of smtc2 within the same MeasObjectNR according to the periodicity of configured smtc2 and the offset and duration of smtc1. In addition, the UE may be configured with smtc through smtc2-LP (with long periodicity) for the same frequency (e.g., frequency for intra-frequency cell reselection) or different frequencies (e.g., frequencies for inter-frequency cell reselection) and smtc3list for IAB-MT (integrated access and backhaul - mobile termination), and may measure the SSB. In an embodiment, the UE may not consider the SSB transmitted in subframes other than SMTC occasions for SSB-based RRM measurement at configured ssbFrequency.

The base station may utilize various multi-TRP (transmit/receive point) operation methods depending on the serving cell configuration and physical cell identifier (PCI) configuration. Among them, when two TRPs located at a physically distant distance have different PCIs, there may be two methods for operating the two TRPs.

[Operation method 1]

Two TRPs with different PCIs may be operated with two serving cell configurations.

Using operation method 1, the base station may configure channels and signals transmitted from different TRPs by including them in different serving cell configurations. That is, each TRP has an independent serving cell configuration, and the frequency band values FrequencyInfoDL indicated by DownlinkConfigCommon within each serving cell configuration may indicate at least some overlapping bands. Since the multiple TRPs operate based on multiple ServCellIndexes (e.g., ServCellIndex #1 and ServCellIndex #2), each TRP may utilize a separate PCI. That is, the base station may assign one PCI per ServCellIndex.

In this case, if multiple SSBs are transmitted from TRP 1 and TRP 2, the SSBs have different PCIs (e.g., PCI #1 and PCI #2), and the base station may appropriately select the ServCellIndex value indicated by the cell parameter in QCL-Info to map the appropriate PCI to each TRP and designate the SSB transmitted from either TRP 1 or TRP 2 as the source reference RS in the QCL configuration information. However, since this setting applies one serving cell configuration that can be used for carrier aggregation (CA) of the UE to multiple TRPs, there is a problem of limiting the freedom of CA configuration or increasing the signaling burden.

[Operation method 2]

Two TRPs with different PCIs may be operated with one serving cell configuration.

Using operation method 2, the base station may configure channels and signals transmitted from different TRPs through a single serving cell configuration. Since the UE operates based on one ServCellIndex (e.g., ServCellIndex #1), it is unable to recognize the PCI assigned to the second TRP (e.g., PCI #2). Operation method 1 offers greater freedom in CA configuration compared to operation method 1 described above; however, if multiple SSBs are transmitted from TRP 1 and TRP 2, the SSBs have different PCIs (e.g., PCI #1 and PCI #2), and the base station may be unable to map the PCI of the second TRP (e.g., PCI #2) through ServCellIndex indicated by the cell parameter in QCL-Info. The base station may only be able to designate the SSB transmitted from TRP 1 as the source reference RS in the QCL configuration information, and may be unable to designate the SSB transmitted from TRP 2.

As described above, operation method 1 may carry out multi-TRP operation for two TRPs with different PCIs through additional serving cell configuration without additional standard support, but operation method 2 may operate based on additional UE capability reporting and base station configuration information described below.

UE capability reporting for operation method 2

- The UE may report to the base station via its UE capability that it can configure an additional PCI different from the serving cell's PCI via higher layer signaling from the base station. This UE capability may include two separate numbers X1 and X2, or X1 and X2 may be reported as separate UE capabilities.
- X1 means the maximum number of additional PCIs that can be configured to the UE, and the PCI may be different from the PCI of the serving cell. Here, the time domain position and periodicity of the SSB corresponding to the additional PCI may be the same as the SSB of the serving cell.
- X2 means the maximum number of additional PCIs that can be configured to the UE, and the PCI at this time may be different from the PCI of the serving cell. Here, the time domain position and periodicity of the SSB corresponding to the additional PCI may be different from the SSB corresponding to the PCI reported as X1.
- By definition, the PCIs corresponding to the values reported as X1 and X2 cannot be set simultaneously.
- The values reported as X1 and X2 through a UE capability report may each have an integer value from 0 to 7.
- The values reported as X1 and X2 may be different in FR1 and FR2.

Higher layer signaling configuration for operation method 2

- The UE may be configured by the base station with higher layer signaling SSB-MTCAdditionalPCI-r17 based on UE capability reporting described above; this higher layer signaling may include at least multiple additional PCIs with different values from the serving cell, SSB transmission power corresponding to each additional PCI, and ssb-PositionInBurst corresponding to each additional PCI; the maximum number of additionally configurable PCIs is seven.

- As an assumption for the SSB corresponding to an additional PCI of different value from the serving cell, it may be assumed that the UE has the same center frequency, subcarrier spacing, and subframe number offset as the SSB of the serving cell.
- The UE may assume that the reference RS (e.g., SSB or CSI-RS) corresponding to the PCI of the serving cell is always associated with the activated TCI state; in the case of an additionally configured PCI having a different value from the serving cell, if there are one or multiple such PCIs, the UE may assume that only one PCI among these PCIs is associated with the activated TCI state.
- In case that the UE is configured with two different coresetPoolIndexes, the reference RS corresponding to the serving cell PCI is associated with one or multiple activated TCI states, and a reference RS corresponding to an additionally configured PCI having a different value from the serving cell is associated with one or multiple activated TCI states, the UE may expect that the activated TCI state(s) associated with the serving cell PCI is associated with one of the two coresetPoolIndexes, and the activated TCI state(s) associated with the additionally configured PCI having a different value from the serving cell is associated with the other one of the coresetPoolIndexes.

UE capability reporting and base station's higher layer signaling for operation method 2 may configure additional PCIs with values different from the PCI of the serving cell. If the above configuration is not present, the SSB corresponding to an additional PCI with a different value from the PCI of the serving cell that cannot be designated as the source reference RS may be used to designate the source reference RS for QCL configuration information. Additionally, unlike SSBs that can be configured for purposes such as RRM, mobility, or handover, and like SSB configuration information that can be configured within higher layer signaling smtc1 and smtc2, it can be used to serve as a QCL source RS to support multi-TRP operation with different PCIs.

Next, a detailed description will be given of the demodulation reference signal (DMRS) being one of reference signals in the 5G system.

The DMRS may be composed of multiple DMRS ports, and the DMRS ports utilize code division multiplexing (CDM) or frequency division multiplexing (FDM) to maintain orthogonality so as to avoid interference. However, the term "DMRS" may be expressed in different terms depending on the user's intention and the intended usage of the reference signal. The term "DMRS" is used to provide a specific example to facilitate understanding and easily explain the technical content of this disclosure, and is not intended to limit the scope of this disclosure. In other words, it will be apparent to a person having ordinary skill in the art to which the disclosure pertains that the disclosure can be implemented for any reference signal based on the technical idea of the disclosure.

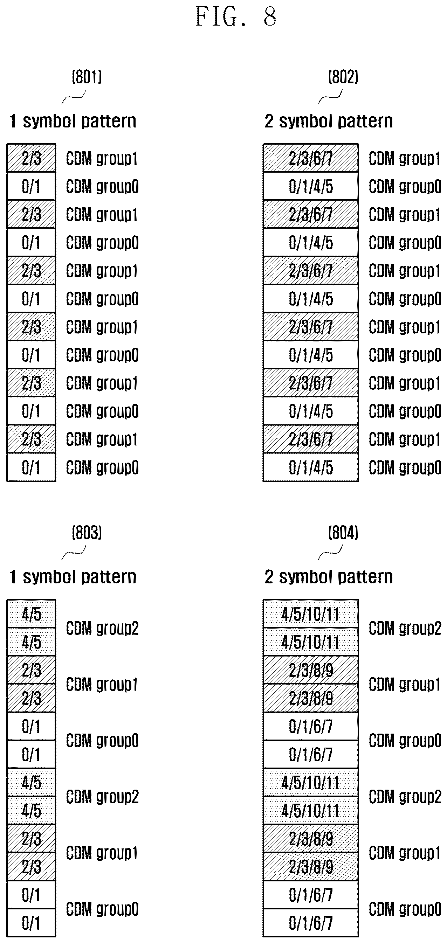

FIG. 8 is a diagram illustrating DMRS patterns (type 1 and type 2) used for communication between a base station and a UE in a wireless communication system, to which an embodiment of the disclosure is applicable. Two DMRS patterns may be supported in the 5G system. FIG. 8 illustrates the two DMRS patterns.

With reference to FIG. 8, indicia 801 and 802 correspond to DMRS type 1, where indicia 801 represents a 1-symbol pattern and indicia 802 represents a 2-symbol pattern. DMRS type 1 indicated by indicia 801 and 802 is a DMRS pattern with comb 2 structure, and may be composed of two CDM groups, where different CDM groups may be FDMed.

In 1-symbol patterns 801, CDM on frequency is applied to the same CDM group so that two DMRS ports may be distinguished, and hence a total of four orthogonal DMRS ports may be configured. The 1-symbol pattern 801 may include a DMRS port ID mapped to each CDM group (a DMRS port ID for downlink may be indicated by illustrated number+1000). In 2-symbol patterns 802, CDM on time/frequency is applied to the same CDM group so that four DMRS ports may be distinguished, and hence a total of eight orthogonal DMRS ports may be configured. The 2-symbol pattern 802 may include a DMRS port ID mapped to each CDM group (a DMRS port ID for downlink may be indicated by illustrated number+1000).

DMRS type 2 indicated by indicia 803 and 804 is a DMRS pattern with a structure in which frequency domain orthogonal cover codes (FD-OCCs) are applied to subcarriers adjacent on frequency, and may be composed of three CDM groups, where different CDM groups may be FDMed.

In 1-symbol patterns 803, CDM on frequency is applied to the same CDM group so that two DMRS ports may be distinguished, and hence a total of six orthogonal DMRS ports may be configured. The 1-symbol pattern 803 may include a DMRS port ID mapped to each CDM group (a DMRS port ID for downlink may be indicated by illustrated number+1000). In 2-symbol patterns 804, CDM on time/frequency is applied to the same CDM group so that four DMRS ports may be distinguished, and hence a total of 12 orthogonal DMRS ports may be configured. The 2-symbol pattern 804 may include a DMRS port ID mapped to each CDM group (a DMRS port ID for downlink may be indicated by illustrated number+1000).

As described above, in the NR system, two different DMRS patterns (e.g., DMRS patterns 801 and 802 or DMRS patterns 803 and 804) may be configured, and whether each DMRS pattern is a one-symbol pattern 801 or 803 or is an adjacent two-symbol pattern 802 or 804 may also be configured. Additionally, in the NR system, DMRS port numbers may be scheduled, and the number of CDM groups scheduled together for PDSCH rate matching may also be configured and signaled. In addition, for CP-OFDM (cyclic prefix based OFDM), both DMRS patterns described above may be supported in DL and UL; for DFT-S-OFDM (discrete Fourier transform spread OFDM), only DMRS type 1 among the DMRS patterns described above may be supported in UL.

In addition, an additional DMRS may be supported for configuration. A front-loaded DMRS may refer to a first DMRS transmitted or received at a front-most symbol in the time domain from among DMRSs, and an additional DMRS may refer to a DMRS transmitted or received at a symbol that follows the front-loaded DMRS in the time domain. In the NR system, the number of additional DMRS may be set from a minimum of 0 to a maximum of 3. In addition, when an additional DMRS is configured, the same pattern as the front-loaded DMRS may be assumed. In an embodiment, when information on whether the DMRS pattern type described for the front-loaded DMRS is type 1 or type 2, information on whether the DMRS pattern is a one-symbol pattern or an adjacent two-symbol pattern, and information on the DMRS port and the number of CDM groups used are indicated, if an additional DMRS is configured additionally, the additional DMRS may be assumed to have the same DMRS information as the front-loaded DMRS.

In an embodiment, the downlink DMRS configuration described above may be set via RRC signaling as shown in Table 6 below.

[Table 6]

```
DMRS-DownlinkConfig ::=              SEQUENCE {
    dmrs-Type               ENUMERATED {type2}          OPTIONAL,    -- Need S
    dmrs-AdditionalPosition ENUMERATED {pos0, pos1, pos3} OPTIONAL,  -- Need S
    maxLength               ENUMERATED {len2}           OPTIONAL,    -- Need S
    scramblingID0           INTEGER (0..65535)          OPTIONAL,    -- Need S
    scramblingID1           INTEGER (0..65535)          OPTIONAL,    -- Need S
    phaseTrackingRS         SetupRelease {PTRS-DownlinkConfig} OPTIONAL, -- Need M
        ...
}
```

Here, dmrs-Type may set a DMRS type, dmrs-AdditionalPosition may set additional DMRS OFDM symbols, maxLength may set a 1-symbol DMRS pattern or a 2-symbol DMRS pattern, scramblingID0 and scramblingID 1 may set scrambling IDs, and phaseTrackingRS may set a phase tracking reference signal (PTRS).

In addition, the uplink DMRS configuration described above may be set via RRC signaling as shown in Table 7 below.

[Table 7]

```
DMRS-UplinkConfig ::=                SEQUENCE {
    dmrs-Type                ENUMERATED {type2}        OPTIONAL,    -- Need S
    dmrs-AdditionalPosition  ENUMERATED {pos0, pos1, pos3}    OPTIONAL,   -- Need R
    phaseTrackingRS          SetupRelease { PTRS-UplinkConfig }   OPTIONAL,   -- Need M
    maxLength                ENUMERATED {len2}         OPTIONAL,   -- Need S
    transformPrecodingDisabled  SEQUENCE {
        scramblingID0        INTEGER (0..65535)        OPTIONAL,   -- Need S
        scramblingID1        INTEGER (0..65535)        OPTIONAL,   -- Need S
        ...
    }                                                  OPTIONAL,   -- Need R
    transformPrecodingEnabled   SEQUENCE {
        nPUSCH-Identity      INTEGER (0..1007)         OPTIONAL,   -- Need S
        sequenceGroupHopping ENUMERATED {disabled}     OPTIONAL,   -- Need S
        sequenceHopping      ENUMERATED {enabled}      OPTIONAL,   -- Need S
        ...
    }                                                  OPTIONAL,   -- Need R
    ...
}
```

Here, dmrs-Type may set a DMRS type, dmrs-AdditionalPosition may set additional DMRS OFDM symbols, phaseTrackingRS may set a PTRS, and maxLength may set a 1-symbol DMRS pattern or a 2-symbol DMRS pattern. scramblingID0 and scramblingID1 may set scrambling ID0s, nPUSCH-Identity may set a cell ID for DFT-s-OFDM, sequenceGroupHopping may disable sequence group hopping, and sequenceHopping may enable sequence hopping.

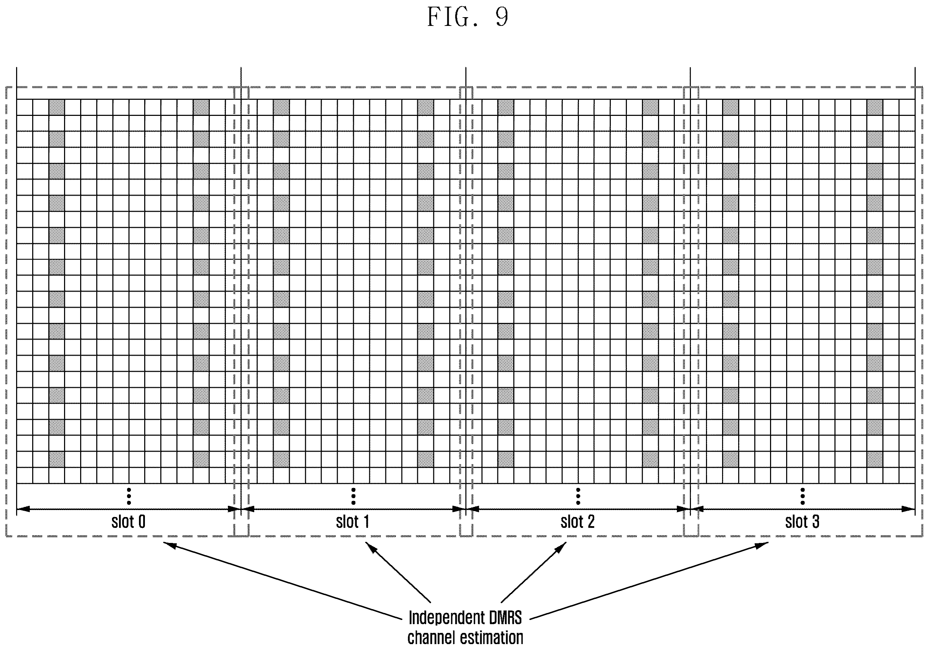

FIG. 9 is a diagram illustrating channel estimation using DMRS received on one PUSCH in a time band in a wireless communication system, to which an embodiment of the disclosure is applicable.

With reference to FIG. 9, to perform channel estimation for data decoding using a DMRS, in a frequency band, the channel estimation may be performed within a precoding resource block group (PRG) being a bundling unit by using physical RB (PRB) bundling linked to the system band. Additionally, channel estimation may be performed by assuming that only a DMRS received on one PUSCH has the same precoding in a time unit.

Next, a description will be given of a time domain resource allocation (TDRA) method for a data channel in the 5G communication system. The base station may configure a time domain resource allocation information table for the downlink data channel (physical downlink shared channel, PDSCH) and the uplink data channel (physical uplink shared channel, PUSCH) to the UE through higher layer signaling (e.g., RRC signaling).

The base station may configure a table including up to 17 entries (maxNrofDL-Allocations=17) for the PDSCH, and may configure a table including up to 17 entries (maxNrofUL-Allocations=17) for the PUSCH. TDRA information may include, for example, at least one of PDCCH-to-PDSCH slot timing (denoted as K0, and corresponding to a time interval in units of slots between a time point at which the PDCCH is received and a time point at which the PDSCH scheduled by the received PDCCH is transmitted), PDCCH-to-PUSCH slot timing (denoted as K2, and corresponding to a time interval in units of slots between a time point at which the PDCCH is received and a time point at which the PUSCH scheduled by the received PDCCH is transmitted), information about the position and length of the start symbol at which PDSCH or PUSCH is scheduled within the slot, or a mapping type of the PDSCH or PUSCH.

In an embodiment, TDRA information for the PDSCH may be configured to the UE via RRC signaling as shown in Table 8 below.

[Table 8]

```
PDSCH-TimeDomainResourceAllocationList information element


PDSCH-TimeDomainResourceAllocationList ::=   SEQUENCE (SIZE(1..maxNrofDL-Allocations)) OF PDSCH-
TimeDomainResourceAllocation


PDSCH-TimeDomainResourceAllocation ::=   SEQUENCE {
    k0                          INTEGER(0..32)                OPTIONAL,    -- Need S
    mappingType                 ENUMERATED {typeA, typeB},
    startSymbolAndLength        INTEGER (0..127)
    repetitionNumber            ENUMERATED {n2, n3, n4, n5, n6, n7, n8, n16}  OPTIONAL,    -- Cond
Formats1-0and1-1
}
```

Here, k0 may denote PDCCH-to-PDSCH timing (i.e., slot offset between DCI and scheduled PDSCH) in units of slots, mappingType may denote the PDSCH mapping type, startSymbolAndLength may denote a start symbol and length of the PDSCH, and repetitionNumber may denote the number of PDSCH transmission occasions according to a slot-based repetition scheme.

In an embodiment, TDRA information for the PUSCH may be configured to the UE via RRC signaling as shown in Table 9 below.

[Table 9]

```
PUSCH-TimeDomainResourceAllocation information element


PUSCH-TimeDomainResourceAllocationList ::=    SEQUENCE (SIZE(1..maxNrofUL-Allocations)) OF PUSCH-
TimeDomainResourceAllocation


PUSCH-TimeDomainResourceAllocation ::=   SEQUENCE {
    k2                          INTEGER(0..32)                OPTIONAL,    -- Need S
    mappingType                 ENUMERATED {typeA, typeB},
    startSymbolAndLength        INTEGER (0..127)
}
PUSCH-Allocation-r16 ::=   SEQUENCE {
    mappingType-r16             ENUMERATED {typeA, typeB}        OPTIONAL,    -- Cond NotFormat01-
02-Or-TypeA
    startSymbolAndLength-r16  INTEGER (0..127)      OPTIONAL,    -- Cond NotFormat01-02-Or-TypeA
    startSymbol-r16           INTEGER (0..13)       OPTIONAL,    -- Cond RepTypeB
    length-r16                INTEGER (1..14)       OPTIONAL,    -- Cond RepTypeB
    numberOfRepetitions-r16   ENUMERATED {n1, n2, n3, n4, n7, n8, n12, n16} OPTIONAL,    -- Cond
Format01-02

    ...
}
```

Here, k2 may denote PDCCH-to-PUSCH timing (i.e., slot offset between DCI and scheduled PUSCH) in units of slots, mappingType may denote the PUSCH mapping type, startSymbolAndLength or StartSymbol and length may denote the start symbol and length of the PUSCH, and numberOfRepetitions may denote the number of repetitions applied to PUSCH transmission.

The base station may indicate at least one entry in the TDRA information table to the UE via L1 signaling (e.g., downlink control information (DCI)) (e.g., may be indicated through a "TDRA" field in DCI). The UE may obtain the TDRA information for the PDSCH or PUSCH based on the DCI received from the base station.

Next, a description will be given of transmission of an uplink data channel (physical uplink shared channel, PUSCH) in the 5G system. PUSCH transmission may be dynamically scheduled by a UL grant in the DCI (e.g., dynamic grant (DG)-PUSCH) or may be scheduled by configured grant (CG) Type 1 or CG Type 2 (e.g., CG-PUSCH). Dynamic scheduling for PUSCH transmission may be indicated by, e.g., DCI format 0 or 0_1.

PUSCH transmission of CG type 1 may be configured semi-statically based on reception of configuredGrant-Config including rrc-ConfiguredUplinkGrant illustrated in Table 10, via higher layer signaling, without receiving a UL grant in DCI. PUSCH transmission of CG type 2 may be scheduled semi-persistently based on a UL grant in DCI after receiving configuredGrantConfig not including rrc-ConfiguredUplinkGrant illustrated in Table 10 via higher layer signaling.

When PUSCH transmission is scheduled by a configured grant (CG), the parameters applied to the PUSCH transmission may be configured based on higher layer signaling configuredGrantConfig illustrated in Table 10, excluding specific parameters (e.g., dataScramblingIdentityPUSCH, txConfig, codebookSubset, maxRank, or scaling of UCI-OnPUSCH) provided via higher layer signaling pusch-Config illustrated in Table 11. For example, if the UE is provided with transformPrecoder in higher layer signaling configuredGrantConfig illustrated in Table 10, the UE may apply tp-pi2BPSK in pusch-Config of Table 11 to PUSCH transmission based on the CG.

[Table 10]

```
ConfiguredGrantConfig

ConfiguredGrantConfig ::=              SEQUENCE {
    frequencyHopping              ENUMERATED {intraSlot, interSlot}       OPTIONAL,    -- Need S,
    cg-DMRS-Configuration         DMRS-UplinkConfig,
    mcs-Table                     ENUMERATED {qam256, qam64LowSE}         OPTIONAL,    -- Need S
    mcs-TableTransformPrecoder    ENUMERATED {qam256, qam64LowSE}         OPTIONAL,    -- Need S
    uci-OnPUSCH                   SetupRelease { CG-UCI-OnPUSCH }         OPTIONAL,    -- Need M
    resourceAllocation            ENUMERATED  {  resourceAllocationType0,  resourceAllocationType1,
dynamicSwitch },
    rbg-Size                      ENUMERATED {config2}                    OPTIONAL,    -- Need S
    powerControlLoopToUse         ENUMERATED {n0, n1},
    p0-PUSCH-Alpha                P0-PUSCH-AlphaSetId,
    transformPrecoder             ENUMERATED {enabled, disabled}          OPTIONAL,    -- Need S
    nrofHARQ-Processes            INTEGER(1..17),
    repK                          ENUMERATED {n1, n2, n4, n8},
    repK-RV                       ENUMERATED {s1-0221, s2-0303, s3-0000}   OPTIONAL,   -- Need R
    periodicity                   ENUMERATED {
sym2, sym7, sym1x14, sym2x14, sym4x14, sym5x14, sym8x14, sym10x14, sym17x14, sym20x14,
sym32x14, sym40x14, sym64x14, sym80x14, sym128x14, sym170x14, sym256x14, sym320x14, sym512x14,
sym640x14, sym1024x14, sym1280x14, sym2560x14, sym5120x14,
sym6, sym1x12, sym2x12, sym4x12, sym5x12, sym8x12, sym10x12, sym17x12, sym20x12, sym32x12,
sym40x12, sym64x12, sym80x12, sym128x12, sym170x12, sym256x12, sym320x12, sym512x12, sym640x12,
sym1280x12, sym2560x12
    },
    configuredGrantTimer          INTEGER (1..64)                              OPTIONAL,   -- Need R
    rrc-ConfiguredUplinkGrant     SEQUENCE {
        timeDomainOffset                   INTEGER (0..519),
        timeDomainAllocation               INTEGER  (0..16),
        frequencyDomainAllocation          BIT STRING (SIZE(18)),
        antennaPort                        INTEGER (0..31),
        dmrs-SeqInitialization             INTEGER (0..1)              OPTIONAL,    -- Need R
        precodingAndNumberOfLayers         INTEGER (0..63),
        srs-ResourceIndicator              INTEGER (0..16)             OPTIONAL,    -- Need R
        mcsAndTBS                          INTEGER (0..31),
        frequencyHoppingOffset             INTEGER (1.. maxNrofPhysicalResourceBlocks-1)   OPTIONAL,
-- Need R
        pathlossReferenceIndex             INTEGER (0..maxNrofPUSCH-PathlossReferenceRSs-1),
        ...
```

```
    }                                                               OPTIONAL,    -- Need R
    ...
}
```

Next, a description will be given of the PUSCH transmission method. The DMRS antenna port for PUSCH transmission may be the same as the antenna port for SRS transmission. PUSCH transmission may comply with one of a codebook-based transmission method and a noncodebook-based transmission method, depending on whether the txConfig value in higher signaling pusch-Config of Table 7 is "codebook" or "nonCodebook". As described above, PUSCH transmission may be dynamically scheduled via DCI format 0_0 or 0_1, and may be semi-statically configured by a CG.

If the UE is scheduled with PUSCH transmission via DCI format 0_0, the UE may perform beam configuration for PUSCH transmission by using pucch-spatialRelationInfoID corresponding to a UE-specific (dedicated) PUCCH resource having a lowest ID within an activated UL bandwidth part (BWP) of the serving cell. In an embodiment, PUSCH transmission may be performed based on a single antenna port. The UE may not expect scheduling for PUSCH transmission via DCI format 0_0 within a BWP for which a PUCCH resource including pucch-spatialRelationInfo is not configured. If the UE is not configured with txConfig in pusch-Config of Table 11, the UE may not expect to be scheduled via DCI format 0_1.

[Table 11]

```
PUSCH-Config
PUSCH-Config ::=                    SEQUENCE {
    dataScramblingIdentityPUSCH        INTEGER (0..1022)       OPTIONAL,    -- Need S
    txConfig                        ENUMERATED {codebook, nonCodebook}    OPTIONAL,   -- Need S
    dmrs-UplinkForPUSCH-MappingTypeA    SetupRelease { DMRS-UplinkConfig } OPTIONAL,   -- Need M
    dmrs-UplinkForPUSCH-MappingTypeB    SetupRelease { DMRS-UplinkConfig }   OPTIONAL, -- Need M
    pusch-PowerControl                PUSCH-PowerControl            OPTIONAL,    -- Need M
    frequencyHopping                ENUMERATED {intraSlot, interSlot}   OPTIONAL,    -- Need S
    frequencyHoppingOffsetLists        SEQUENCE    (SIZE    (1..4))    OF    INTEGER    (1..
maxNrofPhysicalResourceBlocks-1)    OPTIONAL,    -- Need M
    resourceAllocation                ENUMERATED { resourceAllocationType0, resourceAllocationType1,
dynamicSwitch},
    pusch-TimeDomainAllocationList            SetupRelease { PUSCH-TimeDomainResourceAllocationList }
OPTIONAL,    -- Need M
    pusch-AggregationFactor            ENUMERATED { n2, n4, n8 }              OPTIONAL,    -- Need S
    mcs-Table                    ENUMERATED {qam256, qam64LowSE}   OPTIONAL,    -- Need S
    mcs-TableTransformPrecoder        ENUMERATED {qam256, qam64LowSE}   OPTIONAL,    -- Need S
    transformPrecoder                ENUMERATED {enabled, disabled}        OPTIONAL,    -- Need S
    codebookSubset ENUMERATED {fullyAndPartialAndNonCoherent, partialAndNonCoherent,nonCoherent}
                OPTIONAL, -- Cond codebookBased
    maxRank                    INTEGER (1..4)            OPTIONAL, -- Cond codebookBased
    rbg-Size                    ENUMERATED { config2}            OPTIONAL, -- Need S
    uci-OnPUSCH                SetupRelease { UCI-OnPUSCH}        OPTIONAL, -- Need M
    tp-pi2BPSK                ENUMERATED {enabled}            OPTIONAL, -- Need S

    ...

}
```

Next, a description will be given of codebook-based PUSCH transmission. Codebook-based PUSCH transmission may be dynamically scheduled via DCI format 0_0 or 0_1, and may operate semi-statically by a CG. If codebook-based PUSCH transmission is dynamically scheduled by DCI format 0_1 or is configured semi-statically by a CG, the UE may determine a precoder for the PUSCH transmission based on an SRS resource indicator (SRI), a transmission precoding matrix indicator (TPMI), and a transmission rank (number of PUSCH transmission layers).

In an embodiment, the SRI may be given via a field "SRS resource indicator" in DCI or may be configured via higher signaling srs-ResourceIndicator. For codebook-based PUSCH transmission, the UE may be configured with at least one SRS resource, and for example, up to two SRS resources may be configured. When the UE is provided with the SRI via DCI, the SRS resource indicated by the SRI may refer to an SRS resource corresponding to the SRI among SRS resources transmitted before the PDCCH including the SRI. In addition, the TPMI and transmission rank may be given via a field "precoding information and number of layers" in DCI or may be configured via higher signaling precodingAndNumberOfLayers. The TPMI may be used to indicate the precoder applied to PUSCH transmission.

The precoder to be used for PUSCH transmission may be selected from an uplink codebook having the same number of antenna ports as the value of nrofSRS-Ports in higher signaling SRS-Config. In codebook-based PUSCH transmission, the UE may determine a codebook subset based on codebookSubset in higher signaling pusch-Config and the TPMI. In an embodiment, codebookSubset in higher signaling pusch-Config may be set to one of "fullyAndPartialAndNonCoherent", "partialAndNonCoherent", and "nonCoherent" based on the UE capability reported by the UE to the base station.

If the UE has reported "partialAndNonCoherent" as a UE capability, the UE may not expect that the value of higher signaling codebookSubset is set to "fullyAndPartialAndNonCoherent". Additionally, if the UE has reported "nonCoherent" as a UE capability, the UE may not expect that the value of higher signaling codebookSubset is set to "fullyAndPartialAndNonCoherent" or "partialAndNonCoherent". If nrofSRS-Ports in higher signaling SRS-ResourceSet indicates two SRS antenna ports, the UE may not expect that the value of higher signaling codebookSubset is set to "partialAndNon-Coherent".

The UE may be configured with one SRS resource set for which the value of usage in higher signaling SRS-ResourceSet is set to "codebook", and one SRS resource in the corresponding SRS resource set may be indicated via the SRI. If multiple SRS resources are configured in the SRS resource set for which the value of usage in higher signaling SRS-ResourceSet is set to "codebook", the UE may expect that nrofSRS-Ports in higher signaling SRS-Resource is set to the same value for all SRS resources.

The UE may transmit, to the base station, one or multiple SRS resources included in the SRS resource set for which the value of usage is set to "codebook" according to higher signaling; the base station may select one of the SRS resources transmitted by the UE and instruct the UE to perform PUSCH transmission using transmission beam information of the selected SRS resource. In an embodiment, in codebook-based PUSCH transmission, the SRI may be used as information for selecting one SRS resource index, and may be included in the DCI. Additionally, the base station may transmit a DCI including information indicating the TPMI and rank to be used by the UE for PUSCH transmission. The UE may perform PUSCH transmission by utilizing the SRS resource indicated by the SRI and applying the precoder indicated by the TPMI and rank indicated based on the transmission beam of the corresponding SRS resource.

Next, a description will be given of non-codebook based PUSCH transmission. Non-codebook based PUSCH transmission may be dynamically scheduled via DCI format 0_0 or 0_1 and may operate semi-statically by the CG. If at least one SRS resource is configured in an SRS resource set for which the value of usage in higher signaling SRS-ResourceSet is set to "nonCodebook", the UE may be scheduled with non-codebook based PUSCH transmission via DCI format 0_1.

For the SRS resource set for which the value of usage in higher signaling SRS-ResourceSet is set to "nonCodebook", the UE may be configured with a non-zero power (NZP) CSI-RS resource associated with one SRS resource set. The UE may perform calculation on the precoder for SRS transmission via measurement on the NZP CSI-RS resource configured in association with the SRS resource set. If a difference between the last received symbol of an aperiodic NZP CSI-RS resource associated with the SRS resource set and the first symbol of aperiodic SRS transmission in the UE is less than a specific number of symbols (e.g., 42 symbols), the UE may not expect updating of the information on the precoder for SRS transmission.

If the value of resource Type in higher signaling SRS-ResourceSet is set to "aperiodic", the NZP CSI-RS associated with SRS-ResourceSet may be indicated by an "SRS request" field in DCI format 0_1 or 1_1. In an embodiment, if the NZP CSI-RS resource associated with SRS-ResourceSet is an aperiodic NZP CSI resource, and the value of the "SRS request" field in DCI format 0_1 or 1_1 is not "00", this may indicate the presence of the NZP CSI-RS resource associated with SRS-ResourceSet. The above DCI may not indicate cross carrier or cross BWP scheduling. If the value of the SRS request indicates the presence of a NZP CSI-RS, the NZP CSI-RS may be positioned in a slot at which the PDCCH including the SRS request field is transmitted. TCI states configured in a scheduled subcarrier may be not configured as QCL-TypeD.

If a periodic or semi-persistent SRS resource set is configured, the NZP CSI-RS associated with the SRS resource set may be indicated by associatedCSI-RS in higher signaling SRS-ResourceSet. For non-codebook based transmission, the UE may not expect that higher signaling spatialRelationInfo for the SRS resource and associatedCSI-RS in higher signaling SRS-ResourceSet are configured together.

If multiple SRS resources are configured, the UE may determine the precoder and transmission rank to be applied to PUSCH transmission based on the SRI indicated by the base station. In an embodiment, the SRI may be indicated via the " SRS resource indicator" field in DCI or may be configured via higher signaling srs-ResourceIndicator. Like aforementioned codebook-based PUSCH transmission, when the UE is provided with the SRI via DCI, the SRS resource indicated by the SRI may refer to an SRS resource corresponding to the SRI among SRS resources transmitted before the PDCCH including the SRI. The UE may use one or multiple SRS resources for SRS transmission, and the maximum number of SRS resources that may be simultaneously transmitted at the same symbol within one SRS resource set may be determined according to the UE capability reported by the UE to the base station. The SRS resources simultaneously transmitted by the UE may occupy the same RB. The UE may configure one SRS port for each SRS resource. Only one SRS resource set for which the value of usage in higher signaling SRS-ResourceSet is set to "nonCodebook" may be configured, and up to 4 SRS resources may be configured for non-codebook based PUSCH transmission.

The base station may transmit one NZP CSI-RS associated with the SRS resource set to the UE, and the UE may calculate a precoder to be used for transmitting one or multiple SRS resources belonging to the SRS resource set based on the measurement result upon receiving the NZP CSI-RS. The UE may apply the calculated precoder when transmitting, to the base station, one or multiple SRS resources in the SRS resource set for which usage is set to "nonCodebook", and the base station may select one or multiple SRS resources from among the received one or multiple SRS resources. In non-codebook based PUSCH transmission, the SRI may indicate an index capable of representing a combination of one or multiple SRS resources, and the SRI may be included in DCI. The number of SRS resources indicated by the SRI transmitted by the base station may be the number of PUSCH transmission layers, and the UE may transmit the PUSCH by applying, to each layer, the precoder applied to SRS resource transmission.

Next, a description will be given of repeated transmission of an uplink data channel (PUSCH) and a single TB transmission method over multiple slots in the 5G system. In the 5G system, two types of repeated uplink data channel transmission (e.g., PUSCH repetition type A and PUSCH repetition type B) and transport block (TB) processing over multi-slot PUSCH (TBoMS) for transmitting a single TB via multiple PUSCHs over multiple slots may be supported. Additionally, the UE may be configured with one of PUSCH repetition type A and PUSCH repetition type B via higher layer signaling. In addition, the UE may be configured with "numberOfSlotsTBoMS" via a resource allocation table to perform TBoMS transmission.

PUSCH repetition type A

- As described above, within one slot, the start symbol and length of a UL data channel are determined by a TDRA method, and the base station may transmit the number of repeated transmissions to the UE via higher layer signaling (e.g., RRC signaling) or L1 signaling (e.g., DCI). The number N of slots configured as numberOfSlotsTBoMS to determine the TBS is 1.
- The UE may repeatedly transmit a UL data channel, which has the same start symbol and length as the configured UL data channel, in consecutive slots, based on the number of repeated transmissions received from the base station. In an embodiment, the UE may skip UL data channel transmission in a slot configured as downlink by the base station for the UE, or if at least one symbol among the symbols in a slot configured to the UE for repeated transmission of the uplink data channel is configured as downlink. For example, the UE may not transmit the UL data channel within the number of repeated UL data channel transmissions. However, the UE supporting Rel-17 repeated UL data transmission may determine a slot usable for repeated UL data transmission to be an available slot, and may count the number of transmissions during repeated UL data channel transmission in a slot determined to be an available slot. If repeated UL data channel transmission in a slot determined to be an available slot is skipped, the UE may perform repeated transmission via a slot available for transmission after postponement. By using Table 12 below, the redundancy version may be applied according to the redundancy version pattern configured for each $n^{th}$ PUSCH transmission occasion.

PUSCH repetition type B

- As described above, within one slot, the start symbol and length of a UL data channel may be determined by a TDRA method, and the base station may transmit the number of repeated transmissions (numberofrepetitions) to the UE via higher layer signaling (e.g., RRC signaling) or L1 signaling (e.g., DCI). In an embodiment, the number N of slots configured as numberOfSlotsTBoMS to determine the TBS is 1.
- First, nominal repetition of the UL data channel may be determined as follows based on the start symbol and length of the UL data channel as configured above. Here, the nominal repetition may indicate a symbol resource configured by the base station for repeated PUSCH transmission, and the UE may determine a resource available for UL from the configured nominal repetition. In this case, the slot in which $n^{th}$ nominal repetition starts may be given by

$$K_s + \left\lfloor \frac{S + n \cdot L}{N_{symb}^{slot}} \right\rfloor$$

, and the symbol at which nominal repetition starts in the above start slot may be given by

$$\mathrm{mod}(S + n \cdot L, N_{symb}^{slot})$$

. The slot in which $n^{th}$ nominal repetition ends may be given by

$$K_s + \left\lfloor \frac{S + (n+1) \cdot L - 1}{N_{symb}^{slot}} \right\rfloor$$

, and the symbol at which nominal repetition ends in the above last slot may

be given by $\mathrm{mod}(S + (n+1) \cdot L - 1, N_{symb}^{slot})$ .Here, n=0, ... , numberofrepetitions-1, S may denote the configured start symbol of the UL data channel, and L may denote the configured symbol length of the UL data channel. $K_s$ may denote the slot in which PUSCH transmission starts, and $N_{symb}^{slot}$ may denote the number of symbols per slot.

- The UE may determine an invalid symbol for PUSCH repetition type B. The symbol configured as DL by tdd-UL-DL-ConfigurationCommon or tdd-UL-DL-ConfigurationDedicated may be determined to be an invalid symbol for PUSCH repetition type B. Additionally, an invalid symbol may be configured based on a higher-layer parameter (e.g., InvalidSymbolPattern). For example, a higher-layer parameter (e.g., InvalidSymbolPattern) may provide a symbol-level bitmap over one or two slots, so that an invalid symbol may be configured. An indication of 1 in the bitmap may represent an invalid symbol. Additionally, the periodicity and pattern of the bitmap may be configured via a higher-layer parameter (e.g., periodicityAndPattern). If a higher-layer parameter (e.g., InvalidSymbolPattern) is configured, and parameter InvalidSymbolPatternIndicator-ForDCIFormat0_1 or InvalidSymbolPatternIndicator-ForDCIFormat0_2 indicates '1', the UE may apply an invalid symbol pattern, and the UE may not apply the invalid symbol pattern if the parameter indicates '0'. Alternatively, if a higher-layer parameter (e.g., InvalidSymbolPattern) is configured, and parameter InvalidSymbolPatternIndicator-ForDCIFormat0_1 or InvalidSymbolPatternIndicator-ForDCIFormat0_2 is not configured, the UE may apply the invalid symbol pattern.
- After invalid symbols are determined in each nominal repetition, the UE may consider, as valid symbols, symbols other than the determined invalid symbols. If each nominal repetition includes one or more valid symbols, the nominal repetition may include one or more actual repetitions. Here, each actual repetition may indicate symbols actually used for repeated PUSCH transmission among the symbols configured as nominal repetition, and may include a set of consecutive valid symbols available for PUSCH repetition type B within one slot. The UE may skip actual repetition transmission if an actual repetition having one symbol is configured as valid, except for the configured symbol length of the UL data channel being 1 (L=1). Based on Table 8 below, the redundancy version may be applied according to a redundancy version pattern configured for each nth actual repetition.

TB processing over multiple slots (TBoMS)

- As described above, within one slot, the start symbol and length of an UL data channel may be determined by a TDRA method, and the base station may transmit the number of repeated transmissions to the UE via higher layer signaling (e.g., RRC signaling) or L1 signaling (e.g., DCI). In an embodiment, the TBS may be determined using an N value greater than or equal to 1, which is the number of slots configured as numberOfSlotsTBoMS.
- The UE may transmit a UL data channel, which has the same start symbol and length as the configured UL data channel, in consecutive slots, based on the number of slots for determination of the TBS received from the base station and the number of repeated transmissions. In an embodiment, the UE may skip UL data channel transmission in a slot configured as downlink by the base station for the UE, or if at least one symbol among the symbols in a slot configured to the UE for repeated transmission of the uplink data channel is configured as downlink. For example, it may be included in the number of repeated transmissions of an uplink data channel but may be not transmitted.

On the other hand, the UE supporting Rel-17 repeated UL data transmission may determine a slot usable for repeated UL data transmission as an available slot, and may count the number of transmissions during repeated UL data channel transmission in a slot determined to be an available slot. If repeated UL data channel transmission is skipped in a slot determined to be an available slot, the UE may perform repeated transmission via a slot available for transmission after postponement. In an embodiment, based on Table 12 below, the redundancy version may be applied according to a redundancy version pattern configured for each nth PUSCH transmission occasion.

[Table 12]

| $rv_{id}$ indicated by the DCI scheduling the PUSCH | $rv_{id}$ to be applied to $n$th transmission occasion (repetition Type A) or TB processing over multiple slots) or $n$th actual repetition (repetition Type B) | | | |
|---|---|---|---|---|
| | $((n-(n \bmod N))/N)$ mod 4 = 0 | $((n-(n \bmod N))/N)$ mod 4 = 0 | $((n-(n \bmod N))/N)$ mod 4 = 0 | $((n-(n \bmod N))/N)$ mod 4 = 0 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Next, a description will be given of a method for determining uplink available slots for single or multiple PUSCH transmissions in the 5G system.

In an embodiment, if the UE is configured with AvailableSlotCounting set to "enable", the UE may determine an available slot for PUSCH repetition type A and TBoMS PUSCH transmission based on tdd-UL-DL-ConfigurationCommon, tdd-UL-DL-ConfigurationDedicated, ssb-PositionsInBurst, and a TDRA information field value. That is, if, in a slot for PUSCH transmission, at least one symbol configured for PUSCH via TDRA overlaps with at least one symbol having a purpose other than UL transmission, this slot may be determined to be an unavailable slot.

Next, a description will be given of a method for reducing the SSB density through dynamic signaling for energy saving of the base station in a 5G system.

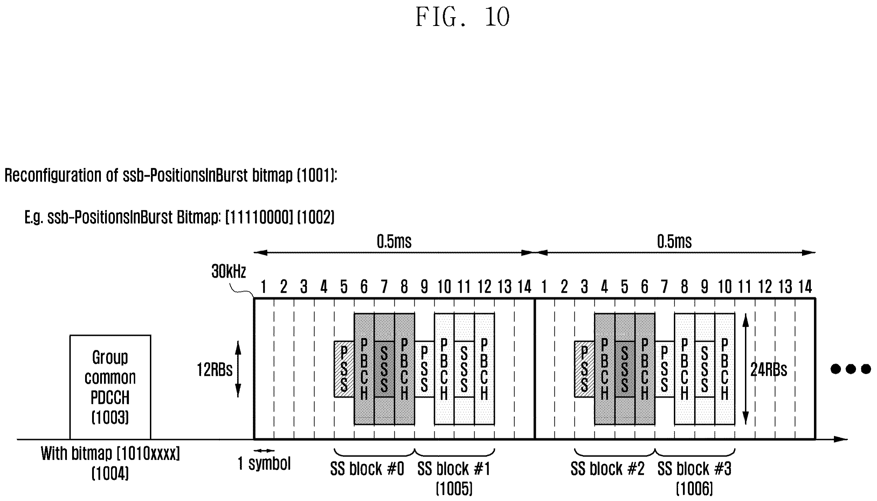

FIG. 10 is a diagram illustrating a method for reconfiguring SSB transmission through dynamic signaling in a wireless communication system, to which an embodiment of the disclosure is applicable.

With reference to FIG. 10, the UE may be configured with ssb-PositionsInBurst = "11110000" (1002) from the base station via higher layer signaling (SIB1 or ServingCellConfigCommon); at an SCS of 30 kHz, up to two SSBs may be transmitted within 0.5 ms (or, corresponding to one slot length if one slot is composed of 14 OFDM symbols), and hence the UE may receive four SSBs within 1 ms (or, corresponding to two slot lengths if one slot is composed of 14 OFDM symbols). In this case, to reduce the density of SSB transmission for energy saving, the base station may reconfigure SSB transmission configuration information by broadcasting bitmap "1010xxxx" (1004) via group/cell common DCI 1003 having a network energy saving-radio network temporary identifier (nwes-RNTI or es-RNTI). Here, transmission of SS block #1 (1005) and SS block #3 (1006) may be canceled based on the bitmap 1004 configured via the group/cell common DCI. FIG. 10 illustrates a method 1001 of reconfiguring SSB transmission via bitmap-based group/cell common DCI.

Additionally, the base station may reconfigure ssb-periodicity configured via higher layer signaling based on the group/cell common DCI. In addition, timer information for indicating the time point to apply the group/cell common DCI may be additionally configured, and during the configured timer, SSB transmission may be performed based on SSB transmission information reconfigured via the group/cell common DCI. Later, when the timer expires, the base station may operate based on the previous SSB transmission information configured via higher layer signaling. This may change the setting from normal mode to energy saving mode via the timer, and the SSB configuration information may be reconfigured accordingly. As another method, the base station may configure the UE with the time point and period of applying the SSB configuration information reconfigured via the group/cell common DCI by using offset and duration information. Here, the UE may not perform SSB monitoring for the duration from the time point obtained by applying the offset to the moment of receiving the group/cell common DCI.

Next, a description will be given of a method for BWP or BW adaptation through dynamic signaling for energy saving in the base station in a 5G system.

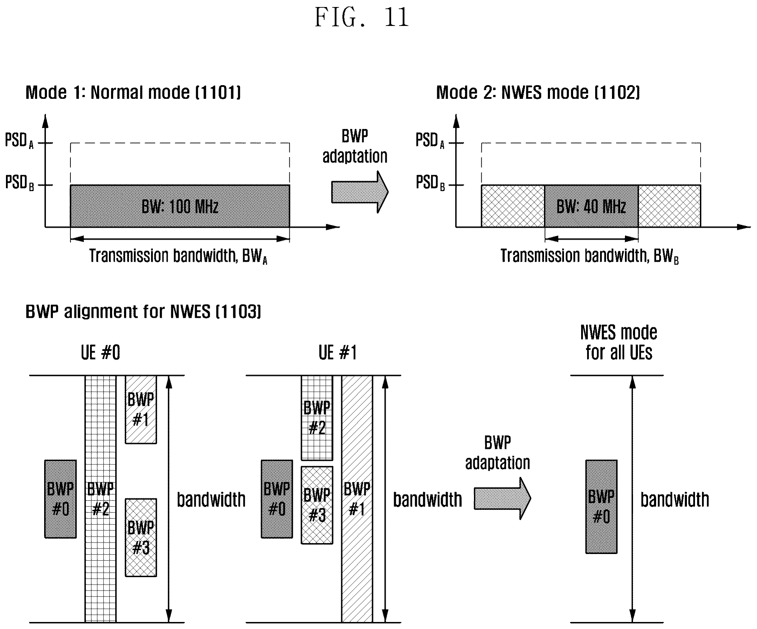

FIG. 11 is a diagram illustrating a method for BWP and BW reconfiguration through dynamic signaling in a wireless communication system, to which an embodiment of the disclosure is applicable.

With reference to FIG. 11, the UE may operate with a BWP (or BW) activated via higher layer signaling and L1 signaling from the base station (1101). For example, the UE may operate over a full BW of 100MHz with fixed power $PSD_B$. In this case, for energy saving, the base station may adjust the BW and BWP so as to activate a narrower BW of 40 MHz for the UE with the same power $PSD_B$ (1102). Here, the adjustment of the BW or BWP for energy saving of the base station may be configured to equalize the UE-specifically configured BWP and BW settings through group common DCI and cell specific DCI (1103). For example, UE#0 and UE#1 may have different BWP configurations and positions. In this case, in order for the base station to save energy by reducing the BW in use, BWs and BWPs of all UEs may be set to be equal. Here, one or more BWPs or BWs may be configured in the operation for energy saving, which may be used to configure a UE group-specific BWP.

Hereinafter, embodiments of the disclosure will be described in detail with reference to the attached drawings. In the following description, the base station is a main agent that allocates resources to UEs, and may be at least one of gNode B, gNB, eNode B, Node B, BS, wireless access unit, base station controller, or node on the network. The terminal may be a UE (user equipment), an MS (mobile station), a cellular phone, a smartphone, a computer, or a multimedia system capable of performing a communication function. In the following description, the embodiments of the disclosure will be described by using the 5G system as an example, but the embodiments of the disclosure may be applied to other communication systems having similar technical backgrounds or channel configurations. For example, LTE or LTE-A mobile communication and mobile communication technology to be developed after 5G may be included here. Therefore, those skilled in the art may understand that the embodiments of the disclosure can be applied to other communication systems with some modifications within the scope of the disclosure. For example, the contents of the disclosure can be applied to frequency division duplex (FDD), time division duplex (TDD), and cross division duplex (XDD) systems.

Additionally, in describing the disclosure, if it is judged that a detailed description of a related function or configuration may unnecessarily obscure the subject matter of the disclosure, the detailed description will be omitted. Further, those terms described below are terms defined in consideration of their functions in this disclosure, and may vary depending on the user, the intention of the operator, or the custom. Hence, their meanings should be determined based on the contents throughout this specification.

In describing the disclosure, higher layer signaling may be a signaling corresponding to at least one or a combination of the following signalings.

- MIB (master information block)
- SIB (system information block) or SIB X (X=1, 2, ...)
- RRC (radio resource control)
- MAC (medium access control) CE (control element)

In addition, L1 signaling may be a signaling corresponding to at least one or a combination of signaling methods using the following physical layer channels or signalings.

- PDCCH (physical downlink control channel)
- DCI (downlink control information)
- UE-specific DCI
- Group common DCI
- Common DCI
- Scheduling DCI (e.g., DCI used for scheduling downlink or uplink data)
- Non-scheduling DCI (e.g., DCI not intended for scheduling downlink or uplink data)
- PUCCH (physical uplink control channel)
- UCI (uplink control information)

In the following disclosure, the above examples are described through a number of embodiments, but they are not independent, and one or more embodiments may be applied simultaneously or in combination. In the following description of the disclosure, expressions such as "a specific device/component performs only a specific operation, a specific function, or a specific role" are not necessarily interpreted as limiting the specific device/component to performing only the specific operation/function/role, but they may imply that other operations/functions/roles corresponding to the specific operation/function/role of the specific device/component described in the description of the disclosure are performed by other devices/components. In other words, a specific device/component may not only perform a specific operation/function/role, but may also perform other operations/functions/roles in addition to the specific operation/function/role.

In the following description of the disclosure, CPRI or eCPRI blocks are examples, and blocks according to other standards or technologies may also be utilized.

Next, a description will be given of a method for DRX alignment through dynamic signaling for energy saving of the base station in a 5G system.

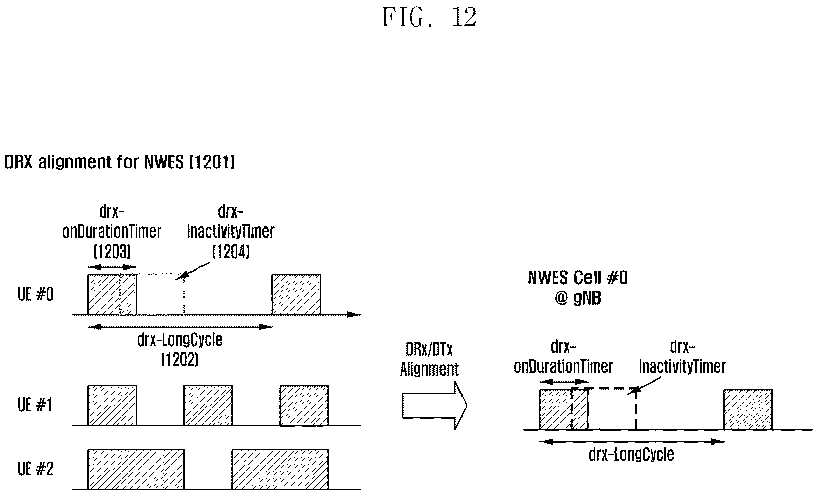

FIG. 12 is a diagram illustrating a method for DRX reconfiguration through dynamic signaling in a wireless communication system, to which an embodiment of the disclosure is applicable.

With reference to FIG. 12, the base station may configure DRX in a UE-specific manner via higher layer signaling. For example, UEs may be configured with different values for drx-LongCycle or drx-ShortCycle, drx-onDurationTimer, and drx-InactivityTimer. Later, for energy saving, the base station may configure the UE-specific DRX configuration in a UE group-specific or cell-specific manner via L1 signaling (1201). Thereby, the base station may achieve the same energy saving effect as the UE saves power through DRX.

Next, a description will be given of discontinuous transmission (DTx) operation to reduce energy consumption of the base station in a 5G system.

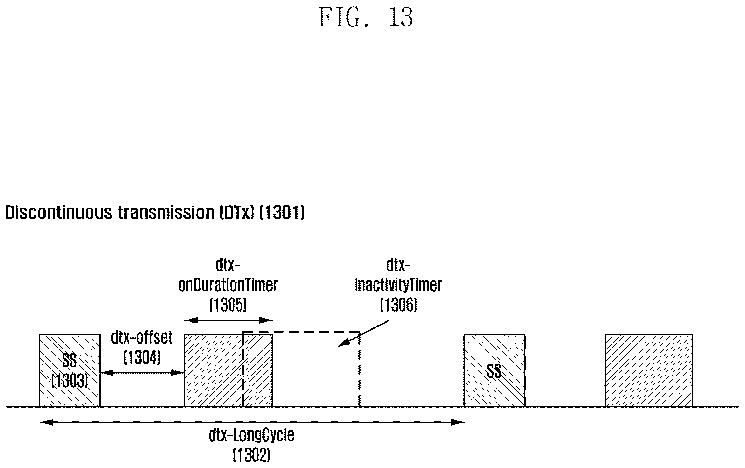

FIG. 13 is a diagram illustrating a DTx scheme for base station's energy saving, to which an embodiment of the disclosure is applicable.

With reference to FIG. 13, for energy saving, the base station may configure discontinuous transmission (DTx) via higher layer signaling (new SIB for DTx or RRC signaling) and L1 signaling (DCI). Here, the base station may configure dtx-onDurationTimer 1305 for transmitting a PDCCH scheduling a DL SCH for DTx operation or an RS for carrying out RRM measurement, beam management and pathloss measurement, configure dtx-InactivityTimer 1306 for receiving a PDSCH after reception of the PDCCH scheduling the DL SCH, configure synchronization signal (SS) 1303 for synchronization before dtx-onDurationTimer, configure dtx-offset 1304 for setting an offset between dtx-onDurationTimer and the SS configuration, and configure dtx-(Long)Cycle 1302 for periodic DTx operation based on the configuration information described above. Here, dtx-cycle may be set in plurality as long cycle and short cycle. During DTx operation, the base station considers the off (or inactive) state of the transmitting end, and hence may not transmit DL CCH, SCH, and DL RS. That is, during DTx operation, the base station may transmit downlink (PDCCH, PDSCH, RS, etc.) only during SS, dtx-onDurationTimer and dtx-InactivityTimer. Here, as additional information about the configured SS, SS-gapbetweenBurst or number of SS bursts may be additionally configured.

Next, a description will be given of a method for activating the base station through a gNB wake-up signal (WUS) during inactive mode of the base station for reducing energy consumption in a 5G system.

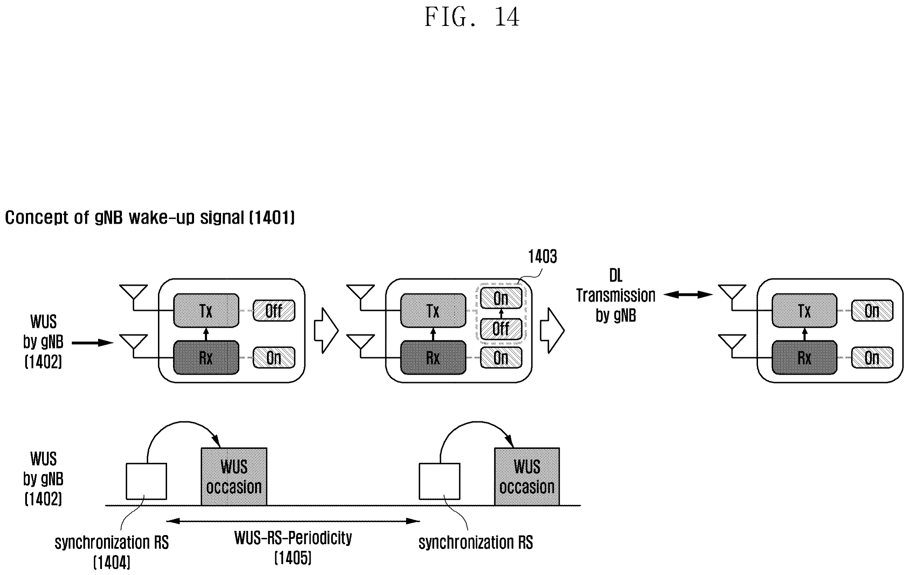

FIG. 14 is a diagram for describing base station operation according to a gNB wake-up signal, to which an embodiment of the disclosure is applicable.

With reference to FIG. 14, for energy saving, the base station may maintain the transmitting end in an off (or inactive) state during inactive mode (or, sleep mode). Thereafter, the base station may receive a gNB wake-up signal from the UE to activate the base station in sleep mode (1402). Thereafter, upon receiving a WUS from the UE via the Rx end, the base station may change the Tx end to an on (or active) state (1403). Then, the base station may perform DL transmission to the UE. Here, the base station may proceed with synchronization after Tx on and perform control and data transmission. In addition, various uplink signals, such as physical random access channel (PRACH), scheduling request (SR PUCCH), or PUCCH including Ack may be considered as a gNB WUS. Through the above method, the base station may save energy, and the UE may improve latency at the same time.

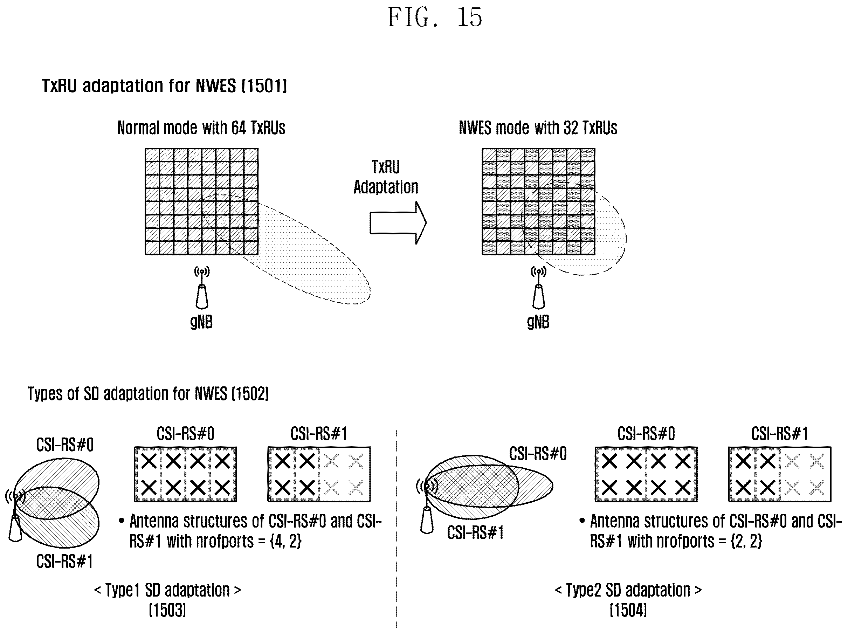

In this case, the base station may configure a WUS occasion for receiving a gNB WUS and a Sync RS for UE synchronization before transmitting a gNB WUS. Here, SSB, TRS (tracking reference signal), light SSB (PSS+SSS, i.e. SSB composed of PSS and SSS), consecutive SSBs, or new RS (continuous PSS + SSS) may be considered as Sync RS, and PRACH, PUCCH with SR, or sequence-based signals may be considered as a WUS. Sync RS 1504 for enabling the UE to activate the base station in inactive mode for energy saving, and WUS occasion for receiving a WUS, may be repeatedly transmitted with a WUS-RS periodicity 1405. In the embodiment of FIG. 15, 1-to-1 mapping between Sync and WUS occasion is described as an example, but the disclosure is not limited thereto. For example, Sync and WUS occasion may be in N-to-1, 1-to-N, or N-to-M mapping relationships.

Next, a description will be given of a method for dynamically turning on/off spatial domain elements (i.e., antenna, PA or TxRUs (transceiver units or transmission radio units)) of the base station to save base station's energy in a 5G system.

FIG. 15 is a diagram illustrating an antenna adaptation method of the base station for energy saving in a wireless communication system according to an embodiment of the disclosure.

With reference to FIG. 15, the base station may adjust the Tx antenna port per RU (radio unit) for energy savings (network energy savings, NWES) (1501). For example, since the base station's PA accounts for most of the base station's energy consumption, the base station may turn off the Tx antenna to save energy. Here, the base station may refer to or use the UE's RSRP (reference signal received power), CQI (channel quality indicator), and RSRQ (reference signal received quality) to determine whether the Tx antenna can be turned off. The base station may perform Tx transmission by adjusting the number of activated Tx antennas for each UE group or UE. At this time, the base station may configure the UE with information including at least one of beam information based on the antenna on/off state or reference signal information (e.g., at least one of CSI resource, CSI resource set, or CSI report) via higher layer signaling (e.g., RRC signaling) or DCI signaling. Additionally, the base station may configure different antenna information for each BWP, allowing antenna information reconfiguration upon BWP switching. Further, the base station may receive CSI feedback from the UE to evaluate the possibility of SD adaptation. The base station may determine SD adaptation (based on CSI feedback). The base station may receive multiple feedbacks from the UE based on antenna structure hypotheses of multiple antenna patterns for SD adaptation.

More specifically, the base station may apply multiple types (e.g., two types) of SD adaptation for energy saving (1502). For example, the multiple types may include type 1 SD adaptation 1503 and type 2 SD adaptation 1504.

When type 1 SD adaptation 1503 is applied, the base station may adapt the number of antenna ports while maintaining the number of physical antenna elements per antenna port (i.e., logical port). Here, RF characteristics (e.g., TX power, beam) per port may be identical. Hence, the UE may measure the CSI-RS of the same port in combination during CSI measurement (e.g., L1-RSRP (layer 1-RSRP), L3-RSRP (layer 3-RSRP)).

As another method, when type 2 SD adaptation 1504 is applied, the base station may have the same number of antenna ports (i.e., logical ports) and turn on/off the physical antenna elements per port (1504). Here, RF characteristics per port may be varied. During CSI measurement, the UE may perform separate measurements on individual CSI-RSs of the same port. The base station may save energy through one or more of multiple SD adaptation methods including the two types of SD adaptation methods described above.

Through the above-described methods according to an embodiment, the energy consumption of the base station may be reduced. Further, the methods according to an embodiment may be configured/used alone or be configured/used simultaneously in combination.

Next, a description will be given of the concept of new cells with different features to reduce energy consumption of the base station in a 5G or 6G system.

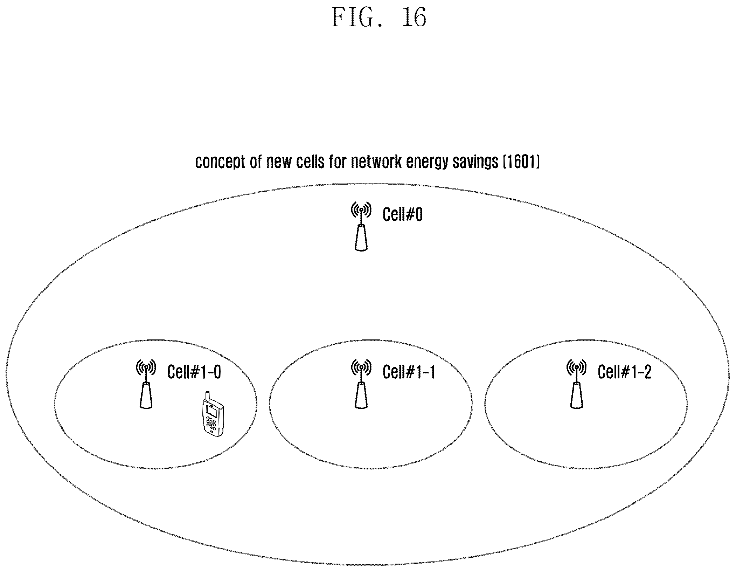

FIG. 16 is a diagram illustrating the concept of cells having different functions for energy saving in a wireless communication system according to an embodiment of the disclosure.

With reference to FIG. 16, the base station may define/configure cell#0 and cell#1-X (e.g., cell#1-0, cell#1-1, cell#1-2) that have different functions.

Cell type 1 (e.g., cell#1-X (at least one of cell#1-X), access/sync cell) is intended for UE mobility, synchronization, and/or initial access operations. Packet transmission for traffic processing may not occur in cell type 1, or may occur only for limited packets in cell type 1. More specifically, the base station may periodically transmit SSB and/or a new synchronization signal (SS) to UEs in idle/inactive RRC states via cell#0, and may transmit paging and/or system information. Configuration information about cell#1-x capable of processing packets may be transmitted through the paging and/or system information.

Cell type 2 (e.g., cell#1-X (at least one of cell#1-X), data cell) may be used to process packets of the UE and/or base station. More specifically, the base station may process packets of a UE in RRC connected state via cell1-X. Hence, it may be selectively activated on-demand when there is a packet according to traffic. If the base station initially activates cell1-X for packet processing, the base station transmits SS (e.g., SSB, CSI-RS, TRS, or new SS) to synchronize the UE with cell1-X; the UE that has performed initial access to or synchronized with cell#0 may receive SS of cell1-X and may handover to cell1-X. Here, cell1-X, which should be activated on-demand, may be determined by the base station serving cell#0, the base station serving cell#1-X, and/or the UE attached to cell#0.

One base station may support either cell type 1 or cell type 2, or may support both cell type 1 and cell type 2. Additionally, one or more type 2 cells may be connected to one or more type 1 cells. Further, coordination between type 1 cells may occur to activate a type 2 cell.

Through the above methods and the new cell concept, the energy consumption of the network system can be minimized.

Through the embodiments of the disclosure, a cell selection method may be provided for appropriate packet processing for a UE based on traffic in a cell deployment situation involving cells with different functions. More specifically, a cell selection method and signaling method by the base station or UE may be provided.

Next, a description will be given of a cell selection method and signaling procedure for energy-saving at the base station in a 5G or 6G system. Through the following method, the base station can activate an appropriate data cell for the UE, thereby maximizing the energy saving effect and ensuring service performance.

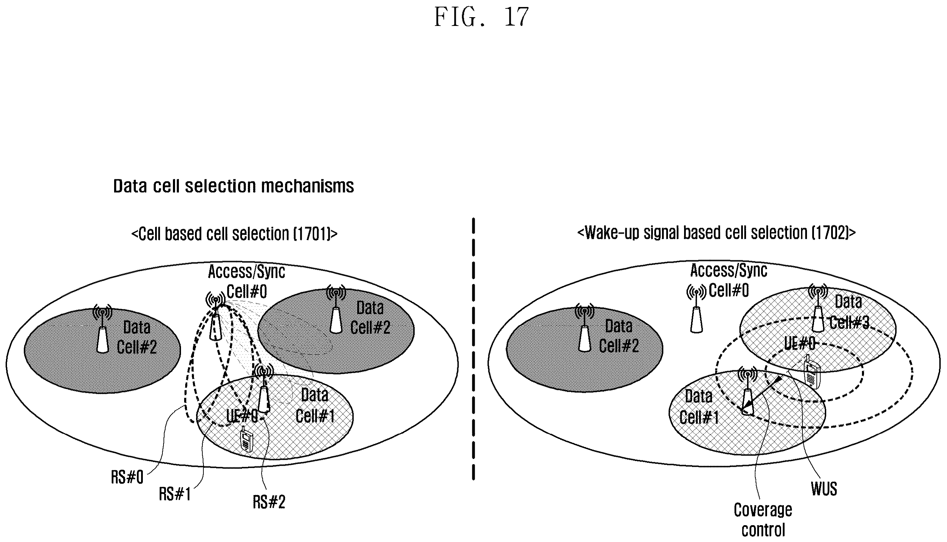

FIG. 17 is a diagram illustrating a method for on-demand cell selection in a wireless communication system according to an embodiment of the disclosure.

With reference to FIG. 17, according to an embodiment, type 2 cells (e.g., data cells) capable of packet transmission may be configured to process traffic within the coverage of a type 1 cell (e.g., access/sync cell) that performs mobility and initial access functions. This may be for energy saving. Within the coverage of a type 1 cell that performs mobility and initial access functions, type 2 cells may be configured to handle traffic. In this case, an appropriate data cell for processing traffic after the UE accesses the access/sync cell may be selected by one or a combination of the following methods.

[Method 1] - Cell based cell selection (1701)

According to an embodiment, the base station may select an appropriate data cell for a UE based on the UE's geometry information (e.g., at least one of location information, sector information, and/or beam based direction information). For example, when a UE initially accesses access/sync cell#0, the UE may handover to or access an appropriate data cell among data cells#1 to #3 within access/sync cell#0 for packet processing. The access cell base station (the base station corresponding to the access cell, e.g., the base station operating the access cell) may select an appropriate data cell for the UE and activate the selected data cell. For example, beam information may be used by the base station to determine an appropriate cell for the UE. For example, the base station may select an appropriate cell by using beam information (beam direction information) for synchronization of the UE with the access/sync cell. For example, the beam for synchronization may correspond to the RS used for synchronization in the access/sync cell, such as best SSB or CSI-RS. For example, if the beam for synchronization is RS#0, RS#1 or RS#2, the base station may select/determine data cell#1 among data cell#1, #2, #3 in correspondence to the direction and/or direction information of the corresponding beam (RS#0, RS#1, or RS#2).

On-demand cell selection based on an access/sync cell base station can be performed through method 1 described above.

[Method 2] - Wake-up signal based cell selection (1702)

According to an embodiment, to process traffic, the UE may activate a data cell for transmitting and receiving packets via an uplink wake-up signal (WUS). For example, the UE having accessed access/sync cell#0 may activate a neighboring data cell (e.g., data cell #1 and/or data cell #3) to process traffic. Here, the UE may transmit a WUS for data cell activation.

For example, the WUS may be considered sequence-based or may be considered as one or more of PUCCH, PUSCH, PRACH, PSS, SSS, SRS, and other RS (reference signal). A data cell base station (base station corresponding to a data cell, e.g., base station operating data cells) may have a separate WUS receiver (WUR) for receiving a WUS. Additionally, the UE may repeatedly transmit a WUS and/or retransmit a WUS. The UE may determine the transmission power and carrier frequency of a WUS to transmit the WUS based on information received through the access/sync cell. At this time, the data cell base station having received the WUS from the UE may become active and transmit an SS to the UE, and may then transmit and receive data for packets. The data cell-related information that the UE receives through the access/sync cell may include, for example, at least one piece of the following information.

- WUS occasion duration per carrier: WUS monitoring duration corresponding to carrier
- Periodicity of WUS occasion: 20 ms or 40 ms like as RACH occasion periodicity
- Start of WUS occasion per WUS design: system frame number (SFN)
- WUS response window: symbol level, slot level or time level value
- Carrier frequency and Carrier frequency list (for WUS)
- Carrier frequency and Carrier frequency list (for WUS response)
- Data cell ID or physical cell ID (PCI) of data cell
- Time adjustment group between access/sync cell and data cell
- Data cell position information
- Number of WUS repetitions
- Number of WUS retransmissions
- Additional WUS occasion duration for WUS repetition
- WUS response transmission power

According to an embodiment, after receiving a WUS, the activation of a data cell or access cell may be determined based on measurement information such as the reference signal received power (RSRP) of the WUS; and/or all data cells having received a WUS may be activated, and the UE may then receive SS transmitted from the activated data cells to select an appropriate data cell. For example, the UE may measure SS transmitted from data cells and select a data cell whose RSRP or RSRQ (reference signal received quality) exceeds a specific threshold or is best RSRP or RSRQ.

According to one or more of the above methods, energy of an inactive base station can be saved by selecting an appropriate data cell for the UE, and the UE may receive a service through the selected data cell.

According to an embodiment of the disclosure, a signaling procedure for WUS-based data cell selection can be provided.

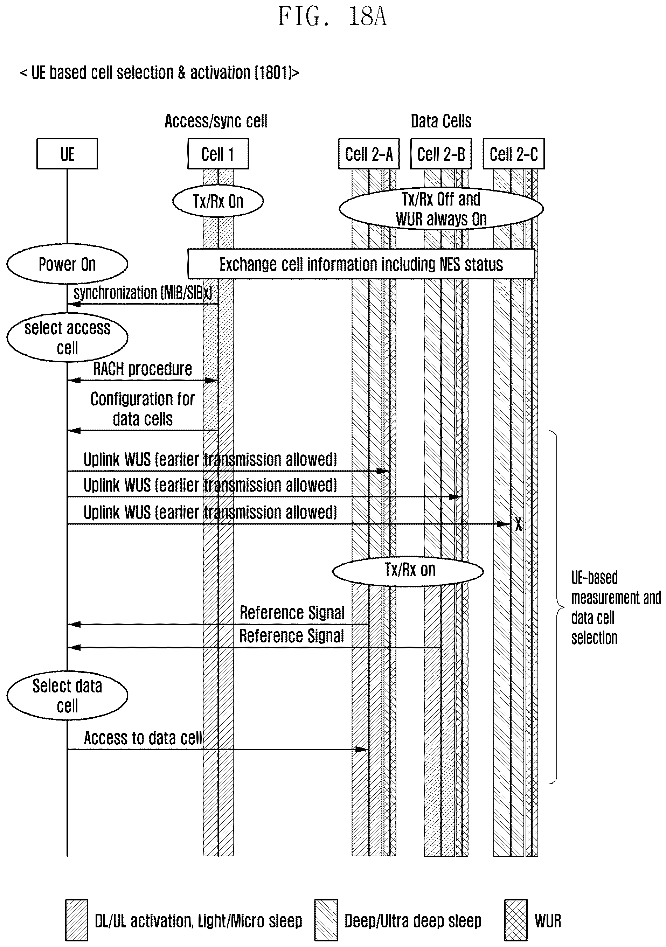

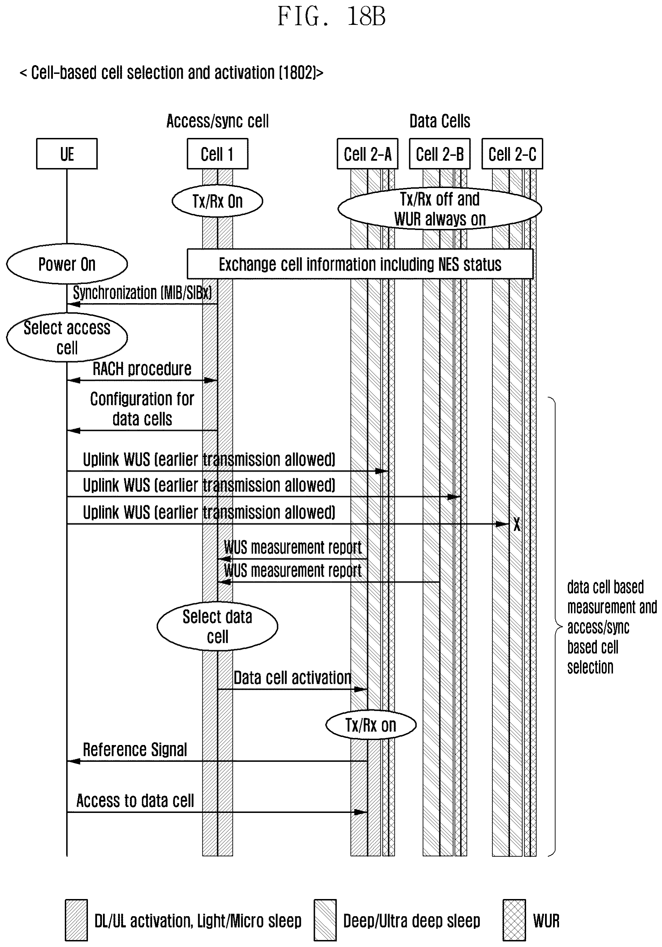

FIG. 18A and FIG. 18B are a diagram illustrating a procedure for on-demand cell selection in a wireless communication system according to an embodiment of the disclosure.

With reference to FIG. 18A, according to an embodiment, the UE may perform data cell selection through WUS transmission (UE-based cell selection and activation 1801). The sync/access cell may always be active (Tx/Rx on, which may mean power-on of the transmission RF and reception RF devices including the modem); for the data cell such as cell2-A, cell2-B or cell2-C, its RF for transmission and reception may be powered off, but its WUR may always be on. Here, power off may be understood as deep sleep /ultra-deep sleep. Deep sleep/ultra-deep sleep refers to powering off most components of the base station. For example, the modem, backhaul, memory, and cooler may all be turned off. In addition, the sync/access cell and data cells may exchange information for network energy saving. Information for network energy saving that is exchanged between the sync/access cell and the data cell may include, for example, at least one of a network energy saving scheme applied to each cell, information about WUS that each cell can support, or at least one piece of information included in the data cell-related information described above.

The UE may perform a RACH procedure for initial access to the access/sync cell. Additionally, the UE may receive, from the access/sync cell, configuration information (e.g., one or more of WUS occasion, carrier frequency, WUS response window, and carrier frequency for WUS response) about a data cell associated with the access/sync cell. Thereafter, the UE may transmit a WUS to one or more data cells based on the received data cell configuration information. At this time, base stations having received the WUS transmitted from the UE may be activated and transmit a reference signal for synchronization (and/or access) to the UE. The UE may select a data cell based on measurements on the above reference signal and perform handover (and/or access) to the data cell.

As another method, with reference to FIG. 18B, the access cell base station may perform data cell selection based on a WUS transmitted by the UE (cell-based cell selection and activation 1802). The sync/access cell may always be active (Tx/Rx on); for the data cell such as cell2-A, cell2-B or cell2-C, its RF for transmission and reception may be powered off, but its WUR may always be on. In addition, the sync/access cell and data cells may exchange information for network energy savings. For information on network energy savings, reference may be made to the above description.

The UE may perform a RACH procedure for initial access to the access/sync cell. Additionally, the UE may receive, from the access/sync cell, configuration information for the data cell associated with the corresponding cell. Thereafter, the UE may transmit a WUS to one or more data cells based on the received data cell configuration information. At this time, data cells and/or data cell base stations having received the WUS transmitted from the UE may report WUS measurement information to the access/sync cell. Here, the data cell may determine whether to report WUS measurements based on the WUS measurements. More specifically, if the RSRP or RSRQ of the WUS measured by the data cell is lower than the threshold, the data cell may skip WUS measurement reporting. Thereafter, the sync/access cell may select a data cell and activate it. The activated data cell may transmit a reference signal for synchronization (and/or access) to the UE. The UE may receive the reference signal from the data cell and perform handover (or access) to the data cell. Alternatively, if the reception status of the reference signal is poor, the UE may transmit a WUS again. For example, if the RSRP or RSRQ of the reference signal is less than or equal to a specific threshold, the UE may transmit a WUS again, and the cell-based cell selection and activation process (1802) described above may be performed again.

Through one or more of the above methods, the UE or base station may select an appropriate data cell based on the UE's WUS. Thereby, for each UE, the best data cell is selected UE-specifically, so cell selection may be performed in consideration of the channel between the data cell and the UE. Through this, the base station may obtain energy saving effects from inactive data cells, and the UE may receive a high-performance service.

The first embodiment and second embodiment described below may be carried out separately and/or at least partially in combination. In addition, the first to fourth embodiments described below may be carried out separately and/or at least partially in combination. Further, the first to fourth embodiments described below may be carried out separately and/or in combination with at least some of the embodiments described above.

<First Embodiment>

The first embodiment of the disclosure may be for the structure of a communication system for WUS reception. As described above, an example of a receiver structure of a base station for receiving a WUS to save energy at the base station is described. More specifically, a novel base station structure is proposed by considering the radio frequency front-end (RF-FE) part of the base station (including power amplifier/low noise amplifier (PA/LNA), duplexer, and filter, for example) and the digital front-end (DFE) part (including functions such as automatic gain control (AGC), DPD, and CFR, for example). According to an embodiment, a base station (i.e., radio unit (RU) or RU + distributed unit (DU) (RU and DU) or transmission and reception point (TRP)) including a receiver for receiving a WUS may be designed by utilizing one or a combination of the base station structures to be described below.

[Structure 1]

Structure 1 according to an embodiment provides a system structure composed of dual receivers having a main radio (MR) for transmitting and receiving existing channels and signals and a wake-up signal receiver (WUR). More specifically, the RU with dual receivers may maintain a connection with the DU. This means that even if a WUS is received, the MR is not immediately activated. Instead, the WUS measurement is reported to the DU through a separate WUS controller, allowing the DU to activate a specific RU (i.e., base station or cell).

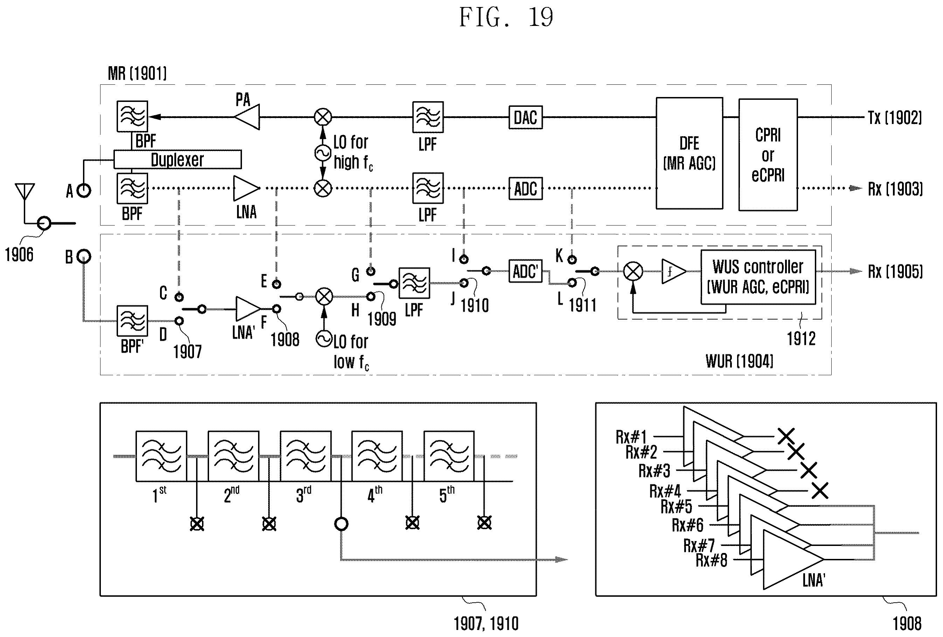

FIG. 19 is a diagram illustrating a new structure of the wireless communication system according to an embodiment of the disclosure. FIG. 19 may be understood as, but not limited to, a structure of the base station or a structure of the RU of the base station according to an embodiment of the disclosure.

The components illustrated in the drawing are exemplary representations of the functions of the transceiver structure. The duplexer may be used to split the transmitting end and the receiving end by using antennas such as Tx and Rx or WUR Rx. The bandpass filter (BPF) and low-pass filter (LPF) may be used to detect a desired signal and remove noise by receiving only signals of a specific band. Additionally, the power amplifier (PA) and low noise amplifier (LNA) may amplify the magnitude of signals to be transmitted or being received. The local oscillator (LO) is used for down conversion to a specific frequency and for I/Q (in-quadrature phase) (complex) conversion, and may also be used for the synchronization frequency of the overall system. Thereafter, the DAC and ADC are used for conversion between analog and digital signals, and are used at the DFE to process a digital signal. At this time, the DFE may perform crest factor reduction (CFR) to improve PAPR and digital pre-distortion (DPD) to enhance PA nonlinearity. Additionally, the DFE may perform an automatic gain control (AGC) function that controls the gain of the received signal. CPRI and eCPRI may then be used to connect the RU and the DU. The above description describes representative functions of the configuration and is not limited to this function. The above description of the elements may be equally applied to an embodiment of the disclosure described with reference to drawings other than FIG. 19.

With reference to FIG. 19, the base station may include a transmitter (Tx) 1902 and a receiver (Rx) 1903 capable of transmitting and receiving channels or signals for synchronization and packet transmission (1901). Additionally, the base station may include a receiver 1905 for a specific wake-up signal for activation or deactivation (1904). In the Tx 1902, the signal path may pass through CPRI or eCPRI block, DFE (MR AGC), DAC (digital analog converter), LPF, LO, PA, BPF, and duplexer to reach the antenna. In the Rx 1903, the signal path may pass through antenna, duplexer, BPF, LNA, LO, LPF, ADC, DFE, and CPRI or eCPRI block. In the Rx 1905, the signal path may pass through antenna, BPF, LNA, LO, LPF, ADC, DFE, and WUS controller (WUR AGC, eCPRI). Additionally, at least some of the elements shown in the MR 1901 and the elements shown in the WUR 1904 may be shared elements rather than separate elements.

FIG. 19 provides a block diagram illustrating exemplary functions of a transceiver. More specifically, in the system structure with dual receivers, a switch can be implemented to share an element that performs a specific identical function. Here, impedance matching and calibration functions for performance degradation due to a switch may be added through a separate feedback circuit for each DFE or switch. More specifically, the receiver structure of the base station according to an embodiment may be implemented with one or a combination of the following structures.

[Structure 1-1]

The dual receivers may share an antenna being a passive element. Here, a switch 1906 may be connected to either A or B (point A or point B) depending on wake-up signal reception or synchronization and packet transmission/reception in the dual receivers. When connected to B, the base station may perform operations to receive a wake-up signal. When connected to A, the base station may perform operations for synchronization, and packet transmission and reception. This allows for more efficient implementation of the base station's size due to the antenna.

[Structure 1-2]

The dual receivers may share a band pass filter (BPF) or a low pass filter (LPF). More specifically, in the case of a band pass filter or low pass filter, the dual receivers may be designed as an $N^{th}$-order filter using amplifiers to provide gain for signal strength. Here, depending on the performance requirements for wake-up signal reception or synchronization and packet transmission and reception, the switch may be connected from the middle of the $N^{th}$-order filter so as to operate using only $N^{th}$- or lower order filters (1907, 1910). For example, the switch may be connected to operate at least some filters of the $N^{th}$-order filter. For example, if designed as a $5^{th}$-order filter including the first to fifth filters, the switch may be connected between individual filters. For example, the switch may be connected between the first and second filters, between the second and third filters, between the third and fourth filters, between the fourth and fifth filters, and after the fifth filter. For example, if the switch is connected between the third and fourth filters, the first to third filters may be operated. This allows the base station to receive wake-up signals, satisfy requirements, and process synchronization and packets while using less energy in the filter.

[Structure 1-3]

The dual receivers may share a low-noise amplifier (LNA). For example, for an RU (or massive MIMO unit (MMU)) with 8 or 64 LNAs to support 8Tx8Rx (8 transmit, 8 receive MIMO) or 64Tx64Rx (64 transmit, 64 receive MIMO), the receiver that receives only a wake-up signal may operate by sharing a smaller number of LNAs for efficient energy savings (1908). The structure for partially sharing LNAs may be fixed in the initial hardware design and/or may be implemented so that the number of LNAs is set based on configuration information via a configurable switch. For example, if the LNA is composed of eight RUs, RUs #5 through #8 may be operated. This allows the base station to save costs and improve energy efficiency by sharing LNAs.

[Structure 1-4]

The dual receivers may share a mixer and local oscillator (LO). When the wake-up signal may be used for the same carrier frequency or down-conversion or direct conversion via the LO of the receiver used for synchronization and packet processing, the mixer and LO may be shared via the switch (1909). On the other hand, if the wake-up signal is transmitted over a lower carrier frequency or is non-coherent (asynchronous), a lower-spec LO such as an LO that supports only low frequencies or has low resolution may be used for down-conversion and direct-conversion. This reduces power consumption in the mixer and LO. For low-spec LOs, the low-spec LO may be applied regardless of the wake-up signal to save energy.

[Structure 1-5]

The dual receivers may share an analog-to-digital converter (ADC). The analog wake-up signal may be converted into a digital signal by utilizing the ADC of the receiver for synchronization and packet processing. This enables implementation of a receiver that receives a wake-up signal without separate ADC implementation (1911). Thereby, it is possible to reduce the cost and size of the base station.

As with the above structures, the receiver for receiving a wake-up signal can be implemented by reusing elements used for synchronization and packet processing. That is, as described above, the WUR can be implemented by sharing some elements of the NR MR receiver. The WUR may include some elements shared with the NR MR.

Here, for non-shared components (e.g., components for the WUR applied to the non-shared portion of the MR), a BFP, LNA, LO, mixer, LPF, and ADC redesigned solely for the purpose of receiving a wake-up signal may be utilized. Thereafter, a WUS controller for WUS detection may be included in the RU, depending on the design (e.g., sequence or format) of the wake-up signal. The WUS controller may identify the WUS sequence or ID through WUS correlation and then determine whether a WUS is detected using a comparator based on the correlation. In this case, the RU may support the common public radio interface (CPRI) or the enhanced common public radio interface (eCPRI) for connection with the DU, and for this purpose, the WUS controller may individually support eCPRI. Additionally, separate AGC functions may be implemented in the WUS controller to process inputs received through different receivers. The digital processing functions implemented through the FPGA or SoC (system on chip) described above may follow the detailed description of the second embodiment below. Further, the structure described above does not limit the scope of the disclosure to one embodiment, and may be designed as a new receiver (e.g., envelope detector) depending on the wake-up signal.

Using the RU with dual receivers, a WUS may be received and WUS measurements may be reported to the DU through the CPRI or CPRI of the WUS controller. Thereafter, the DU may activate the optimal RU based on its determination. Through this feature, the base station can provide appropriate cell selection to UEs through the DU and obtain energy-saving benefits. Further, positioning and mobility of a UE in the access cell can be supported through the WUS.

[Structure 2]

Structure 2 according to an embodiment provides a system structure composed of dual receivers including a main radio (MR) for transmitting and receiving existing channels and signals and a wake-up signal receiver (WUR). More specifically, the RU with dual receivers may maintain a connection with the DU. This means that even if a WUS is received, the MR is not immediately activated. Instead, the WUS measurement is reported to the DU, allowing the DU to activate a specific RU (i.e., base station or cell). Here, the same eCPRI or CPRI can be reused for the connection between the RU and the DU.

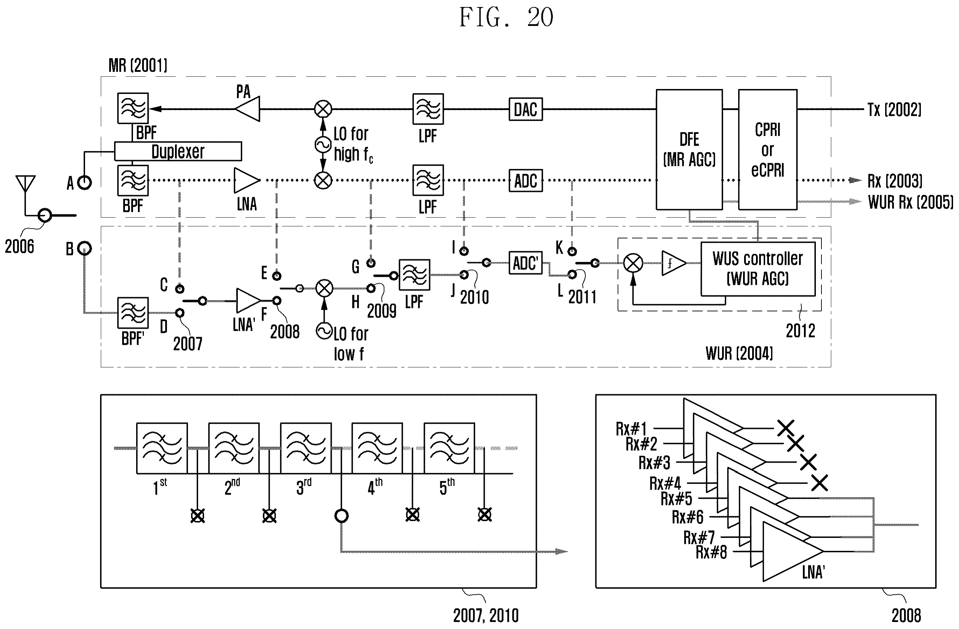

FIG. 20 is a diagram illustrating a new structure of the wireless communication system according to an embodiment of the disclosure. FIG. 20 may be understood as, but not limited to, an example of the structure of a base station or the structure of the RU of a base station according to an embodiment of the disclosure.

With reference to FIG. 20, the base station may include a transmitter (Tx) 2002 and a receiver (Rx) 2003 capable of transmitting and receiving channels or signals for synchronization and packet transmission (2001). Additionally, a receiver 2005 for a specific wake-up signal to activate or deactivate the base station may be included (2004). In the Tx 2002, the signal path may pass through CPRI or eCPRI block, DFE (MR AGC), DAC, LPF, LO, PA, BPF, and duplexer to reach the antenna. In the Rx 2003, the signal path may pass through antenna, duplexer, BPF, LNA, LO, LPF, ADC, DFE, and CPRI or eCPRI block. In the WUR Rx 2005, the signal path may pass through antenna, BPF, LNA, LO, LPF, ADC, DFE, WUS controller (WUR AGC), DFE (MR AGC), and CPRI or eCPRI block. That is, the DFE and CPRI or eCPRI block may be shared/used together/reused between the MR and the WUR. Additionally, at least some of the elements shown in the MR 2001 and the elements shown in the WUR 2004 may be shared elements rather than separate elements.

FIG. 20 provides a block diagram illustrating exemplary functions of a transceiver. More specifically, in the system structure with dual receivers, a switch can be implemented to share an element that performs a specific identical function. Here, impedance matching and calibration functions for performance degradation due to a switch may be added through a separate feedback circuit for each DFE or switch. More specifically, the receiver structure of the base station according to an embodiment may be implemented with one or a combination of the following structures.

[Structure 2-1]

The dual receivers may share an antenna being a passive element. Here, a switch 2006 may be connected to either A or B depending on wake-up signal reception or synchronization and packet transmission/reception in the dual receivers. When connected to B, the base station may perform operations to receive a wake-up signal. When connected to A, the base station may perform operations for synchronization, and packet transmission and reception. This allows for more efficient implementation of the base station's size due to the antenna.

[Structure 2-2]

The dual receivers may share a band pass filter (BPF) or a low pass filter (LPF). More specifically, in the case of a band pass filter or low pass filter, an $N^{th}$-order filter may be designed by using amplifiers to provide gain for signal strength. Here, depending on the performance requirements for wake-up signal reception or synchronization and packet transmission and reception, the switch may be connected from the middle of the $N^{th}$-order filter so as to operate using only $N^{th}$- or lower order filters (2007, 2010). For example, the switch may be connected to operate at least some filters of the $N^{th}$-order filter. For example, if designed as a 5th-order filter including the first to fifth filters, the switch may be connected between individual filters. For example, the switch may be connected between the first and second filters, between the second and third filters, between the third and fourth filters, between the fourth and fifth filters, and after the fifth filter. For example, if the switch is connected between the third and fourth filters, the first to third filters may be operated. This allows the base station to receive wake-up signals, satisfy requirements, and process synchronization and packets while using less energy in the filter.

[Structure 2-3]

The dual receivers may share a low-noise amplifier (LNA). For example, for an RU (or massive MIMO unit (MMU)) with 8 or 64 LNAs to support 8Tx8Rx or 64Tx64Rx, the receiver that receives only a wake-up signal may operate by sharing a smaller number of LNAs for efficient energy savings (2008). For example, if the LNA is composed of eight RUs, RUs #5 through #8 may be operated. This allows the base station to save costs and improve energy efficiency by sharing LNAs.

[Structure 2-4]

The dual receivers may share a mixer and local oscillator (LO). When the wake-up signal may be used for the same carrier frequency or down-conversion or direct conversion via the LO of the receiver used for synchronization and packet processing, the mixer and LO may be shared via the switch (2009). On the other hand, if the wake-up signal is transmitted over a lower carrier frequency or is non-coherent (asynchronous), a lower-spec LO such as an LO that supports only low frequencies or has low resolution may be used for down-conversion and direct-conversion. This reduces power consumption in the mixer and LO. For low-spec LOs, the low-spec LO may be applied regardless of the wake-up signal to save energy.

[Structure 2-5]

The dual receivers may share an ADC. The analog wake-up signal may be converted into a digital signal by utilizing the ADC of the receiver for synchronization and packet processing. This enables implementation of a receiver that receives a wake-up signal without separate ADC implementation (2011). Thereby, it is possible to reduce the cost and size of the base station.

As with the above structures, the receiver for receiving a wake-up signal can be implemented by reusing elements used for synchronization and packet processing. That is, as described above, the WUR can be implemented by sharing some elements of the NR MR receiver. The WUR may include some elements shared with the NR MR.

Here, for non-shared components (e.g., components for the WUR applied to the non-shared portion of the MR), a BFP, LNA, LO, mixer, LPF, and ADC redesigned solely for the purpose of receiving a wake-up signal may be utilized. Thereafter, a WUS controller for WUS detection may be included in the RU, depending on the design (e.g., sequence or format) of the wake-up signal. The WUS controller may identify the WUS sequence or ID through WUS correlation and then determine whether a WUS is detected using a comparator based on the correlation. In this case, the WUR 2004 may only receive a WUS and support detection. That is, the WUR 2004 may perform the role of receiving and detecting a WUS. Thereafter, the WUS controller may transfer WUS detection and measurement information to the MR and report the same to the DU by using CPRI or eCPRI. That is, WUS detection and measurement information may be transferred from the WUS controller to the MR (and/or the DU). For example, CPRI or eCPRI may be used for this transmission. Hence, the RU may support CPRI or eCPRI for connection with the DU by utilizing CPRI or eCPRI of the MR 2001. In addition, separate AGC functions may be implemented in the WUS controller to process inputs received through different receivers. The digital processing functions implemented through the FPGA or SoC described above may follow the detailed description of the second embodiment below. Further, the structure described above does not limit the scope of the disclosure to one embodiment, and may be designed as a new receiver (e.g., envelope detector) depending on the wake-up signal. Here, components that support shareable functions may be shared through a switch.

Using the RU with dual receivers, the base station may receive a WUS and report WUS measurements to the DU. Thereafter, the DU may activate the optimal RU based on its determination. Through this feature, the base station can provide appropriate cell selection to UEs through the DU and obtain energy-saving benefits. Further, positioning and mobility of a UE in the access cell can be supported through the WUS.

[Structure 3]

Structure 3 according to an embodiment provides a system structure composed of dual receivers including a main radio (MR) for transmitting and receiving existing channels and signals and a wake-up signal receiver (WUR). More specifically, the RU with dual receivers may maintain minimal connectivity with the DU (e.g., can only transmit and receive trigger signals, or can only receive simultaneous signals for the WUR from the DU).

More specifically, an embodiment proposes an RU that is independently activated and/or deactivated using the WUR and operates asynchronously with the DU, without the connection with the DU for synchronization and activation/deactivation of the RU as proposed in structure 1 or structure 2. Or, an embodiment provides a method that enables the RU to determine its operation by using the WUR in a mode where signals are transmitted and received only for minimal synchronization or reconnection between the RU and the DU. For example, the mode may be determined by the DU or CU. In an embodiment, when the mode is set to transmit and receive signals only for synchronization or reconnection between the RU and the DU, RU operation using the WUR may be provided. Here, a portion of eCPRI or CPRI may be reused for connectivity between the RU and the DU. This minimizes the power consumed by the FPGA or SoC for connectivity with the DU.

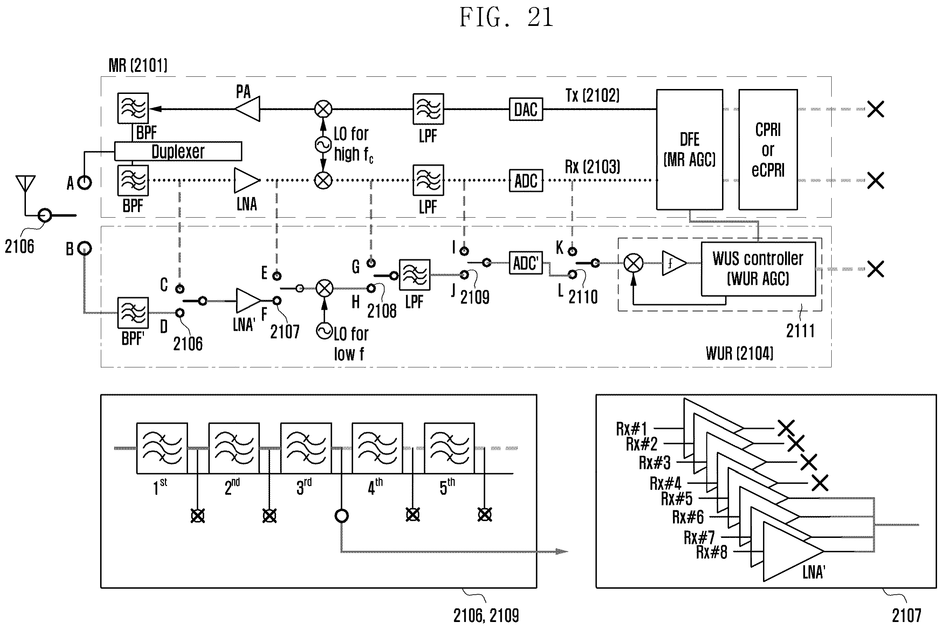

FIG. 21 is a diagram illustrating a new structure of the wireless communication system according to an embodiment of the disclosure. FIG. 21 may be understood as, but not limited to, an example of the structure of a base station or the structure of the RU of a base station according to an embodiment of the disclosure.

With reference to FIG. 21, the base station may include a transmitter (Tx) 2102 and a receiver (Rx) 2103 capable of transmitting and receiving channels or signals for synchronization and packet transmission (2101). Additionally, a receiver for a specific wake-up signal to activate or deactivate the base station may be included (2104). In the Tx 2102, the signal path may pass through DFE (MR AGC), DAC, LPF, LO, PA, BPF, and duplexer to reach the antenna. In the Rx 2103, the signal path may pass through antenna, duplexer, BPF, LNA, LO, LPF, ADC, and DFE. In the WUR Rx 2104, the signal path may pass through antenna, BPF, LNA, LO, LPF, ADC, DFE, WUS controller (WUR AGC), and DFE (MR AGC). That is, the DFE may be shared/used together/reused between the MR and the WUR. Additionally, at least some of the elements shown in the MR 2101 and the elements shown in the WUR 2104 may be shared elements rather than separate elements.

FIG. 21 provides a block diagram illustrating exemplary functions of a transceiver. More specifically, in the system structure with dual receivers, a switch can be implemented to share an element that performs a specific identical function. Here, impedance matching and calibration functions for performance degradation due to a switch may be added through a separate feedback circuit for each DFE or switch. More specifically, the receiver structure of the base station may be implemented with one or a combination of the following structures.

[Structure 3-1]

The dual receivers may share an antenna being a passive element. Here, a switch 2105 may be connected to either A or B depending on wake-up signal reception or synchronization and packet transmission/reception in the dual receivers. When connected to B, the base station may perform operations to receive a wake-up signal. When connected to A, the base station may perform operations for synchronization, and packet transmission and reception. This allows for more efficient implementation of the base station's size due to the antenna.

[Structure 3-2]

The dual receivers may share a band pass filter (BPF) or a low pass filter (LPF). More specifically, in the case of a band pass filter or low pass filter, the dual receivers may be designed as an $N^{th}$-order filter using amplifiers to provide gain for signal strength. Here, depending on the performance requirements for wake-up signal reception or synchronization and packet transmission and reception, the switch may be connected from the middle of the $N^{th}$-order filter so as to operate using only $N^{th}$- or lower order filters (2106, 2109). For example, the switch may be connected to operate at least some filters of the $N^{th}$-order filter. For example, if designed as a $5^{th}$-order filter including the first to fifth filters, the switch may be connected between individual filters. For example, the switch may be connected between the first and second filters, between the second and third filters, between the third and fourth filters, between the fourth and fifth filters, and after the fifth filter. For example, if the switch is connected between the third and fourth filters, the first to third filters may be operated. This allows the base station to receive wake-up signals, satisfy requirements, and process synchronization and packets while using less energy in the filter.

[Structure 3-3]

The dual receivers may share a low-noise amplifier (LNA). For example, for an RU (or massive MIMO unit (MMU)) with 8 or 64 LNAs to support 8Tx8Rx or 64Tx64Rx, the receiver that receives only a wake-up signal may operate by sharing a smaller number of LNAs for efficient energy savings (2107). For example, if the LNA is composed of eight RUs, RUs #5 through #8 may be operated. This allows the base station to save costs and improve energy efficiency by sharing LNAs.

[Structure 3-4]

The dual receivers may share a mixer and local oscillator (LO). When the wake-up signal may be used for the same carrier frequency or down-conversion or direct conversion via the LO of the receiver used for synchronization and packet processing, the mixer and LO may be shared via the switch (2108). On the other hand, if the wake-up signal is transmitted over a lower carrier frequency or is non-coherent (asynchronous), a lower-spec LO such as an LO that supports only low frequencies or has low resolution may be used for down-conversion and direct-conversion. This reduces power consumption in the mixer and LO. For low-spec LOs, the low-spec LO may be applied regardless of the wake-up signal to save energy.

[Structure 3-5]

The dual receivers may share an ADC. The analog wake-up signal may be converted into a digital signal by utilizing the ADC of the receiver for synchronization and packet processing. This enables implementation of a receiver that receives a wake-up signal without separate ADC implementation (2110). Thereby, it is possible to reduce the cost and size of the base station.

As with the above structures, the receiver for receiving a wake-up signal can be implemented by reusing elements used for synchronization and packet processing. That is, as described above, the WUR can be implemented by sharing some elements of the NR MR receiver. The WUR may include some elements shared with the NR MR.

Here, for non-shared components (e.g., components for the WUR applied to the non-shared portion of the MR), a BFP, LNA, LO, mixer, LPF, and ADC redesigned solely for the purpose of receiving a wake-up signal may be utilized. Thereafter, a WUS controller for WUS detection may be included in the RU, depending on the design (e.g., sequence or format) of the wake-up signal. The WUS controller may identify the WUS sequence or ID through WUS correlation and then determine whether a WUS is detected using a comparator based on the correlation. In this case, the WUR 2104 may only receive a WUS and support detection and measurement. That is, the WUR 2104 may perform the role of receiving and detecting a WUS. Here, in the case of the RU in structure 3, the RU itself may determine activation by checking the status of a received WUS without a connection with the DU. In addition, more specifically, separate AGC functions may be implemented in the WUS controller to process inputs received through different receivers. The digital processing functions implemented through the FPGA or SoC described above may follow the detailed description of the second embodiment below. Further, the structure described above does not limit the scope of the disclosure to one embodiment, and may be designed as a new receiver (e.g., envelope detector) depending on the wake-up signal.

According to an embodiment, a novel RU structure including a WUR is proposed through the above structures. Through the above structures, the RU itself or the DU may determine whether to activate the RU according to WUS reception and measurement of WUS signal strength and quality. In the above structure, the information shared between the RU and the DU may include synchronization information, activation/deactivation signals (start-up signaling), WUS ID, WUS measurement (e.g., RSRP, RSRQ, SINR), and WUS threshold information. Synchronization information, activation/deactivation signals, WUS ID, WUS measurement (e.g., RSRP, RSRQ, SINR), and WUS threshold information may be transmitted and received between the RU and the DU. The WUS threshold information may correspond to WUS measurement and may correspond to RSRP, RSRQ, and/or SINR. Based on the above configuration information, the RU may measure a WUS and compare it with the set WUS threshold to determine WUS detection and WUS reporting, and finally determine overall RU activation. For example, the RU may compare the WUS measurement result with the WUS threshold, and determine WUS detection and WUS reporting if the WUS measurement result is greater than or equal to (or exceeds) the WUS threshold. Upon receiving an activation signal (start-up signaling), the RU may transmit an RS to the UE. Additionally, the reception function may be determined by the switch depending upon WUR operation or MR operation. In addition, the delay due to switching using the above switch and calibration after switching may be determined based on the requirements and UE capabilities. Further, the dual receiver framework of the above structures may be applied to devices with a transceiver configuration without being limited to base stations. For example, the UE may expect an energy-saving effect through the dual receiver framework.

<Second Embodiment>

The second embodiment of the disclosure provides a structure of the digital front end (DFE). The second embodiment of the disclosure provides an AGC implementation method corresponding to a new RU with dual receivers including a WUR.

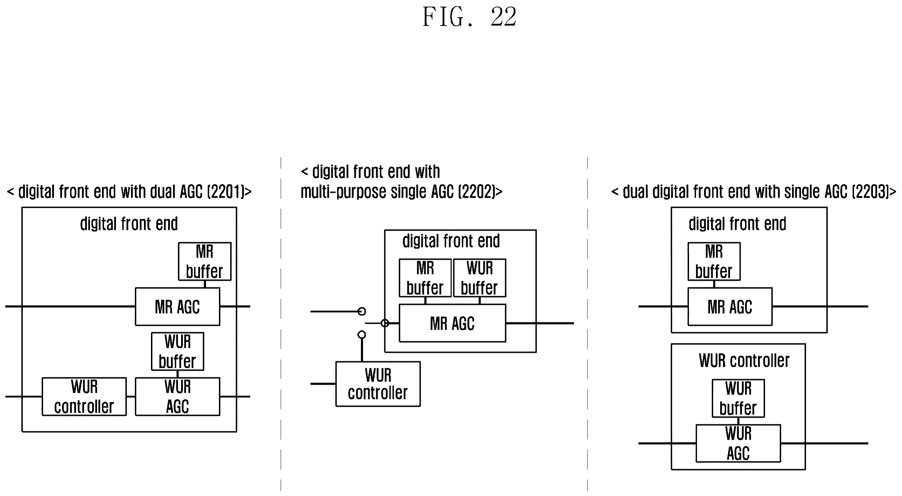

FIG. 22 is a diagram illustrating a new structure of the digital front end in a wireless communication system according to an embodiment of the disclosure.

With reference to FIG. 22, the RU with a dual receiver structure may implement an AGC function for each receiver's AGC settings in the digital front end.

[Structure 1 (2201)]

Structure 1 according to an embodiment may handle the AGC function for gain control of the MR receiver for synchronization and packet processing, and the AGC function of the WUR for wake-up signal reception in a single digital front end (DFE).

More specifically, when the MR or WUR is separately operating, AGC settings are made through separate AGC circuits, which can be connected to the individual MR and WUR signal paths. The MR AGC and the WUR AGC (and WUR controller) may be connected to each signal path. Additionally, a buffer may be included to hold each previous AGC setting. The MR AGC may be connected to or may include an MR buffer. The WUR AGC may be connected to or may include a WUR buffer. In this case, the RU may support not only MR or WUR single mode but also MR and WUR simultaneous mode. This allows the RU to always operate the MR and the WUR independently, supporting mobility through the WUR and supporting synchronization and packet processing through the MR. The output having passed through the AGC may then be delivered to CPRI or eCPRI.

[Structure 2 (2202)]

Structure 2 according to an embodiment provides a circuit that supports AGC settings for the MR and WUR using a digital front end (DFE) with single AGC. If the RU operates with switching between the MR and WUR according to the mode, the RU may process reception signals of the MR and WUR using a single DFE. Here, the receiver's AGC setting may be made through a single AGC circuit of the single DFE, and depending on the switching between MR and WUR modes, the recording values for the AGC setting may be received and operated respectively through the MR buffer and the WUR buffer. In this case, the input signal may be determined through a switching function before the AGC depending on the mode switching between the MR and WUR. Depending on the switching, if the DFE is connected to the WUR controller, the WUR may be operated, and if the WUR is not connected, the MR may be operated. This delay for switching may be determined by the requirements.

[Structure 3 (2203)]

Structure 3 according to an embodiment provides a circuit for AGC settings of the RU having multiple MR and WUR digital front ends (DFEs). More specifically, the RU with dual receivers may include independent DFEs for the MR and WUR. For example, the MR DFE may be implemented with an FPGA, and the WUR DFE may be implemented with an integrated circuit (IC) chip. These FPGA and IC may be connected and operated. That is, the MR DFE and the WUR DFE may be connected and operated. Alternatively, both the MR and the WUR may be implemented with either separate FPGAs or separate SoCs. In this case, AGC settings may be operated on each chip.

Using the above DFE configurations, the circuit for AGC settings of the dual receivers may be designed. The reception signal may then be transferred as a digital signal to the baseband modem.

<Third Embodiment>

The third embodiment of the disclosure may be directed to the structure of a communication system for receiving a WUS. As described above, a description will be given of a receiver structure of the base station for receiving a WUS to save energy at the base station according to an embodiment.

More specifically, an embodiment proposes a novel base station structure in consideration of the radio frequency front-end (RF-FE) portion of a base station (e.g., including PA/LNA, duplexer, and filter) and the digital front-end (DFE) portion (e.g., including functions such as automatic gain control (AGC), DPD, and CFR). An embodiment proposes a transceiver structure utilizing different antennas for cases where the operating frequencies of the WUR and the MR are different (or, operating frequencies of the WUR and the MR are the same or different). For example, the MR and the WUR may operate in the same or different frequency bands. Through this, a base station (i.e., radio unit (RU), RU + distributed unit (DU) (RU and DU), or TRP) including a receiver for WUS reception can be designed.

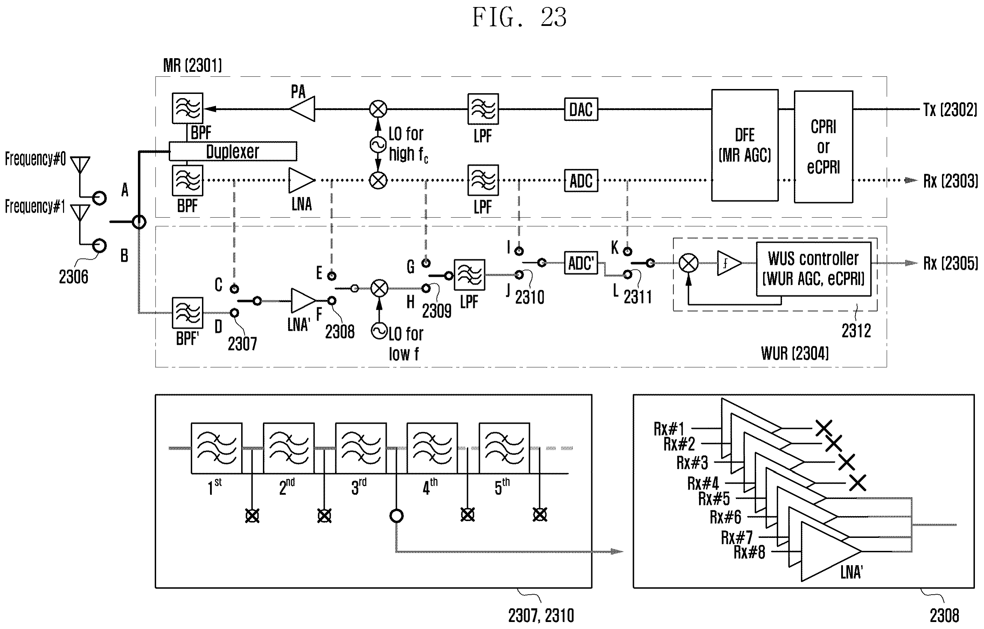

FIG. 23 is a diagram illustrating a new structure of the wireless communication system according to an embodiment of the disclosure. FIG. 23 may be understood as, but not limited to, an example of the structure of a base station or the structure of the RU of a base station according to an embodiment of the disclosure.

With reference to FIG. 23, the base station may include a transmitter (Tx) 2302 and a receiver (Rx) 2303 capable of transmitting and receiving channels or signals for synchronization and packet transmission (2301). Additionally, a receiver 2305 for a specific wake-up signal to activate or deactivate the base station may be included (2304). In the Tx 2302, the signal path may pass through CPRI or eCPRI block, DFE (MR AGC), DAC (digital analog converter), LPF, LO, PA, BPF, and duplexer to reach the antenna. In the Rx 2303, the signal path may pass through antenna, duplexer, BPF, LNA, LO, LPF, ADC, DFE, and CPRI or eCPRI block. In the Rx 2305, the signal path may pass through antenna, BPF, LNA, LO, LPF, ADC, DFE, and WUS controller (WUR AGC, eCPRI). Additionally, at least some of the elements shown in the MR 2301 and the elements shown in the WUR 2304 may be shared elements rather than separate elements. In addition, there may be multiple antennas (e.g., antenna corresponding to Frequency#0, antenna corresponding to Frequency#1), and switching between antennas may be performed through a switch.

FIG. 23 provides a block diagram illustrating exemplary functions of a transceiver. More specifically, in the system structure with dual receivers, a switch can be implemented to share an element that performs a specific identical function. Here, impedance matching and calibration functions for performance degradation due to a switch may be added through a separate feedback circuit for each DFE or switch. More specifically, the receiver structure of the base station may be implemented with one or a combination of the following structures.

[Structure 3-1]

The dual receivers may share or switch antennas, which are passive elements. Here, the dual receivers may perform antenna selection based on the operating frequency of the WUR (2306). Additionally, a switch may be connected to either A or B so as to switch the frequency antenna depending on the switching between MR and WUR modes. When connected to B, the base station may perform operations for receiving wake-up signals in a low frequency band. When connected to A, the base station may perform operations for synchronization and packet transmission and reception in a high frequency band. This enables application of switching depending on the mode and frequency.

[Structure 3-2]

The dual receivers may share a band pass filter (BPF) or a low pass filter (LPF). More specifically, in the case of a band pass filter or low pass filter, an $N^{th}$-order filter may be designed by using amplifiers to provide gain for signal strength. Here, depending on the performance requirements for wake-up signal reception or synchronization and packet transmission and reception, the switch may be connected from the middle of the $N^{th}$-order filter so as to operate using only $N^{th}$- or lower order filters (2307, 2310). This allows the base station to receive wake-up signals, satisfy requirements, and process synchronization and packets while using less energy in the filter.

[Structure 3-3]

The dual receivers may share a low-noise amplifier (LNA). For example, for an RU (or massive MIMO unit (MMU)) with 8 or 64 LNAs to support 8Tx8Rx or 64Tx64Rx, the receiver that receives only a wake-up signal may operate by sharing a smaller number of LNAs for efficient energy savings (2308). This allows the base station to save costs and improve energy efficiency by sharing LNAs.

[Structure 3-4]

The dual receivers may share a mixer and local oscillator (LO). When the wake-up signal may be used for the same carrier frequency or down-conversion or direct conversion via the LO of the receiver used for synchronization and packet processing, the mixer and LO may be shared via the switch (2309). On the other hand, if the wake-up signal is transmitted over a lower carrier frequency or is non-coherent (asynchronous), a lower-spec LO such as an LO that supports only low frequencies or has low resolution may be used for down-conversion and direct-conversion. This reduces power consumption in the mixer and LO. For low-spec LOs, the low-spec LO may be applied regardless of the wake-up signal to save energy.

[Structure 3-5]

The dual receivers may share an ADC. The analog wake-up signal may be converted into a digital signal by utilizing the ADC of the receiver for synchronization and packet processing. This enables implementation of a receiver that receives a wake-up signal without separate ADC implementation (2311). Thereby, it is possible to reduce the cost and size of the base station.

As with the above structures, the receiver for receiving a wake-up signal can be implemented by reusing elements used for synchronization and packet processing. That is, as described above, the WUR can be implemented by sharing some elements of the NR MR receiver. The WUR may include some elements shared with the NR MR.

Here, for non-shared components (e.g., components for the WUR applied to the non-shared portion of the MR), a BFP, LNA, LO, mixer, LPF, and ADC redesigned solely for the purpose of receiving a wake-up signal may be utilized. Thereafter, a WUS controller for WUS detection may be included in the RU, depending on the design (e.g., sequence or format) of the wake-up signal. The WUS controller may identify the WUS sequence or ID through WUS correlation and then determine whether a WUS is detected using a comparator based on the correlation. In this case, the part of the RU for connection with the DU may be designed as in the structure of the first and second embodiments described above. Further, the structure described above does not limit the scope of the disclosure to one embodiment, and may be designed as a new receiver (e.g., envelope detector) depending on the wake-up signal.

In addition, the dual receiver structure according to an embodiment may be applied to devices with a transceiver configuration without being limited to base stations. For example, the UE may expect an energy-saving effect through the dual receiver structure. That is, the dual receiver structure according to an embodiment can be applied to any device having a transceiver configuration.

In addition, FIG. 23 illustrates an example of a structure in which one antenna is replaced with multiple antennas as a modification in the new structure in a wireless communication system according to an embodiment of the disclosure described with reference to FIG. 19, but multiple antennas and switching between multiple antennas can also be applied to the new structure in a wireless communication system according to an embodiment of the disclosure described with reference to FIG. 20 and/or FIG. 21.

<Fourth Embodiment>

According to the fourth embodiment of the disclosure, a cell selection procedure for energy saving at the base station in a communication system can be provided. Next, a description will be given of flowcharts and block diagrams of the UE and base station for cell selection and WUS transmission for energy saving at the base station in a communication system.

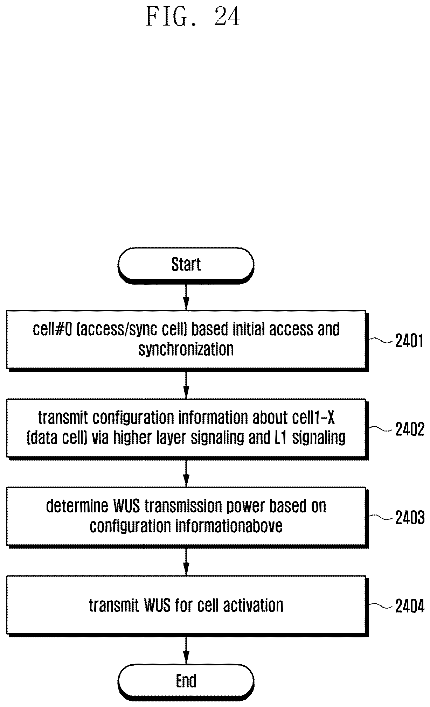

FIG. 24 is a flowchart illustrating UE operation for applying a cell selection/activation method in a wireless communication system according to an embodiment of the disclosure. Various modifications may be made to the method illustrated in the flowchart of FIG. 24. For example, although depicted as a series of steps, various steps in each drawing may overlap, occur in parallel, occur in different orders, or occur multiple times. In other instances, steps may be skipped or replaced with other steps.

With reference to FIG. 24, the UE may perform cell activation through the WUS.

At operation 2401 according to an embodiment, the UE may perform initial access and/or synchronization based on the type 1 cell (e.g., cell#0 or access/sync cell).

At operation 2402 according to an embodiment, the UE may receive configuration information about cell type 2 (e.g., cell#1-X or data cell) from the type 1 cell via higher layer signaling and/or L1 signaling. For example, this configuration information may include WUS configuration information.

At operation 2403 according to an embodiment, the UE may select/determine the WUS transmission power for WUS transmission based on the above configuration information.

At operation 2404 according to an embodiment, the UE may transmit a configured WUS to the selected cell type 2 base station. Additionally, the UE may monitor WUS feedback during a WUS response window.

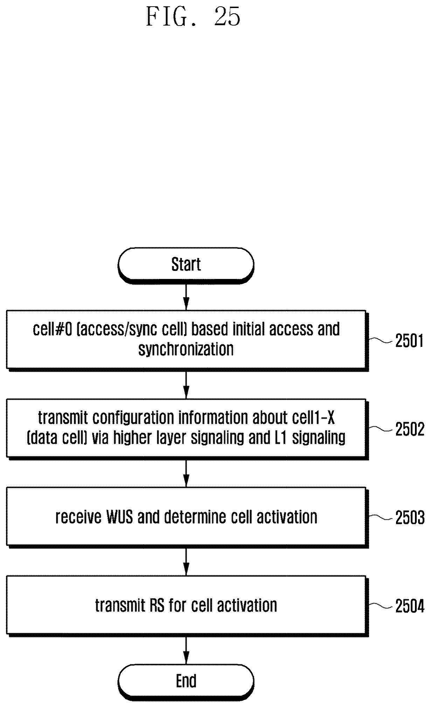

FIG. 25 is a flowchart illustrating base station operation for applying a cell selection/activation method in a wireless communication system according to an embodiment of the disclosure. Various modifications may be made to the method illustrated in the flowchart of FIG. 25. For example, although depicted as a series of steps, various steps in each drawing may overlap, occur in parallel, occur in different orders, or occur multiple times. In other instances, steps may be skipped or replaced with other steps.

With reference to FIG. 25, the base station may perform cell activation through the WUS.

At operation 2501 according to an embodiment, the base station may transmit, to the UE, an RS for initial access and synchronization based on the type 1 cell (e.g., cell#0 or access/sync cell), and/or perform initial access.

At operation 2502 according to an embodiment, the base station may transmit configuration information about a type 2 cell (e.g., cell#1-X or data cell) to the UE based on the type 1 cell through higher layer signaling and/or L1 signaling. This configuration information may include configuration information for determining the WUS transmission power.

At operation 2503 according to an embodiment, the base station may receive a WUS transmitted from the UE and determine whether to perform activation through WUS measurement. For example, activation may be determined for a type 2 cell.

Upon receiving the WUS, at operation 2504 according to an embodiment, the base station may transmit an RS for access after activation (e.g., RS for type 2 cell activation) during a configured WUS response window.

FIG. 25 illustrates an example in which one base station operates both type 1 and type 2 cells, but an embodiment is not limited thereto. The type 1 cell and the type 2 cell may be operated respectively by separate base stations. In this case, the base station operation based on the type 1 cell in the above description may be understood as the operation of a type 1 cell base station, and the base station operation based on the type 2 cell may be understood as the operation of a type 2 cell base station.

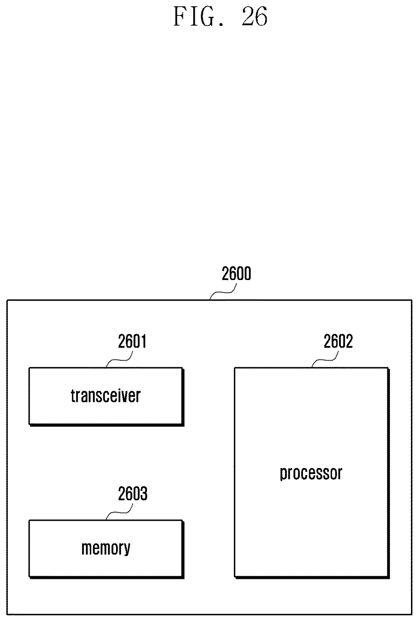

FIG. 26 is a block diagram of a UE according to an embodiment of the disclosure.

With reference to FIG. 26, the UE 2600 may include a transceiver 2601, a controller (e.g., processor) 2602, and a storage (e.g., memory) 2603. The transceiver 2601, controller 2602, and storage 2603 of the UE 2600 may operate according to at least one or a combination of the methods corresponding to the embodiments described above. However, the components of the UE 2600 are not limited to those illustrated. According to other embodiments, the UE 2600 may include more or fewer components than the aforementioned components. Further, in specific cases, the transceiver 2601, controller 2602, and storage 2603 may be implemented in the form of a single chip.

The transceiver 2601 may be composed of a transmitter and a receiver according to an embodiment. The transceiver 2601 may transmit and receive signals to and from a base station. The signal may include control information and data. The transceiver 2601 may include an RF transmitter that up-converts and amplifies the frequency of a signal to be transmitted, and an RF receiver that low-noise amplifies and down-converts the frequency of a received signal. The transceiver 2601 may receive a signal through a radio channel and output it to the controller 2602, and may transmit a signal output from the controller 2602 through a radio channel.

The controller 2602 may control a series of procedures in which the UE 2600 may operate according to the embodiments of the disclosure described above. For example, the controller 2602 may perform or control operations of the UE to carry out at least one or a combination of the methods according to embodiments of the disclosure. The controller 2602 may include at least one processor. For example, the controller 2602 may include a communication processor (CP) that performs control for communication, and an application processor (AP) that controls higher layers (e.g., application).

The storage 2603 may store control information (e.g., information related to channel estimation using DMRSs transmitted on the PUSCH included in a signal obtained by the UE 2600) or data, and may have a region for storing data required for the control of the controller 2602 and data generated during the control of the controller 2602.

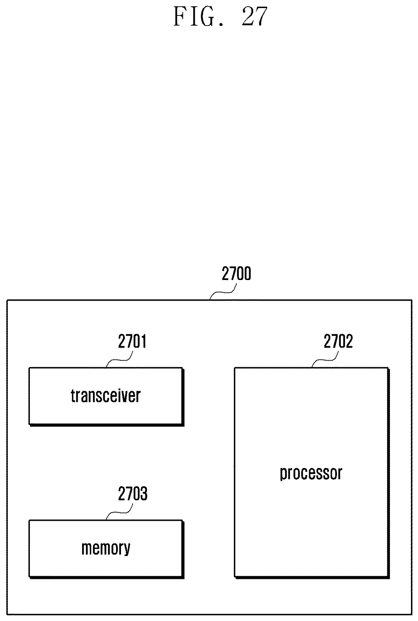

FIG. 27 is a block diagram of a base station according to an embodiment of the disclosure.

With reference to FIG. 27, the base station 2700 may include a transceiver 2701, a controller (e.g., processor) 2702, and a storage (e.g., memory) 2703. The transceiver 2701, controller 2702, and storage 2703 of the base station 2700 may operate according to at least one or a combination of the methods corresponding to the embodiments described above. However, the components of the base station 2700 are not limited to those illustrated. According to other embodiments, the base station 2700 may include more or fewer components than the aforementioned components. Further, in specific cases, the transceiver 2701, controller 2702, and storage 2703 may be implemented in the form of a single chip.

The transceiver 2701 may be composed of a transmitter and a receiver according to an embodiment. The transceiver 2701 may transmit and receive signals to and from a UE. The signal may include control information and data. The transceiver 2701 may include an RF transmitter that up-converts and amplifies the frequency of a signal to be transmitted, and an RF receiver that low-noise amplifies and down-converts the frequency of a received signal. The transceiver 2701 may receive a signal through a radio channel and output it to the controller 2702, and may transmit a signal output from the controller 2702 through a radio channel. For example, the transceiver or RF transceiver of a base station may be configured to include the RU of a base station according to an embodiment of the disclosure. For more details, reference may be made to the description of the disclosure.

The controller 2702 may control a series of procedures in which the base station 2700 may operate according to the embodiments of the disclosure described above. For example, the controller 2702 may perform or control operations of the base station to carry out at least one or a combination of the methods according to embodiments of the disclosure. The controller 2702 may include at least one processor. For example, the controller 2702 may include a communication processor (CP) that performs control for communication, and an application processor (AP) that controls higher layers (e.g., application).

The storage 2703 may store control information (e.g., information related to channel estimation generated using DMRSs transmitted on the PUSCH determined by the base station 2700), data, control information or data received from a UE, and may have a region for storing data required for the control of the controller 2702 and data generated during the control of the controller 2702.

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the equipment that carries out an embodiment of the disclosure through an external port. In addition, a separate storage device on a communication network may access the equipment that carries out an embodiment of the disclosure.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, the embodiments of the disclosure disclosed in this specification and drawings are specific examples to facilitate easy explanation of the technical contents of the disclosure and aid understanding thereof, and are not intended to limit the scope of the disclosure. In other words, it will be apparent to those skilled in the art that other variations based on the technical concepts of the disclosure can be carried out. Further, the above-described embodiments can be operated in combination as needed.

Meanwhile, the order of description in a drawing explaining a method of the disclosure does not necessarily correspond to the order of execution, and steps may be changed in order or executed in parallel.

Or, in a drawing illustrating a method of the disclosure, some components may be omitted and only some components may be included within a scope that does not harm the subject matter of the disclosure.

In addition, the method of the disclosure may be implemented by combining some or all of the contents included in each embodiment within a scope that does not harm the subject matter of the disclosure.

Meanwhile, the embodiments of the disclosure disclosed in this specification and drawings are specific examples to facilitate easy explanation of the technical contents of the disclosure and aid understanding thereof, and are not intended to limit the scope of the disclosure. In other words, it will be apparent to those skilled in the art that other variations based on the technical concepts of the disclosure can be carried out. Further, the above-described embodiments can be operated in combination as needed. For example, all embodiments of the disclosure may be operated partially in combination with each other.

**Claims**

1. A method performed by a base station in a communication system, the method comprising:

   transmitting, through a first cell, information associated with one or more second cells;
   receiving, through the one or more second cells, one or more uplink (UL) wake-up signals (WUS);
   determining activation of at least one second cell among the one or more second cells; and
   performing communication through the at least one activated second cell,
   wherein activation of at least one second cell is performed by a distributed unit (DU) of the base station based on information shared between a radio unit (RU) of the base station and the DU of the base station,
   wherein the shared information includes information on measurement result for the one or more UL WUSs transferred from the RU of the base station to the DU of the base station.

2. The method of claim 1, wherein:

   the shared information includes information on a threshold associated with the measurement result for the one or more UL WUSs; and
   transfer of the information on the measurement result for the one or more UL WUSs from the RU of the base station to the DU of the base station is based on the information on the threshold associated with the measurement result for the one or more UL WUSs.

3. The method of claim 1, wherein the information on the measurement result for the one or more UL WUSs is information on reference signal received power (RSRP), signal to interference noise ratio (SINR), or reference signal received quality (RSRQ) of the one or more UL WUSs measured by the RU of the base station.

4. The method of claim 1, wherein the shared information further includes at least one of one or more WUS identifiers (WUS IDs) corresponding to the one or more UL WUSs or synchronization information between the RU of the base station and the DU of the base station.

5. The method of claim 1, wherein initial access is performed through the first cell, and the one or more second cells are configured for data communication.

6. The method of claim 1, wherein:

the one or more UL WUSs are received using a wake-up receiver (WUR) included in the RU of the base station, and the WUR shares some of plural components included in a main radio (MR) of the base station; and
the components shared between the MR and the WUR include a low noise amplifier (LNA), and the LNA is connected to a switch for switching between the MR and the WUR.

7. A base station in a communication system, comprising:

a transceiver; and
a processor coupled with the transceiver,
wherein the processor is configured to:

transmit, through a first cell, information associated with one or more second cells;
receive, through the one or more second cells, one or more uplink (UL) wake-up signals (WUS);
determine activation of at least one second cell among the one or more second cells; and
perform communication through the at least one activated second cell,

wherein activation of at least one second cell is performed by a distributed unit (DU) of the base station based on information shared between a radio unit (RU) of the base station and the DU of the base station,
wherein the shared information includes information on measurement result for the one or more UL WUSs transferred from the RU of the base station to the DU of the base station.

8. The base station of claim 7, wherein:

the shared information includes information on a threshold associated with the measurement result for the one or more UL WUSs; and
transfer of the information on the measurement result for the one or more UL WUSs from the RU of the base station to the DU of the base station is based on information on the threshold associated with the measurement result for the one or more UL WUSs.

9. The base station of claim 7, wherein the information on the measurement result for the one or more UL WUSs is information on reference signal received power (RSRP), signal to interference noise ratio (SINR), or reference signal received quality (RSRQ) of the one or more UL WUSs measured by the RU of the base station.

10. The base station of claim 7, wherein the shared information further includes at least one of one or more WUS identifiers (WUS IDs) corresponding to the one or more UL WUSs or synchronization information between the RU of the base station and the DU of the base station.

11. The base station of claim 7, wherein initial access is performed through the first cell, and the one or more second cells are configured for data communication.

12. The base station of claim 7, wherein:

the one or more UL WUSs are received using a wake-up receiver (WUR) included in the RU of the base station, and the WUR shares some of plural components included in a main radio (MR) of the base station; and
the components shared between the MR and the WUR include a low noise amplifier (LNA), and the LNA is connected to a switch for switching between the MR and the WUR.

13. A method performed by a terminal in a communication system, the method comprising:

receiving, from a base station through a first cell, information associated with one or more second cells;
transmitting, to the base station through the one or more second cells, one or more uplink (UL) wake-up signals (WUS) ; and
performing communication with the base station through at least one activated second cell among the one or more second cells,

wherein the at least one activated second cell is based on information shared between a radio unit (RU) of the base station and a distributed unit (DU) of the base station,

wherein the shared information includes information on measurement result for the one or more UL WUSs transferred from the RU of the base station to the DU of the base station.

14. The method of claim 13, wherein initial access is performed through the first cell, and the one or more second cells are configured for data communication.

15. A terminal in a communication system, comprising:

a transceiver; and
a processor coupled with the transceiver,
wherein the processor is configured to:

receive, from a base station through a first cell, information associated with one or more second cells;
transmit, through the one or more second cells, one or more uplink (UL) wake-up signals (WUS) to the base station; and
perform communication with the base station through at least one activated second cell among the one or more second cells,

wherein the at least one activated second cell is based on information shared between a radio unit (RU) of the base station and a distributed unit (DU) of the base station,

wherein the shared information includes information on measurement result for the one or more UL WUSs transferred from the RU of the base station to the DU of the base station.

# FIG. 1

One subframe (110)

$N_{symb}^{subframe,\mu}$ OFDM symbols

1 OFDM symbol (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

# FIG. 2

# FIG. 3

# FIG. 4

1 OFDM symbol
(404)

(410)

6RB
(407)

12RB
(405)

6RB
(408)

24RB
(406)

PBCH
(402)

PSS
(401)

PBCH
(402)

SSS
(403)

PBCH
(402)

PBCH
(402)

SS block
(400)

EP 4 727 221 A1

# FIG. 5

# FIG. 6

# FIG. 7

# FIG. 8

[801]

**1 symbol pattern**

| | |
|---|---|
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |

[802]

**2 symbol pattern**

| | |
|---|---|
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |

[803]

**1 symbol pattern**

| | |
|---|---|
| 4/5 | CDM group2 |
| 4/5 | |
| 2/3 | CDM group1 |
| 2/3 | |
| 0/1 | CDM group0 |
| 0/1 | |
| 4/5 | CDM group2 |
| 4/5 | |
| 2/3 | CDM group1 |
| 2/3 | |
| 0/1 | CDM group0 |
| 0/1 | |

[804]

**2 symbol pattern**

| | |
|---|---|
| 4/5/10/11 | CDM group2 |
| 4/5/10/11 | |
| 2/3/8/9 | CDM group1 |
| 2/3/8/9 | |
| 0/1/6/7 | CDM group0 |
| 0/1/6/7 | |
| 4/5/10/11 | CDM group2 |
| 4/5/10/11 | |
| 2/3/8/9 | CDM group1 |
| 2/3/8/9 | |
| 0/1/6/7 | CDM group0 |
| 0/1/6/7 | |

FIG. 9

slot 0  slot 1  slot 2  slot 3

Independent DMRS
channel estimation

FIG. 10

Reconfiguration of ssb-PositionsInBurst bitmap (1001):

E.g. ssb-PositionsInBurst Bitmap: [11110000] (1002)

With bitmap [1010xxxx] (1004)

# FIG. 11

Mode 1: Normal mode (1101)

Mode 2: NWES mode (1102)

BWP adaptation

BWP alignment for NWES (1103)

EP 4 727 221 A1

# FIG. 12

**DRX alignment for NWES (1201)**

# FIG. 13

Discontinuous transmission (DTx) [1301]

# FIG. 14

Concept of gNB wake-up signal (1401)

EP 4 727 221 A1

# FIG. 15

**TxRU adaptation for NWES (1501)**

Normal mode with 64 TxRUs

NWES mode with 32 TxRUs

TxRU
Adaptation

gNB

gNB

**Types of SD adaptation for NWES (1502)**

CSI-RS#0

CSI-RS#0

CSI-RS#1

CSI-RS#1

- Antenna structures of CSI-RS#0 and CSI-RS#1 with nrofports = {4, 2}

< Type1 SD adaptation >
(1503)

CSI-RS#0

CSI-RS#0

CSI-RS#1

CSI-RS#1

- Antenna structures of CSI-RS#0 and CSI-RS#1 with nrofports = {2, 2}

< Type2 SD adaptation >
(1504)

EP 4 727 221 A1

# FIG. 16

concept of new cells for network energy savings (1601)

FIG. 17

# FIG. 18A

< UE based cell selection & activation (1801)>

# FIG. 18B

< Cell-based cell selection and activation [1802]>

FIG. 19

FIG. 20

# FIG. 21

EP 4 727 221 A1

# FIG. 22

< digital front end with dual AGC (2201)>

digital front end

MR
buffer

MR AGC

WUR
buffer

WUR
controller

WUR
AGC

< digital front end with
multi-purpose single AGC (2202)>

digital front end

MR
buffer

WUR
buffer

MR AGC

WUR
controller

< dual digital front end with single AGC (2203)>

digital front end

MR
buffer

MR AGC

WUR controller

WUR
buffer

WUR
AGC

# FIG. 23

MR (2301)

PA

BPF

Duplexer

Frequency#0

Frequency#1

A

B

2306

BPF

LNA

LO for
high f_c

LPF

LPF

DAC

ADC

DFE
(MR AGC)

CPRI
or
eCPRI

Tx (2302)

Rx (2303)

C

D

BPF'

2307

E

F

LNA'

2308

G

H

2309

LO for
low f

LPF

I

J

2310

ADC'

K

L

2311

WUS controller
(WUR AGC, eCPRI)

2312

Rx (2305)

WUR (2304)

1st  2nd  3rd  4th  5th

2307, 2310

Rx#1
Rx#2
Rx#3
Rx#4
Rx#5
Rx#6
Rx#7
Rx#8

LNA'

2308

EP 4 727 221 A1

# FIG. 24

```
            ┌─────────┐
            │  Start  │
            └─────────┘
                 │
                 ▼
  ┌──────────────────────────────────────┐
  │ cell#0 (access/sync cell) based       │
  │ initial access and synchronization    │── 2401
  └──────────────────────────────────────┘
                 │
                 ▼
  ┌──────────────────────────────────────┐
  │ transmit configuration information    │
  │ about cell1-X (data cell) via higher  │── 2402
  │ layer signaling and L1 signaling      │
  └──────────────────────────────────────┘
                 │
                 ▼
  ┌──────────────────────────────────────┐
  │ determine WUS transmission power      │
  │ based on configuration                │── 2403
  │ informationabove                      │
  └──────────────────────────────────────┘
                 │
                 ▼
  ┌──────────────────────────────────────┐
  │ transmit WUS for cell activation      │── 2404
  └──────────────────────────────────────┘
                 │
                 ▼
            ┌─────────┐
            │   End   │
            └─────────┘
```

# FIG. 25

Start

cell#0 (access/sync cell) based initial access and synchronization — 2501

transmit configuration information about cell1-X (data cell) via higher layer signaling and L1 signaling — 2502

receive WUS and determine cell activation — 2503

transmit RS for cell activation — 2504

End

FIG. 26

2600

2601

transceiver

2602

processor

2603

memory

FIG. 27

2700

2701

transceiver

2702

processor

2703

memory

## INTERNATIONAL SEARCH REPORT

| International application No. |
|---|
| **PCT/KR2024/010261** |

| A. | CLASSIFICATION OF SUBJECT MATTER |
|---|---|
| | **H04W 52/02**(2009.01)i; **H04W 56/00**(2009.01)i; **H04B 1/40**(2006.01)i; **H04B 1/16**(2006.01)i; **H04B 7/0413**(2017.01)i |

According to International Patent Classification (IPC) or to both national classification and IPC

| B. | FIELDS SEARCHED |
|---|---|

Minimum documentation searched (classification system followed by classification symbols)

H04W 52/02(2009.01); H04W 36/00(2009.01); H04W 84/04(2009.01); H04W 88/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UL WUS(uplink wake up signal), 셀(cell), 활성화(activation), RU(radio unit), DU(distributed unit), 측정 결과(measurement result)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | EP 2941063 B1 (NTT DOCOMO, INC.) 01 November 2017 (2017-11-01)<br>See paragraphs [0049] and [0053]; and figure 3. | 1-15 |
| Y | WO 2022-179914 A1 (SONY GROUP CORPORATION et al.) 01 September 2022 (2022-09-01)<br>See page 6, lines 14-26; page 15, lines 42-47; page 18, lines 21-44 and page 20, lines 1-35; and figure 2. | 1-15 |
| A | WO 2023-097343 A2 (FUTUREWEI TECHNOLOGIES, INC.) 01 June 2023 (2023-06-01)<br>See paragraphs [0060]-[0113]; and figures 4-8. | 1-15 |
| A | WO 2023-083501 A1 (NOKIA TECHNOLOGIES OY) 19 May 2023 (2023-05-19)<br>See page 39, line 19 - page 67, line 3; and figures 6-10. | 1-15 |
| A | MEDIATEK INC. NW Energy Savings Performance Evaluation. R1-2212259, 3GPP TSG RAN WG1 #111. Toulouse, France. 07 November 2022.<br>See section 2.1. | 1-15 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2024** | **18 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2024/010261** |

| Patent document cited in search report | | | Publication date (day/month/year) | Patent family member(s) | | | Publication date (day/month/year) |
|---|---|---|---|---|---|---|---|
| EP | 2941063 | B1 | 01 November 2017 | CN | 106465279 | A | 22 February 2017 |
| | | | | EP | 2941063 | A1 | 04 November 2015 |
| | | | | JP | 2016-523063 | A | 04 August 2016 |
| | | | | JP | 6106335 | B2 | 29 March 2017 |
| | | | | US | 2017-0048918 | A1 | 16 February 2017 |
| | | | | WO | 2015-165894 | A1 | 05 November 2015 |
| WO | 2022-179914 | A1 | 01 September 2022 | EP | 4298832 | A1 | 03 January 2024 |
| | | | | US | 2024-0107450 | A1 | 28 March 2024 |
| WO | 2023-097343 | A2 | 01 June 2023 | WO | 2023-097343 | A3 | 24 August 2023 |
| WO | 2023-083501 | A1 | 19 May 2023 | EP | 4420402 | A1 | 28 August 2024 |

Form PCT/ISA/210 (patent family annex) (July 2022)